# EUROPÄISCHE PATENTSCHRIFT

(11) **EP 1 472 616 B1**
(45) Veröffentlichungstag und Bekanntmachung des Hinweises auf die Patenterteilung: **09.11.2011**
(21) Anmeldenummer: 02791644.4
(22) Anmeldetag: 19.09.2002
(51) Int. Cl.: G06F 15/78, G06F 9/30

(54) **REKONFIGURIERBARE ELEMENTE**
RECONFIGURABLE ELEMENTS
ELEMENTS RECONFIGURABLES

(30) Priorität: 19.09.2001 DE 10146132; 28.09.2001 US 967497; 30.09.2001 WO PCT/EP01/11299; 08.10.2001 WO PCT/EP01/11593; 05.11.2001 DE 10154259; 14.12.2001 EP 01129923; 18.01.2002 EP 02001331; 15.02.2002 DE 10206653; 18.02.2002 DE 10206857; 18.02.2002 DE 10206856; 21.02.2002 DE 10207224; 21.02.2002 DE 10207226; 27.02.2002 DE 10208434; 27.02.2002 DE 10208435; 05.03.2002 WO PCT/EP02/02398; 05.03.2002 WO PCT/EP02/02402; 05.03.2002 WO PCT/EP02/02403; 21.03.2002 DE 10212622; 21.03.2002 DE 10212621; 02.05.2002 DE 10219681; 02.05.2002 EP 02009868; 12.06.2002 DE 10226186; 20.06.2002 DE 10227650; 07.08.2002 DE 10236271; 07.08.2002 DE 10236269; 07.08.2002 DE 10236272; 21.08.2002 DE 10238174; 21.08.2002 DE 10238173; 21.08.2002 DE 10238172; 27.08.2002 DE 10240022; 27.08.2002 DE 10240000; 03.09.2002 DE 2003278; 06.09.2002 DE 10241812; 09.09.2002 WO PCT/EP02/10084
(43) Veröffentlichungstag der Anmeldung: 03.11.2004
(73) Patentinhaber: Richter, Thomas, 04703 Bockelwitz (DE); Krass, Maren, 8044 Zürich (CH)
(72) Erfinder: VORBACH, Martin, 80689 München (DE)
(74) Vertreter: Pietruk, Claus Peter
(86) Internationale Anmeldenummer: PCT/EP2002/010572
(87) Internationale Veröffentlichungsnummer: WO 2003/036507

(56) Entgegenhaltungen:
- EP-A- 1 115 204
- WO-A-00/45282
- WO-A-00/77652
- WO-A-00/77652
- WO-A-99/00739
- WO-A-99/00739
- DE-A- 19 651 075
- DE-A- 19 651 075
- DE-A1- 19 807 872
- DE-A1- 19 822 776
- DE-A1- 19 926 538
- GB-A- 2 304 438
- US-A- 6 023 564
- US-A- 6 035 371
- US-A- 6 092 174
- US-A- 6 092 174
- US-A1- 2001 018 733
- BAUMGARTE V ET AL: "PACT XPP - A self-reconfigurable data processing" 1ST INTERNATIONAL CONFERENCE ON ENGINEERING OF RECONFIGURABLE SYSTEMS AND ALGORITHMS, [Online] Juni 2001 (2001-06), Seiten 64-70, XP002257061 las vegas Gefunden im Internet: URL:csdl.computer.org/comp/proceedings/ fccm/2002/1801/00/18010291.pdf> [gefunden am 2003-10-08]
- SCHMIDT U ET AL: "DATAWAVE: A SINGLE-CHIP MULTIPROCESSOR FOR VIDEO APPLICATIONS" IEEE MICRO, IEEE SERVICE CENTER, LOS ALAMITOS, CA, US, Bd. 11, Nr. 3, 1. Juni 1991 (1991-06-01), Seiten 22-25,88, XP000237234 ISSN: 0272-1732
- SALEFSKI B ET AL: "Re-configurable computing in wireless" PROCEEDINGS OF THE 38TH. ANNUAL DESIGN AUTOMATION CONFERENCE. (DAC). LAS VEGAS, NV, JUNE 18 - 22, 2001; [PROCEEDINGS OF THE DESIGN AUTOMATION CONFERENCE], NEW YORK, NY : ACM, US, Bd. CONF. 38, 18. Juni 2001 (2001-06-18), Seiten 178-183, XP010552379 ISBN: 978-1-58113-297-7
- YEUNG A K W ET AL: "A reconfigurable data-driven multiprocessor architecture for rapid prototyping of high throughput DSP algorithms" SYSTEM SCIENCES, 1993, PROCEEDING OF THE TWENTY-SIXTH HAWAII INTERNATI ONAL CONFERENCE ON WAILEA, HI, USA 5-8 JAN. 1993, LOS ALAMITOS, CA, USA,IEEE, US, Bd. i, 5. Januar 1993 (1993-01-05), Seiten 169-178, XP010640447 ISBN: 978-0-8186-3230-3
- ASARI K ET AL: "FeRAM circuit technology for system on a chip" EVOLVABLE HARDWARE, 1999. PROCEEDINGS OF THE FIRST NASA/DOD WORKSHOP O N PASADENA, CA, USA 19-21 JULY 1999, LOS ALAMITOS, CA, USA,IEEE COMPUT. SOC, US, 19. Juli 1999 (1999-07-19), Seiten 193-197, XP010346261 ISBN: 978-0-7695-0256-4
- LEE R B ED - IBRAHIM M K ET AL: "Multimedia extensions for general-purpose processors" SIGNAL PROCESSING SYSTEMS, 1997. SIPS 97 - DESIGN AND IMPLEMENTATION., 1997 IEEE WORKSHOP ON LEICESTER, UK 3-5 NOV. 1997, NEW YORK, NY, USA,IEEE, US, 3. November 1997 (1997-11-03), Seiten 9-23, XP010249762 ISBN: 978-0-7803-3806-7
- PETER PIRSCH ET AL: "VLSI Implementations of Image and Video Multimedia Processing Systems" IEEE TRANSACTIONS ON CIRCUITS AND SYSTEMS FOR VIDEO TECHNOLOGY, IEEE SERVICE CENTER, PISCATAWAY, NJ, US, Bd. 8, Nr. 7, 1. November 1998 (1998-11-01), XP011014520 ISSN: 1051-8215
- BAUMGARTE V ET AL: "PACT XPP - A self-reconfigurable data processing" 1ST INTERNATIONAL CONFERENCE ON ENGINEERING OF RECONFIGURABLE SYSTEMS AND ALGORITHMS, [Online] Juni 2001 (2001-06), Seiten 64-70, XP002257061 las vegas Gefunden im Internet: URL:csdl.computer.org/comp/proceedings/ fccm/2002/1801/00/18010291.pdf> [gefunden am 2003-10-08]

## Beschreibung

### Definitionen

Rekonfigurierbare Elemente werden abhängig von der auszuführenden Applikation unterschiedlich und applikationsentsprechend ausgestaltet.

Die Aufgabe der Erfindung besteht darin, Neues für die gewerbliche Anwendung bereitzustellen.

Die Lösung der Aufgabe wird unabhängig beansprucht. Bevorzugte Ausführungsformen finden sich in den Unteransprüchen.

Unter einer rekonfigurierbaren Architektur werden vorliegend Bausteine (VPU) mit konfigurierbarer Funktion und/oder Vernetzung verstanden, insbesondere integrierte Bausteine mit einer Mehrzahl von ein- oder mehrdimensional angeordneten arithmetischen und/oder logischen und/oder analogen und/oder speichernden und/oder intern/extern vernetzenden Baugruppen, die direkt oder durch ein Bussystem miteinander verbunden sind.

Zur Gattung dieser Bausteine zählen insbesondere systolische Arrays, neuronale Netze, Mehrprozessor Systeme, Prozessoren mit mehreren Rechenwerken und/oder logischen Zellen und/oder kommunikativen/peripheren Zellen (IO), Vernetzungs- und Netzwerkbausteine wie z.B. Crossbar-Schalter, ebenso wie bekannte Bausteine der Gattung FPGA, DPGA, Chameleon, XPUTER, etc. Hingewiesen wird insbesondere in diesem Zusammenhang auf die folgenden Schutzrechte und Anmeldungen desselben Anmelders:
P 44 16 881.0-53, DE 197 81 412.3, DE 197 81 483.2, DE 196 54 846.2-53,
DE 196 54 593.5-53, DE 197 04 044.6-53, DE 198 80 129.7, DE 198 61 088.2-53,
DE 199 80 312.9, PCT/DE 00/01869, DE 100 36 627.9-33, DE 100 28 397.7,
DE 101 10 530.4, DE 101 11 014.6, PCT/EP 00/10516, EP 01 102 674.7,
DE 196 51 075.9-53, DE 196 54 846.2-53, DE 196 54 593.5-53, DE 197 04 728.9,
DE 198 07 872.2, DE 101 39 170.6, DE 199 26 538.0, DE 101 42 904.5,
DE 102 06 653.1, DE 102 06 857.7, DE 100 28 397.7, DE 101 10 530.4,
DE 102 02 044.2, DE 101 29 237.6-53, DE 101 42 904.5, DE 100 50 442.6,
DE 101 35 210.7-53, EP 02 001 331.4, 60/317,876.

Die o.g. Architektur wird beispielhaft zur Verdeutlichung herangezogen und im folgenden VPU genannt. Die Architektur besteht aus beliebigen arithmetischen, logischen (auch Speicher) und/oder Speicherzellen und/oder Vernetzungszellen und/oder kommunikativen/peripheren (IO) Zellen (PAEs), die zu einer ein- oder mehrdimensionalen Matrix (PA) angeordnet sein können, wobei die Matrix unterschiedliche, beliebig ausgestaltete Zellen aufweisen kann; auch die Bussysteme werden dabei als Zellen verstanden. Der Matrix als ganzes oder Teilen davon zugeordnet ist eine Konfigurationseinheit (CT, Ladelogik), die die Vernetzung und Funktion des PA konfiguriert. Die CT kann z. B. als dedizierte Einheit gem. PACT05, PACT10, PACT17, ausgestaltet sein oder als Host-Mikroprozessor nach P 44 16 881.0-53, DE 102 06 856.9 dem PA zugeordnet bzw. mit oder durch solche realisiert sein.

### Stand der Technik

Unterschiedliche PAE-Strukturen sind nach dem Stand der Technik bekannt. Die gebräuchlichsten sind durch DE 196 51 075.9-53 , DE 100 50 442.6 , sowie Chameleon CS2112 definiert. Weiterhin soll auf die bekannten FPGA-Zellen verwiesen werden.

Aus dem universitären Umfeld sind Zellstrukturen wie die DPGAs, RawMachine (DeHuon), KressArrays (Kress, Uni Kaiserslautern), XPUTER (Hartenstein, Uni Kaiserslautern), sowie weitere Strukturen bekannt.

Es ist wünschenswert, bei hoher Rechenleistung derartiger Strukturen einen nur geringen Konfigurationsaufwand zu haben.

Die nachfolgend beschriebenen Erweiterungen, die für alle vorgenannten Strukturen nutzbar sind, verbessern die Nutzbarkeit der Architekturen und PAE-Strukturen in komplexen insbesondere auch stark sequentiellen und/oder wenig datenflussorientierten Anwendungen. Weiterhin wird der Anschluss an externe Einheiten (z.B. Speicher und/oder Peripherie) vereinfacht und homogenisiert.

### Indirekte Konfiguration

Es ist möglich, dass eine PAE (IPAE) oder eine Gruppe von PAEs mit einem Speicher (RRAM), vorzugsweise einer RAM-PAE gekoppelt wird. Die IPAE weist einen eigenen internen Sequenzer auf oder ist mit einem Sequenzer bzw. Microcontroller mit einem bevorzugt limitierten, d.h. mit einer vergleichsweise geringen Anzahl an unterschiedlichen möglichen Befehlen, ähnlich wie bei RISC-Prozessoren und/oder bevorzugt vollständigen Befehlssatz (vgl. ARC Microprocessor) gekoppelt. Mit anderen Worten wird bevorzugt ein RISC Prozessor mit einem möglichst kleinen Befehlssatz, der jedoch berechnungstheoretisch vollständig ist, verwendet. In einer Ausführungsvariante kann der Sequenzer auch durch eine Konfiguration einer oder mehrerer PAEs gebildet werden. Es kann der Sequenzer in seiner Funktion und seinem Ablaufverhalten konfigurierbar ausgestaltet sein (wie beispielsweise nach dem Stand der Technik bekannt, z.B. durch EPS448 von Altera (ALTERA Data Book 1993]). Der Sequenzer/Microcontroller kann auf Zustände (z.B. Statussignale, Ereignisse) in der IPAE und/oder auf Zustände (z.B. auch Trigger) anderer PAEs, die mit der IPAE verbunden sind (z.B. über ein Bussystem), reagieren. In einem Register der IPAE wird ein Pointer auf einen RRAM Speicherinhalt konfiguriert, z. B. kann der ProgramPointer Rpp kann während des Reset-Zyklus auf die Startadresse des Codes gesetzt werden. Ein Adressgenerator im Sequenzer liest den durch den Pointer referenzierten Speicherinhalt aus dem RRAM und schreibt diesen (oder einen Teil dessen) entweder in ein, beispielsweise durch den Speicherinhalt adressiertes, Konfigurationsregister einer adressierten PAE oder nutzt den Speicherinhalt als Instruktion für eine nächste Verarbeitung. Der Pointer wird durch den Adressgenerator entsprechend der üblichen Arbeitsweise von Adresspointern inkrementiert und/oder dekrementiert und/oder bei Sprungbefehlen (JUMP, CALL, RETURN) neu gesetzt. Insoweit stellt der Speicher RRAM einen Codespeicher und eventuell auch Datenspeicher für einen Sequenzer zur Verfügung und/oder wird als solcher genutzt. Der Sequenzer kann frei Code aus dem Speicher (RRAM) lesen und in einer bevorzugten Ausführung auch Daten aus dem Speicher lesen oder in den Speicher schreiben. Insofern stellt der Speicher auch einen Datenspeicher für den Sequenzer dar.

Der RRAM Speicherinhalt kann von einer übergeordneten Konfigurationseinheit (CT) geladen werden. Es kann der Speicherinhalt, ggf. auch von der IPAE selbständig, zusätzlich oder alternativ aus einem anderen (beispielsweise externen) Speicher geladen oder an diesen geschrieben werden, z.B. über einen Anschluss an ein Frontend.

Es kann der Speicher und/oder die IPAE einen direkten Anschluss (EXTBUS) an ein externes RAM und/oder externe IO besitzen; eventuell kann der EXTBUS über eine, ggf. dedizierte, Verbindung des PAE-Bussystems an eine Interface-Baugruppe (IOAG) wie beispielsweise aus PACT03 oder PACT15 bekannt realisiert sein. Die Ansteuerung von Speicher (RAM) und/oder Peripherie (IO) erfolgt dabei bevorzugt durch die Interface-Baugruppe.

Es kann der RRAM selbständig Code und/oder Daten für den Sequenzer über den EXTBUS aus dem oder einem externen RAM laden. Diese Funktion kann durch eigenständige, im RRAM implementierte oder implementierbare Adressgeneratoren realisiert werden. Beispielsweise eignen sich DMA-Kontroller besonders für diese Aufgabe, indem sie blockweise Daten zwischen den Speichern kopieren. Der Adressraum der zu lesenden Daten und der Zieladressraum wird entsprechend gesetzt und der Kopiervorgang wird gestartet. Das Setzen kann durch die IPAE erfolgen.

In einer hardwaremäßig aufwendigeren Lösung kann die Funktion durch eine implementierte MemoryManagemenUnit (MMU) realisiert sein, deren allgemeine Funktionsweise durch den Stand der Technik per se definiert und bekannt ist. Vorliegend arbeitet die bevorzugte MMU hier wie folgt:

Der von der MMU verwaltete RRAM Speicher ist in mehrere Seiten (Pages) aufgeteilt. Jede Page enthält Daten eines virtuellen Speicherraumes innerhalb eines externen Speichers. Beispielsweise können die hexadezimalen RRAM-Adressen 0x0a00..0x0aff Daten des externen Speichers an den Adressen 0xbd13200..0xbd132ff enthalten. Zur Verwaltung der Adressumsetzung wird eine Adressübersetzungseinheit verwendet, die vorzugsweise durch in der RRAM-Zelle vorgesehene Lookup-Tabellen realisiert ist. Die MMU ist nun dazu vorgesehen, insbesondere einen großen Speicherraum auf den sehr viel Kleineren des RRAM zu übersetzen. Dies geschieht vorliegend derart, dass Seiten je nach Bedarf von dem großen Speicherraum in den Kleinen kopiert werden. Sobald eine Seite nicht mehr benötigt wird, kann diese gelöscht und/oder überschrieben werden. Wenn die Daten auf der Seite verändert wurden, wird die Seite bevorzugt vor dem Löschen/Überschreiben in den grossen Speicherrraum zurückgeschrieben.

Die Adressumsetzungseinheit arbeitet dann derart, dass ein höherwertiger Teil der physikalischen Adresse (also die Adresse der Seite) in dem Lookup-Speicher abgelegt wird und auf die entsprechenden Daten der Seite im RRAM zeigt, sobald die Seite innerhalb des kleinen Speichers (RRAM) verfügbar ist. Dadurch kann ein Zugriff auf die Seite erfolgen. Fehlt die Seite im RRAM, ist auch keine Referenz eingetragen. In diesem Fall muss die Seite erst von einem großen (externen) Speicherraum in den RRAM kopiert werden. Hierzu kann eine andere, bevorzugt aktuell nicht verwendete Seite gemäß dem vorstehenden Ablauf überschrieben werden.

Das Kopieren kann dabei automatisiert, also ohne wesentliche Beteiligung durch den Sequenzer erfolgen, indem von der MMU ein DMA-Kontroller angesteuert wird. Die erfindungsgemäße MMU des hier offenbarten RRAM ist daher mit einer Ansteuerung für einen DMA-Kontroller versehen und/oder verbindbar. Diesem werden die entsprechenden Seitenadressen im RRAM und externen RAM, sowie die Seitengröße durch die MMU zur Verfügung gestellt, z. B. indem sie in Register eingetragen werden.

Es ist möglich, dass applikationsabhängig mehrere EXTBUS-Interface implementiert sind.

Gegebenenfalls ist der RRAM in mehrere Segmente unterteilt, die in unterschiedlichen Adressbereichen liegen. Die Segmente können beispielsweise für einige der folgenden Funktionen aufgeteilt sein bzw. aufteilbar sein und insbesondere eine Größe aufweisen, die die Implementierung aller oder einiger der folgenden Funktionen ermöglicht sowie entsprechende Steuerungen, die gegebenenfalls konfigurierbar sind, bevorzugt aber fest implementiert sind, besitzen:
Sequenzer-/Code-Speicher, Stack (z.B. für Registersatz), Datenspeicher, Heap, IO-Puffer, Puffer zu externem RAM bzw. Cache, Lookup-Tabellen,
Konfigurationen für PAEs und/oder Busse, der Registersatz der IPAE.
Je nach Funktion können dazu folgende Ansteuermechanismen vorgesehen und/oder konfiguriert sein:
Sequenzer-/Code-Speicher: Programmzeiger auf die entsprechenden Speicherstellen (Rpp).
Stack: Stackzeiger auf die oberste Speicherstelle des Stack (Rsp), gegebenenfalls auch ein FramePointer (Rfp), wie er nach dem Stand der Technik (z. B. Intel Pentium) per se bekannt ist.
Konfigurationen für PAEs und/oder Busse: Hierauf kann ein Zeiger innerhalb der CT und/oder - implementierungsabhängig ein Zeiger innerhalb der Konfigurationssteuerung der PAE zeigen.
Registersatz der IPAE: Sollte der Registersatz der PAE im Speicher untergebracht sein, wird dieser direkt durch die PAE bevorzugt hardwaretechnisch fest vorgegeben adressiert.

Die restlichen Speicherbereiche, wie Datenspeicher, Puffer, Tabellen etc. werden typischerweise und bevorzugt durch den Compiler oder Programmierer aufgebaut. Die Adressierung dieser Bereiche erfolgt durch das auszuführende Programm und/oder Betriebssystem und wird innerhalb des Programms und/oder Betriebssystems, ggf. unter Zuhilfenahme der Registersatzes und der ALU des Sequenzers, berechnet.

Der Registersatz der IPAE kann ähnlich dem Registersatz von Transputern als Stack organisiert sein. Dadurch kann der Registersatz besonders klein und hardwaretechnisch effizient realisiert werden (typischerweise reichen 3 Register A, B und C aus). Weiterhin ist aus der Transputertechnologie bekannt, dass Compiler effizient mit einem derartigen hardwaretechnisch kostengünstigen Registersatz arbeiten können. Ebenfalls kann der Registersatz optional im RRAM liegen.

Es kann und wird der RRAM als Multi-Port Speicher ausgeführt sein. Multi-Port Speicher erlauben den ggf. auch gleichzeitigen Schreib- und/oder Lese-Zugriff durch mehrere Speicherzugriffseinheiten auf den Speicherinhalt. Speicherzugriffseinheiten können beispielsweise externe und/oder interne Peripherie, Prozessoren, andere PAEs sein. Die Funktion von Multi-Port Speichern ist nach dem Stand der Technik ebenfalls bekannt.

Es kann die IPAE mit dem RRAM als lokale und ggf. auch globale Konfigurationseinheit ähnlich einer CT für PAEs in der Umgebung arbeiten oder unter anderem diese Funktion mit erfüllen. Bevorzugt arbeitet die PAE nach dem aus DE 196 54 846.2-53 bekannten Verfahren bei der Verwendung als lokal Konfigurationseinheit. Wird die PAE als globale Konfigurationseinheit verwendet, oder sind sehr viele lokale PAEs zu konfigurieren, wird bevorzugt das Verfahren nach DE 196 54 593.5-53 verwendet, das eine FILMO-Funktionalität aufweist und daher sehr viele und auch voneinander unabhängige Konfigurationen verwalten kann.

Die IPAE adressiert, z. B. gesteuert durch den Sequenzer/ Microcontroller, Konfigurationen im RRAM und konfiguriert diese an PAEs und/oder sich selbst und/oder bestimmt den Ablauf des Sequenzers/Microcontrollers. Bevorzugt findet hierbei eine Synchronisation mit einer übergeordneten CT ähnlich der bekannte Inter-CT-Protokolle (DE 198 07 872.2, DE 100 28 397.7 , DE 199 26 538.0) statt. Die IPAE RRAM Schaltung kann Konfiguration über eines der EX-TRAM-Interface selbst laden und/oder Konfigurationen von einer übergeordneten CT über das CT Interface anfordern. Die Funktionsweise kann ähnlich der Rekonfigurationseinheit in DE 196 54 846.2-53 sein. Die Konfigurationsdaten für die PAEs werden durch die IRAM an die PAEs weitergeleitet oder in einer bevorzugten Ausgestaltung direkt von RRAM. Zur Aufteilung der Daten im RRAM an mehrere PAEs kann dabei ein Busverteilverfahren ähnlich des in DE 101 10 530.4 beschriebenen SIMD-Bussystems verwendet werden.

Mit anderen Worten ist die prinzipielle Arbeitsweise einer IPAE-RRAM-Verschaltung ähnlich einem Microcontrollersystem, dessen Busanbindung und/oder dessen Datentransfer und/oder dessen Programmablauf einem VPU-System entspricht.

Es werden IPAE-RRAM-Verschaltungen erwähnt, bei denen die IPAE und das RRAM jeweils als separate Funktionselemente (PAEs) eines rekonfigurierbaren Bausteins ausgestaltet sind und typischerweise beliebige Verschaltungen und Funktionen ausführen können, aber jedoch speziell zum Einsatz der hier beschriebenen Sequenzerstruktur aus IPAE und RRAM entsprechend konfiguriert und verwendet werden können. Die Konfiguration erfolgt dabei bevorzugt durch die übergeordnete Konfigurationseinheit CT.

Ebenfalls beschrieben werden PAEs, die zusätzlich zu ihrem Anschluss an die internen Bussysteme des Arrays aus PAEs einen dedizierten Anschluss (IO-Channel) an ein überregionales Bussystem aufweisen, das insbesondere Daten über lange Strecken innerhalb des Arrays überträgt und/oder insbesondere direkten Anschluss an die Peripherie aufweist. Der Anschluss an die Peripherie kann dabei direkt erfolgen, indem z. B. das Bussystem bereits dem peripheren Protokoll entspricht oder über entsprechende Protokollwandler zur Umsetzung des Protokolls erfolgen. Das dedizierte Bussystem kann dabei bereits einem Industriestandard entsprechen, z. B. PCI, RapidIO, Firewire, USB, Ethernet, RAMBUS, DDR-RAM etc. um somit einen einfachen und unaufwendigen Anschluss der peripheren Geräte zu ermöglichen. Gegebenenfalls können auch in zwischengeschalteten IOAGs (vgl. DE 196 54 595.1-53) Protokollkonvertierungen derart durchgeführt werden, so dass ein internes vereinfachtes und ggf. proprietäres Busprotokoll auf ein oder mehrere komplexere externe Standardprotokolle übersetzt werden.
Es soll besonders darauf hingewiesen werden, dass unter Peripherie auch Speicher verstanden werden, wie bei den bereits aufgezählten Busprotokollen verdeutlicht wird.

Ebenfalls ist zu erwähnen, dass PAEs auch mehrere Anschlüsse an dedizierte Bussysteme aufweisen können.

Desweiteren sind anwendungsabhängig auch Architekturen sinnvoll, bei denen nur eine Teilmenge der PAEs Anschlüsse an ein dediziertes Bussystem aufweist, oder unterschiedliche PAEs mit einer unterschiedlichen Anzahl von Anschlüssen an ggf. auch unterschiedliche dedizierte Bussysteme aufweisen.

Im folgenden wird eine detaillierte Beschreibung einer Ausführungsvariante der Kopplung von IPAE und RRAM ausgeführt:

Es wird bei einem in Funktion und/oder Vernetzung insbesondere zur Laufzeit ohne Störung nicht zu rekonfigurierender Elemente rekonfigurierbaren Zellelementefeld zur Datenverarbeitung mit Funktionszellen zur Ausführung algebraischer und/oder logischer, konfigurierbarer Funktionen und Speicherzellen, um Informationen zu empfangen, abzuspeichern und/oder auszugeben vorgeschlagen, dass eine Steuerverbindung (CMD) von den Funktionszellen zu den Speicherzellen geführt ist. Diese Steuerverbindung dient dazu, die Adress- und/oder Datenein-/-ausgabe aus dem Speicher durch die zugeordnete Funktionszelle, typisch einer ALU-PAE, steuerbar zu machen. So kann etwa angegeben werden, ob die nächste übertragene Information als Adresse oder als Daten behandelt werden soll und ob ein Lese- und/oder Schreibzugriff erforderlich ist. Diese Datenübertragung aus der Speicherzelle, bei der es sich etwa um eine RAM-PAE handeln kann, auf die ALU-PAE erlauben dann, dass neue, von der ALU abzuarbeitende Befehle in diese geladen werden können. Es ist auf diese Weise möglich, lediglich durch Vorsehen einer dedizierten und dediziert funktionszellenkontrollierten Steuerverbindung zwischen Funktionszelle und Speicherzelle bereits mit nur zwei Elementen, die über geeignete Busse verbunden sind, eine Sequenzerstruktur in einem Zellelementefeld aufzubauen, ohne dass ansonsten weitere Maßnahmen und/oder bauliche Veränderungen erforderlich sind. In der Speicherzelle können Daten, Adressen, Programmschritte usw. in per se aus herkömmlichen Prozessoren bekannter Weise abgelegt werden. Weil beide Elemente auch in anderer Weise bei entsprechender Konfiguration einsetzbar sind, ergibt sich eine besonders effiziente Bauweise, die sowohl Sequenzerstrukturen als auch vektoriellen und/oder parallelisierbaren Strukturen besonders gut anpassbar ist.

Es ist einsichtig, dass durch die Verwendung von lediglich zwei Zellen in einem Zellelementefeld, nämlich der Funktionszelle und der Informationsbereitstellungszelle eine Vielzahl von sequenzerartigen Strukturen in dem rekonfigurierbaren Zellelementefeld aufgebaut werden kann. Dies ist insofern vorteilhaft, als oftmals bei der Datenverarbeitung, etwa in einem multitaskingfähigen Betriebssystem, eine Reihe unterschiedlicher und voneinander per se verschiedener Aufgaben abgearbeitet werden muss. Es können dann eine Vielzahl derartiger Aufgaben in einem einzigen Zellelementefeld effektiv gleichzeitig abgearbeitet werden. Die Vorteile für Echtzeitanwendungen sind offensichtlich. Weiter ist es auch möglich, die einzelnen Sequenzerstrukturen, die in einem Zellelementefeld unter Vorsehung der erfindungsgemäßen Steuerverbindung aufgebaut werden, mit unterschiedlichen Taktraten zu betreiben, etwa um den Stromverbrauch dadurch zu senken, dass Aufgaben mit geringerer Priorität langsamer abgearbeitet werden. Es ist überdies möglich, bei der Ausführung per se weitgehend paralleler Algorithmen sequenzerartige Programmteile in dem Feld parallel oder vektoriell abzuarbeiten und umgekehrt.

Das Zellelementefeld mit den in Funktion und/oder Vernetzung konfigurierbaren Zellen kann einsichtigerweise einen Prozessor, einen Coprozessor und/oder einen Mikrocontroller bilden, bzw. eine parallele Vielzahl oder Kombinationen derselben.

Die Funktionszellen sind typisch als arithmetische Logikeinheiten gebildet, wobei sie insbesondere grobgranulare Elemente darstellen, die aber mit einer feingranularen Statemachine versehen sein können. Beispielsweise handelt es sich bei den ALUs um sogenannte erweiterte ALUs (EALU), wie diese in den früheren Anmeldungen des vorliegenden Anmelders beschrieben wurden. Eine Erweiterung kann insbesondere die Steuerleitungskontrolle, Befehlsdekodiereinheit etc. umfassen, soweit erforderlich. Es soll darauf hingewiesen werden, dass grundsätzlich zumindest eine Teilmenge der Funktionszellen auch aus feingranularen FPGA-Elementen aufgebaut sein kann.

Die Speicherzellen können Daten und/oder Informationen flüchtig und/oder nichtflüchtig speichern. Wenn in den Speicherzellen abgelegte Informationen, seien es Programmschritte, Adressen für einen Zugriff auf Daten oder registerartig bzw. heap-artig abgelegte Daten als flüchtige Daten abgelegt sind, so kann eine vollständige Rekonfiguration während des Betriebes erfolgen. Alternativ ist es möglich, nichtflüchtige Speicherzellen vorzusehen. Die nichtflüchtigen Speicherzellen können etwa als EE-Prom-Bereich und dergleichen vorgesehen werden, in die ein rudimentäres Bios-Programm abgelegt wird, das bei Inbetriebnahme der Anordnung auszuführen ist. Auf diese Weise kann ohne weitere Bauteile eine Inbetriebnahme einer Datenverarbeitungseinrichtung erfolgen. Ein nichtflüchtiger Datenspeicher kann auch dann vorgesehen werden, wenn aus Kosten- und/der Raumgründen beschlossen wird, dass immer wieder dieselben Programmteile auszuführen sind, wobei dann auch unter solchen festen Programmteilen, etwa nach Art der WAVE-Rekonfiguration, im Betrieb gewechselt werden kann. Die Möglichkeiten, derartige nichtflüchtige Speicher vorzusehen und zu verwenden, sind Gegenstand anderer Schutzrechte des Anmelders. Es ist möglich, sowohl flüchtige als auch nichtflüchtige Daten in den Speicherzellen abzuspeichern, etwa um ein Bios-Programm fest abzulegen und die Speicherzelle dennoch für andere Zwecke nutzen zu können.

Die Speicherzelle ist bevorzugt so ausgebildet, dass sie eine hinreichende Vielzahl von zu verarbeitenden Daten und/oder abzuarbeitenden Programmteilen speichern kann. Es sei dabei darauf hingewiesen, dass diese Programmteile sowohl als Programmschritte ausgebildet sein können, die jeweils vorgeben, was eine einzelne, insbesondere die zugeordnete PAE, also insbesondere die die Speicherzelle steuernde Funktionszelle, im nächsten Schritt zu tun hat, als auch ganze Konfigurationen für Feldbereiche oder andere Felder beinhalten kann. In einem solchen Fall ist es ohne weiteres möglich, dass die aufgebaute Sequenzerstruktur einen Befehl ausgibt, auf Grund dessen eine Rekonfiguration von Zellelementefeldbereichen erfolgt. Damit arbeitet die diese Konfiguration auslösende Funktionszelle dann zugleich als Ladelogik (CT). Es sei darauf hingewiesen, dass die Konfiguration von anderen Zellen wiederum dergestalt erfolgen kann, dass dort eine sequenzerartige Datenverarbeitung erfolgt und es ist in diesen Feldern wiederum möglich, andere Zellen im Verlauf der Programmarbeitung zu konfigurieren bzw. rekonfigurieren. Damit ergibt sich ein iteratives Konfigurieren von Zellelementebereichen und ein Einschachteln von Programmen mit Sequenzer- und Parallel-Strukturen, die ähnlich ineinander geschachtelt sind wie eine Babuschka. Es sei darauf hingewiesen, dass hier insbesondere durch Ein-Ausgabezellen ein Zugriff auf weitere Zellelementefelder außerhalb eines einzelnen integrierten Bausteines erfolgen kann, was die Gesamtrechenleistung massiv erhöhen kann. Es ist insbesondere möglich, bei Auftreten von Konfigurationen in einem Codeteil einer in ein Zellelementefeld hineinkonfigurierten Sequenzerstruktur gegebenenfalls entweder die Konfigurationsanforderungen auf einem zugewiesenen Zellelementefeld, das von der jeweiligen Sequenzerstruktur allein verwaltet wird, durchzuführen und/oder es können derartige Anforderungen an eine Konfigurations-Mastereinheit abgegeben werden, um sicherzustellen, dass eine gleichmäßige Belegung aller Zellelementefelder erfolgt. Es ergibt sich somit quasi ein Unterprogrammaufruf durch Übergabe von erforderlichen Konfigurationen an Zellen oder Ladelogiken. Dies wird für sich als schutzwürdig angesehen. Es sei auch darauf hingewiesen, dass die Zellen, sofern sie selbst für die Konfiguration anderer Zellelementfeldbereiche Zuständigkeit besitzen, mit hard- oder softwareartig implementierten FILMO-Strukturen und dergleichen zur Sicherstellung einer ordnungsgemäßen Rekonfiguration versehen sein können. Auf die Möglichkeit, die Speicherzellen während der Abarbeitung von Befehlen derart zu beschreiben, dass sich der abzuarbeitende Code bzw. das abzuarbeitende Programm ändert, sei hingewiesen. In einer besonders bevorzugten Variante ist diese Art der Selbstmodifikation (SM) aber durch eine entsprechende Steuerung über die Funktionszelle unterdrückt.

Es ist möglich, dass die Speicherzelle abgespeicherte Information hier auf die Ansteuerung der sie steuernden Funktionszelle direkt oder indirekt auf einen zur Funktionszelle führenden Bus gibt. Die indirekte Ausgabe kann insbesondere dann erfolgen, wenn beide Zellen benachbart liegen und die durch Ansteuerung angeforderte Information an die ALU-PAE über ein Bussegment eintreffen muss, das nicht unmittelbar mit dem Ausgang der Speicherzelle verbunden werden kann. In einem solchen Fall kann die Speicherzelle Daten auf dieses Bussystem insbesondere über Rückwärtsregister (Backward-Register) ausgeben. Es ist daher bevorzugt, wenn zumindest eine von Speicherzelle und/oder Funktionszelle ein solches Backward-Register aufweist, welches im Informationsweg zwischen Speicherzelle und Funktionszelle angeordnet werden kann. Diese Register brauchen in einem solchen Fall nicht zwingend mit weiteren Funktionalitäten versehen sein, obwohl dies etwa bei Anforderung von Daten aus der Speicherzelle für die weitere Verarbeitung, entsprechend einem herkömmlichen LOAD-Befehl eines typischen Mikroprozessors, zur Veränderung der Daten noch vor dem Hineinladen in die PAE ohne weiteres denkbar ist, um z. B. einen Befehl LOAD++ zu realisieren.
Mit anderen Worten werden innerhalb der beschriebenen Struktur Busverbindungen bei Bedarf durch die in der XPP-Technologie des Anmelders typischen Forward(FREG)- und Backward(BREG)-Register geführt. Diese besitzen die Möglichkeit Daten zwischen horizontalen Bussystemen vertikal zu übertragen und können mehrere Busse multiplexen oder demultiplexen. Der Vollständigkeit halber sein darauf hingewiesen, dass FREG und BREG (entgegen ihrer Namensgebung) nicht zwangsläufig Registerstufen darstellen, sondern lediglich optional und ggf. konfigurierbare Register aufweisen.
Die Steuerverbindung (CMD) kann dabei an FREG und/oder BREG der jeweiligen Funktionszellen (PAEs) geführt werden, um die Busdatentransfers entsprechend des aktuell ausgeführten Befehls zu steuern.

Die Speicherzelle wird bevorzugt dazu angeordnet sein, Informationen von der sie steuernden Funktionszelle zu empfangen, wobei auch weiter ein Informationseinspeichern über eine Ein-Ausgabezelle und/oder eine die Speicherzelle nicht steuernde Zelle möglich ist. Insbesondere dann, wenn Daten von einer Ein-Ausgabezelle in die Speicherzelle geschrieben werden sollen, ist es bevorzugt, wenn auch diese Ein-Ausgabezelle (I/O-PAE) von der Funktionszelle gesteuert wird. Dabei kann etwa die Adresse, bei welcher eine in die Speicherzelle zu schreibende oder gegebenenfalls auch direkt an die Funktionszelle (PAE) zu übertragende Information zu lesen ist, an die I/O-PAE von der ALU-PAE übermittelt werden. Es sei in diesem Zusammenhang darauf hingewiesen, daß diese Adresse über eine Adressübersetzungstabelle (Adresstranslationtable), einen Adresstranslationbuffer oder eine MMU-artige Struktur in der I/O-PAE festgelegt werden kann. Es ergeben sich insbesondere in einem solchen Fall die vollen Funktionalitäten typischer Mikroprozessoren.

Die Funktionszellen-Speicherzellenkombination ist demnach in einer bevorzugten Variante zumindest ein Ein-Ausgabe-Mittel zugeordnet, mit welchem dann an eine externe Einheit, eine andere Funktionszelle, Funktionszellen-Speicherzellen-Kombination und/oder Speicherzellen Information gesandt und/oder von dieser empfangen werden kann.

Die Ein-Ausgabe-Einheit wird dabei bevorzugt gleichfalls zum Empfang von Steuerbefehlen aus der Funktionszelle ausgebildet.

Die Funktionszellen-Speicherzellenkombination weist bevorzugt Datentransfermöglichkeiten an die übrigen Funktionszellen und/oder Speicherzellen eines VPU-Bausteines auf, insbesondere solchen, die sich im Array aus PAEs (PA) befinden. Hierzu werden Zugriffsmöglichkeiten über die Bussysteme auf die entsprechenden Zellen zur Verfügung gestellt. Der Zugriff erfolgt bevorzugt über die Forward- und/oder Backward-Register der PAEs der Funktionszellen-Speicherzellenkombination, durch die Übertragung der "Port"-Steuerkommandos.

Es ist möglich, dass die Steuerverbindung (CMD) dazu ausgebildet ist, zumindest einige und bevorzugt alle der nachfolgenden Steuerkommandos zu übertragen:
OPCODE FETCH,
INTERNE/EXTERNE DATENZUGRIFFE,
POSITIONIERUNG VON INTERNEN/EXTERNEN ADRESSPOINTERN,
POSITIONIERUNG VON INTERNEN/EXTERNEN PROGRAMMPOINTERN,
PROGRAMMPOINTER INCREMENT,
POSITIONIERUNG VON INTERNEN/EXTERNEN STACKPOINTERN,
STACKZUGRIFFE (PUSH,POP)

Beispielsweise kann diese Funktionalität durch folgende CMD Steuerkommandos implementiert werden:
- load_const:: Lade eine Konstante in ein Register
- write_Rap:: Setze Adress Pointer für Speicherzugriffe (z. B. Heap)
- read_Rap:: Lese Adress Pointer für Speicherzugriffe (z. B. Heap)

- read_Reg:: Lese ein Register aus dem Speicher (wenn Register in der RAM-PAE implementiert sind)
- write_Reg:: Schreibe Daten in ein Register im Speicher (wenn Register in der RAM-PAE implementiert sind)
- write&decr_Rsp:: Schreibe ein Datenwort auf den Stack und dekrementiert den Stackpointer
- read&incr_Rsp:: Lese ein Datenwort vom Stack und inkrementeiere den Stackpointer
- set_Rpp:: Setze Programmpointer
- set&push_Rpp:: Schreibe Programmpointer auf Stack und setze Programm-pointer neu

Die Steuerkommandos dienen der Steuerung der angeschlossenen Speicherzellen und Funktionszellen (PAEs). Weiterhin steuern die Steuerkommandos den Datentransfer auf den Bussystemen, beispielsweise durch Ansteuerung von Multiplexern, Switches, Transmission Gates, o. ä. in den Forward- und Backward-Registern (FREG/BREG). Weitere Befehle sind z. B.:
- read_Port:: Lese Daten von einem Port (beispielsweise implementiert durch ein FREG) zum Array
- write_Port:: Schreibe Daten auf einen Port (beispielsweise implementiert durch ein BREG) zum Array

Dies kann durch eine entsprechende Bitbreite der Steuerleitung und eine zugeordnete Decodierung bei den Empfängern erfolgen. Die jeweils erforderlichen Steuer- und Dekodiermittel können problemfrei und kostengünstig vorgesehen werden. Wie ersichtlich, ergibt sich mit den Signalen eine praktisch vollständige Sequenzerfähigkeit der Anordnung. Dass auf diese Weise eine Allgemeinzweckprozessordatenverarbeitungseinheit erhalten wird, sei erwähnt.

Die Anordnung wird typisch so gewählt sein, dass die Funktionszelle als alleiniger Master auf die Steuerverbindung und/oder ein als Steuerverbindung dienendes Bussegment bzw. Bussystem zugreifen kann. Es ergibt sich somit eine Anordnung, bei der die Steuerleitung als Command-Leitung wirkt, wie sie in herkömmlichen Prozessoren vorgesehen ist.

Die Funktionszelle und die Speicherzelle bzw. I/O-Zelle sind bevorzugt benachbart angeordnet. Unter benachbart kann dabei wie bevorzugt verstanden werden, dass die Zellen unmittelbar nebeneinander angeordnet sind. Alternativ befinden sie sich zumindest dicht beieinander. Die Anordnung der Funktions-und Speicherzellen in Nachbarschaft zueinander sorgt dafür, dass keine, jedenfalls keine signifikanten Latenzzeiten zwischen Ansteuerung und Dateneingang der angeforderten Information in der Funktionszelle auftreten, nur weil die Verbindungen zwischen den Zellen zu lang sind. Dies sei als "direkt" verstanden. Müssen Latenzzeiten berücksichtigt werden, so kann auch ein Pipelining in den Sequenzerstrukturen vorgesehen werden. Dies wird besonders wichtig bei sehr hoch getakteten Anordnungen. Es sei darauf hingewiesen, dass es ohne weiteres möglich ist, entsprechend hochfrequent getaktete Zelleinheiten vorzusehen, die wie im Stand der Technik per se bekannt, auch entsprechend schnell auf geeignete Speicherzellen zugreifen können. Auch in einem solchen Fall, etwa wenn per se bekannte Architekturelemente für die Funktionszellen verwendet werden, wird gleichzeitig eine Rekonfigurierbarkeit des Funktionszellenelementes und der zugehörigen Vernetzungen vorzusehen sein. In einer besonders bevorzugten Variante sind die Funktionszellen, die Informationsbereitstellungszellen wie Speicherzellen, I/O-Zellen und dergleichen multidimensional angeordnet, insbesondere nach Art einer Matrix bzw. auf Gitterpunkten eines eindimensionalen Gitters usw. Wenn eine regelmäßige Struktur vorliegt, wie dies dort der Fall ist, wird einer Zelle typisch aus einer ersten Reihe Information, das heißt Operanden, Konfigurationen, Triggersignale usw. zugeführt, während in einer darunterliegende Reihe Daten, Triggersignale und andere Informationen abgegeben werden. In einem solchen Fall wird es bevorzugt sein, wenn die Zellen in ein und derselben Reihe liegen und es kann dann der Informationstransfer aus der Informationsbereitstellungszelle in den erforderlichen Eingang der Funktionszelle über ein Backward-Register erfolgen. Die Möglichkeit, die Register für Pipelining zu benutzen, sei erwähnt.

Es wird weiter beschrieben ein Verfahren zum Betrieb eines Zellelementefeldes, insbesondere multidimensionalen Zellelementefeldes mit Funktionszellen zur Ausführung algebraischer und/oder logischer Funktionen und Informationsbereitstellungszellen, insbesondere Speicherzellen und/oder Ein-Ausgabezellen zum Empfangen und/oder Ausgeben von Informationen und/oder Speichern derselben, wobei zumindest eine der Funktionszellen Steuerbefehle an zumindest eine Informationsbereitstellungszelle ausgibt, dort im Ansprechen auf die Steuerbefehle Information für die Funktionszelle bereitgestellt wird und die Funktionszelle dazu ausgebildet ist, die weitere Datenverarbeitung im Ansprechen auf die bereitgestellte Information durchzuführen, um so sequenzerartig Daten zu verarbeiten.

Es wird also in einem rekonfigurierbaren Feld durch die Ausgabe der Steuerbefehle an die Speicherzelle einer Sequenzerstruktur eine sequenzerartige Datenverarbeitung ermöglicht. Die Befehle, die als Steuerbefehle von der Funktionszelle ausgegeben werden können, ermöglichen dabei einen sequenzerartigen Betrieb, wie er aus herkömmlichen Prozessoren bekannt ist. Es sei darauf hingewiesen, daß es ohne weiteres möglich ist, nur Teile der genannten Befehle zu implementieren und dennoch eine vollständig sequenzerartige Datenverarbeitung zu gewährleisten.

Die Erfindung wird im folgenden nur beispielsweise anhand der Zeichnung beschrieben. In dieser ist gezeigt durch:
- Fig. 1: ein Zellelementefeld,
- Fig. 2a: ein Detail hiervon,
- Fig. 2b,c: das Detail von Fig. 2a während verschiedener Datenverarbeitungszeiten,
- Fig. 3a: eine alternative Ausführungsform des Details von Fig. 2,
- Fig. 3b: eine besonders bevorzugte Variante des Details.
- Fig. 4: Grundaufbau einer Funktions-/Speicherzelle (PAE)
- Fig. 5: eine Ausgestaltungsvariante von Fig. 3b.

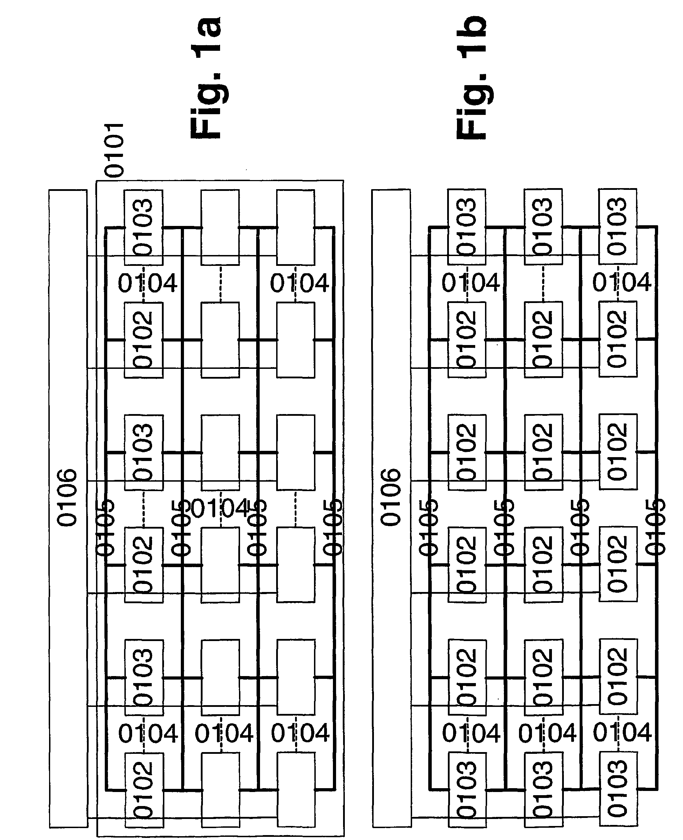

Nach Fig. 1(a/b) umfasst ein allgemein mit 0101 bezeichnetes Zellelementefeld zur Datenverarbeitung 0101 Funktionszellen 0102 zur Ausführung von arithmetischen und/oder logischen Funktionen sowie Speicherzellen 0103, um Informationen zu empfangen, abzuspeichern und/oder auszugeben, wobei eine Steuerverbindung 0104 von Funktionszellen 0102 zu den Speicherzellen 0103 geführt ist.

Zunächst wird die Arbeitsweise von Fig. 1a beschrieben. Fig. 1b stellt eine bevorzugte Ausgestaltung und Anordnung der Funktionszellen und Speicherzellen dar.
Das Zellelementefeld 0101 ist in der Vernetzung der Elemente 0102, 0103, 0104 frei konfigurierbar, und zwar ohne den laufenden Betrieb nicht neu zu konfigurierender Zellelementeteile zu stören. Dabei können die Verbindungen konfiguriert werden, indem Bussysteme 0105 wie erforderlich geschaltet werden. Weiter sind die Funktionszellen 0102 in ihrer jeweiligen Funktion konfigurierbar. Bei den Funktionszellen handelt es sich um arithmetische Logikeinheiten, die um bestimmte, Rekonfiguration ermöglichende Schaltkreise erweitert sind, wie Statemachines, Schnittstellenbeschaltung zur Kommunikation mit der bevorzugt außerhalb des Zellelementefeldes angeordneten Ladelogik 0106 usw. Auf die entsprechenden Voranmeldungen des Anmelders wird hingewiesen. Die Zellelemente 0102, 0103 des Zellelementefeldes 1 sind zweidimensional in Reihen und Spalten angeordnet, wobei jeweils eine Speicherzelle 0103 unmittelbar neben einer Funktionszelle 0102 liegt und hier je Reihe drei Speicherzellen-Funktionszellen-Paare vorliegen, in denen die Funktions- und Speicherzellen jeweils über Steuerverbindungen 0104 miteinander verbunden sind. Die Funktions- und Speicherzellen 0102, 0103 weisen Eingänge auf, die mit dem Bussystem oberhalb der Reihe, in der sich die jeweiligen Zellelemente verbindbar sind, um Daten davon zu empfangen. Weiter weisen die Zellen 0102, 0103 Ausgänge auf, die auf das Bussystem 0105 unterhalb der Reihe Daten ausgeben. Wie noch erläutert werden wird, ist überdies jede Speicherzelle 0103 mit einem Rückwärtsregister (BW) versehen, durch welches Daten von dem Bus unterhalb einer Reihe auf den Bus oberhalb der jeweiligen Reihe durchgeschleust werden können.

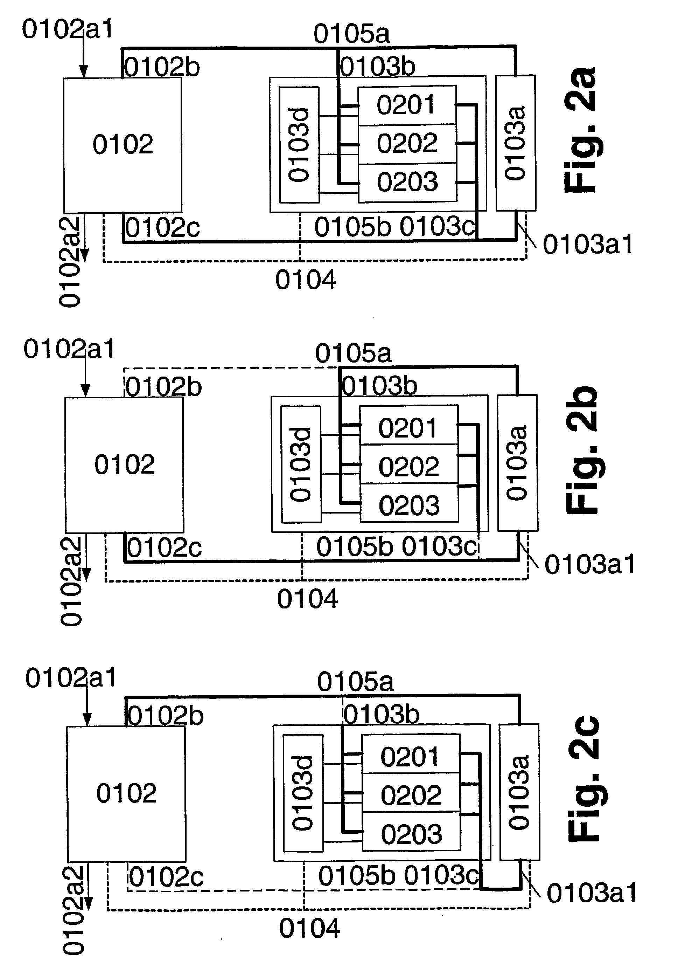

Mit Ausnahme der Steuerverbindungen 0104 und der zugeordneten Schaltungen innerhalb der Funktionszellen (ALU in Fig. 2) bzw. Speicherzellen (RAM in Fig. 2) handelt es sich bei dem Zellelementefeld zur Datenverarbeitung von Fig. 1 um ein herkömmliches Zellelementefeld, wie es bei rekonfigurierbaren Datenverarbeitunsanordnungen, beispielsweise einer VPU entsprechend der XPP-Technologie des Anmelders gebräuchlich und bekannt ist. Insbesondere kann das Zellelementefeld von Fig. 1 wie bekannt betrieben werden, weist also entsprechende Beschaltungen zur Wave-Rekonfiguration, zum Debugging, Übertragen von Triggersignalen etc. auf.

Die Besonderheiten des Zellelementefeldes der vorliegenden Erfindung ergeben sich aus der Steuerverbindung 0104 und der zugehörigen Beschaltung, die nachfolgend näher beschrieben werden wird mit Bezug auf die Fig. 2a-c. Es sei dabei erwähnt, dass, während in Fig. 1 eine Steuerverbindung 0104 stets von einem weiter links liegende Funktionszellenelement zu einer weiter rechts liegenden Speicherzelle geführt ist, und zwar nur und genau zu einer solchen Speicherzelle, es einleuchtenderweise möglich ist, auch für die Steuerleitungen eine konfigurierbare Vernetzung vorzusehen, um entweder an anderer Stelle liegende Speicherzellen anzusprechen und/oder um ggf. mehr als eine Speicherzelle ansprechen zu können, wenn etwa in großem Umfange Speicherbedarf für Informationen besteht, die von den Speicherzellen zu empfangen, abzuspeichern und/oder auszugeben ist. Aus Gründen der Übersichtlichkeit wird aber in Fig. 1 und 2 lediglich auf fest vorgesehene einzelne Steuerverbindungen Bezug genommen, was das Verständnis der Erfindung wesentlich erleichtert. Die Steuerverbindung ist im übrigen erforderlichenfalls durch herkömmliche Leitungen, entsprechende Protokolle vorausgesetzt, substituierbar.

In Fig. 2 ist die Funktionszelle 0102 als ALU und die Funktionszelle 0103 als RAM bezeichnet. Oberhalb der Reihe, in der die Zellen liegen, verläuft der Bus 0105a, der das bereits erwähnte Backward-Register 0103a mit den Eingängen 0103b der Speicherzelle und 0102b der ALU verbindet. Das unterhalb der Reihe verlaufende Bussystem ist mit 0105b bezeichnet und es sind von dem Bussystem 0105a, 0105b nur die relevanten Segmente gezeichnet. Es ist erkennbar, dass das Bussystem 0105b alternativ Daten erhält aus einem Ausgang 0102c der ALU 0102, einem Ausgang 0103c des RAM 0103 und daß es Daten in den Eingang 0103a1 des Backward-Registers führt.

Die ALU 0102 weist zugleich weitere Ein- und Ausgänge 0102a1, 0102a2 auf, die auf andere Bussegmente geschaltet sein können und über welche die ALU Daten wie Operanden empfängt bzw. Ergebnisse ausgibt.

Die Steuerverbindung 0104 befindet sich dauerhaft unter der Kontrolle der erweiterten Schaltkreise der ALU und stellt hier eine Verbindung dar, über welche eine Vielzahl von Bits übertragen werden kann. Die Breite der Steuerverbindung 0104 ist dabei so gewählt, dass zumindest die zuvor beschriebenen Steuerbefehle an die Speicherzelle und die Forward/Backward-Register (FREG/BREG) übertragen werden können. Die Speicherzelle 0103 weist zugleich bevorzugt drei Speicherbereiche auf, nämlich einen sog. Stack-Bereich, einen Heap-Bereich und einen Programm-Bereich. Jedem Bereich ist dabei ein eigener Zeiger zugeordnet, über den bestimmt ist, auf welchen Bereich des Stacks, des Heaps und des Programmbereiches jeweils lesend oder schreibend zugegriffen wird.

Der Bus 0105a wird im Zeitmultiplex gemeinsam von den Einheiten 0102 und 0103 verwendet. Dies ist in den Fig. 2b, 2c angedeutet. So ist in Fig. 2b eine Situation gezeigt, in welcher aus dem Ausgang 0102a2 der ALU-PAE Daten über das Backward-Register auf den Eingang der RAM-Zelle gesandt werden können, wohingegen der zeitgleich bestehenden, wenngleich nicht benutzten Verbindung zwischen dem Ausgang 0103c des RAM zum Bus 0105b und der Verbindung zwischen dem Ausgang des Backward-Registers BW zum Eingang 0102b der ALU-PAE zum Zeitpunkt von Fig. 2b keine Bedeutung zukommt, weshalb diese gestrichelt angedeutet sind. In Fig. 2c ist hingegen ein Zeitpunkt gezeigt, zu welchem die Speicherzelle 0103 über ihren Ausgang 0103c aus dem über Steuerleitung 0104 bestimmten Speicherbereich Stack (0203), Heap (0202), Program (0201) die Information über das Backward-Register an den Eingang 2b der ALU-PAE 0102 speist, während der Ausgang der ALU-PAE 0102c inaktiv ist und am Eingang 0103b der RAM-PAE kein Signal empfangen wird. Aus diesem Grund sind die entsprechenden Verbindungen strichpunktiert und somit als inaktiv dargestellt.

Innerhalb der RAM-Zelle 0103 ist eine Schaltung 0103d vorgesehen, in der die über die Steuerleitung 0104 bzw. das Steuerleitungsbussegment 0104 empfangene Information decodiert wird.

Diese Anordnung wird verwendet wie folgt:

Zunächst empfängt die ALU 0102 Konfigurationsinformation von einer zentralen Ladelogik, wie im Stand der Technik bereits bekannt. Die Informationsübertragung kann in per se bekannter Weise unter Verwendung des RDY/ACK-Protokolls und dergleichen geschehen. Auf die Möglichkeit, bei der Ladelogik einen FILMO-Speicher usw. vorzusehen, um eine ordnungsgemäße Konfiguration der Anordnung zu ermöglichen, wird hingewiesen.

Mit den Daten für die Konfiguration der ALU 0102 wird zugleich eine Reihe von Daten aus der Ladelogik übertragen, die ein sequenzerartig abzuarbeitendes Programm darstellt. Dieses Programm kann entweder bereits das zur Berechnung bzw. Ausführung der Applikation auszuführende Programm sein, oder einen Urlader (Boot) darstellen, der erst das auszuführende Applikationsprogramm von einer externen Einheit (Speicher, Peripherie) lädt. Das Laden des Programms kann entfallen, wenn ein Teil des der ALU zugeordneten Speichers nichtflüchtig (z. B. ROM, EPROM, EEPROM, Flash-ROM) ausgestaltet ist und ein Urlader oder das Applikationsprogramm dort fest gespeichert ist. Dies kann insbesondere dann von Vorteil sein, wenn die Applikation vorab bekannt ist und unabänderlich gestaltet werden kann, da eine feste Implementierung dann zu einer erheblichen Kostenreduktion führen kann. Die ALU gibt deshalb während ihrer Konfiguration auf der Leitung 0104 einen entsprechenden Befehl aus, der den Programmzeiger zum Schreiben auf einen vorgegebenen Wert innerhalb des RAM setzt. Danach werden von der Ladelogik bei der ALU empfangene Daten über den Ausgang 0102c über den Bus 0105b1 und das Backward-Register 0103a gespeist und gelangen von dort in den Eingang 0103b der RAM-PAE 0103. Von der Einheit 0103d werden entsprechend des Steuerbefehls auf Steuerleitung 0104 dann Daten auf den angewiesenen Programmspeicherplatz geschrieben. Dies wiederholt sich, bis sämtliche, von der Ladelogik bei der Konfiguration empfangenen Programmteile in der Speicherzelle 0103 abgelegt sind. Wenn dann die Konfiguration der ALU beendet ist, wird diese durch Ausgabe der entsprechenden Befehle auf der Steuerleitung 0104 die nächsten, von ihr sequenzerartig abzuarbeitenden Programmschritte anfordern und über den Ausgang 0103c, den Bus 0105b, das Backward-Register der RAM-PAE 0103 und den Bus 0105a an ihrem Eingang empfangen. Während der Programmabarbeitung können dabei Situationen auftreten, bei denen Sprünge innerhalb des Programmspeicherbereiches erforderlich sind, Daten in die ALU-PAE aus der RAM-PAE geladen werden, Daten im Stack abgelegt werden müssen usw. Die diesbezügliche Kommunikation zwischen ALU-PAE und RAM-PAE erfolgt über die Steuerleitung 0104, so dass die ALU-PAE zu jedem Zeitpunkt die Dekodierung durchführen kann. Überdies können auch, wie bei einem herkömmlichen Mikroprozessor, Daten aus einem Stack oder einem anderen RAM-Speicherbereich empfangen werden und es können überdies Daten von außerhalb als Operanden in der ALU-PAE empfangen werden.

Es findet dabei die Abarbeitung der Programmsequenz statt, die in den RAM-PAE durch die Ladelogik vorkonfiguriert wurde. In der ALU-PAE wird dabei zugleich, wie per se erforderlich, eine Befehlsdekodierung vorgenommen. Dies geschieht mit den per se gleichen Schaltkreisen, die schon für die Dekodierung der von der Ladelogik erhaltenen Befehle verwendet werden.

Es wird über die ALU zu jedem Zeitpunkt die Steuerleitung 0104 kontrolliert, so dass die RAM-Zelle stets genau die Art des Speicherzugriffes befolgt, die von der ALU vorgegeben ist. Auf diese Weise ist sichergestellt, dass ungeachtet der Zeitmultiplex-Benutzung der Buselemente 0105a, b jederzeit den in der Sequenzerstruktur vorhandenen Elementen vorgegeben ist, ob auf den Bussen Adressen für zu holende und/oder zu schreibende Daten oder Codes liegen oder ob und gegebenenfalls wohin Daten zu schreiben sind etc.

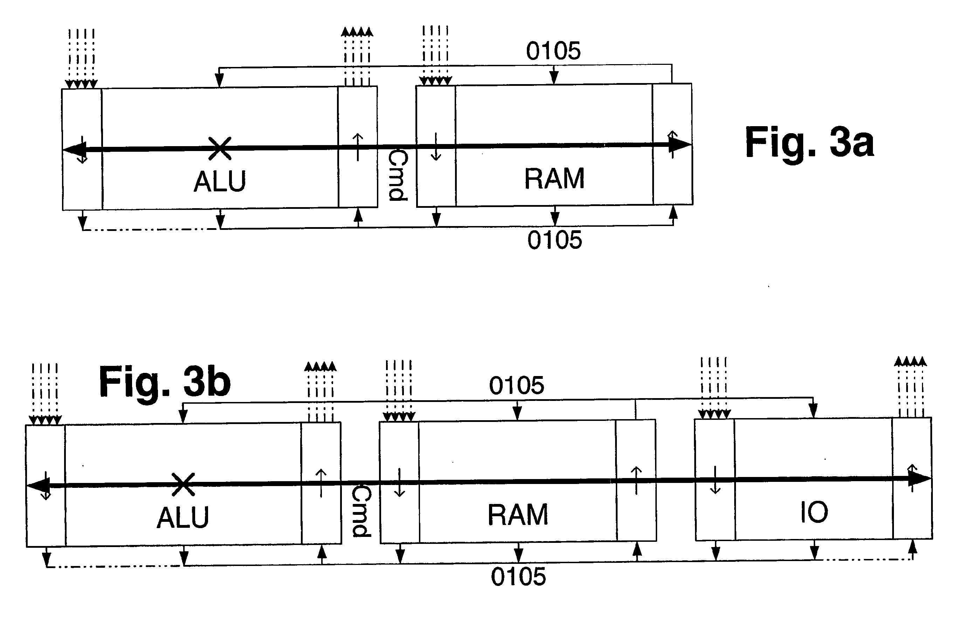

Die in Bezug auf Fig. 2 gezeigte Anordnung kann auf unterschiedliche Arten erweitert oder verändert werden. Besonders relevant sind die in Fig. 3a und 3b dargestellten Varianten.

Nach Fig. 3a ist zur Verbindung von oberen und unteren Bussen nicht nur ein Backward-Register an der RAM-PAE vorgesehen, sondern es sind auch ein Vorwärts-Register an der RAM-PAE und Vorwärts- und Rückwärts-Register an der ALU-PAE vorhanden. Diese können, wie durch die Mehrfach-Pfeile angedeutet, dazu dienen, von anderen Einheiten, wie externen Hosts, externen PeripherieGeräten wie Festplatten, Hauptspeicher und dergleichen und/oder von anderen Sequenzerstrukturen, PAEs, RAM-PAEs etc. Daten zu empfangen und an diese zu senden. Wenn ein entsprechender Anforderungsbefehl für neue Programmteile aus der Sequenzerstruktur, die durch die ALU-PAE und die RAM-PAE gebildet ist, abgesandt wird, ist es möglich, Programmblöcke in der Sequenzerstruktur abzuarbeiten, die weit größer sind als jene, die in der RAM-PAE speicherbar sind. Dies ist insbesondere bei komplexen Datenverarbeitungsaufgaben, Sprüngen über weite Bereiche, insbesondere in Unterprogramme usw. von massivem Vorteil. Eine noch weiter bevorzugte Variante ist in Fig. 3b gezeigt. Hier kommuniziert die ALU-PAE nicht nur mit einer RAM-PAE, sondern zugleich mit einer Input/Output-PAE, die dazu ausgebildet ist, eine Schnittstellenbeschaltung für die Kommunikation mit externen Bauelementen vorzusehen, wie Festplatten, anderen XPP-VPUs, fremden Prozessoren und Coprozessoren usw. Wiederum ist die ALU-PAE die Einheit, die als Master für die als "CMD" bezeichnete Steuerverbindung arbeitet und wiederum werden die Busse in Multiplex-Weise verwendet. Auch hier kann eine Übertragung von Daten von dem Bus unterhalb der Reihe in den Bus oberhalb der Reihe durch das Backward-Register erfolgen.

Die in Fig. 3b gezeigte Anordnung ermöglicht es, externe Zugriffe auf nicht in der Speicherzelle RAM-PAE abspeicherbare Informationen besonders leicht zu gestalten und ermöglicht damit eine Anpassung der Sequenzerstruktur an bestehende, herkömmliche CPU-Technologien und deren Betriebsverfahren in noch stärkerem Maße insoweit, als nun in der Eingabe-Ausgabezelle Adressübersetzungsmittel, Speicherverwaltungseinheiten (MMU-Funktionen) und dergleichen implementiert sein können. Die RAM-PAE kann hier etwa als Cache, insbesondere aber als vorgeladener Cache dienen.

Es sei darauf hingewiesen, dass mehrere Sequenzerstrukturen gleichzeitig in ein und dasselbe Feld hineinkonfiguriert werden können, dass Funktionszellen, Speicherzellen und ggf. Ein-Ausgabezellen wahlweise für Sequenzerstrukturen und/oder eine für die XPP-Technologie herkömmliche Weise konfiguriert werden können und dass es ohne weiteres möglich ist, dass eine ALU an eine andere ALU Daten ausgibt, die diese in einer Sequenzer-Weise konfigurieren und/oder zum Teil eines Zellelmentefeldes machen, mit dem eine bestimmte Konfiguration abgearbeitet wird. Auf diese Weise wird dann gegebenenfalls auch die Ladelogik entbehrlich.

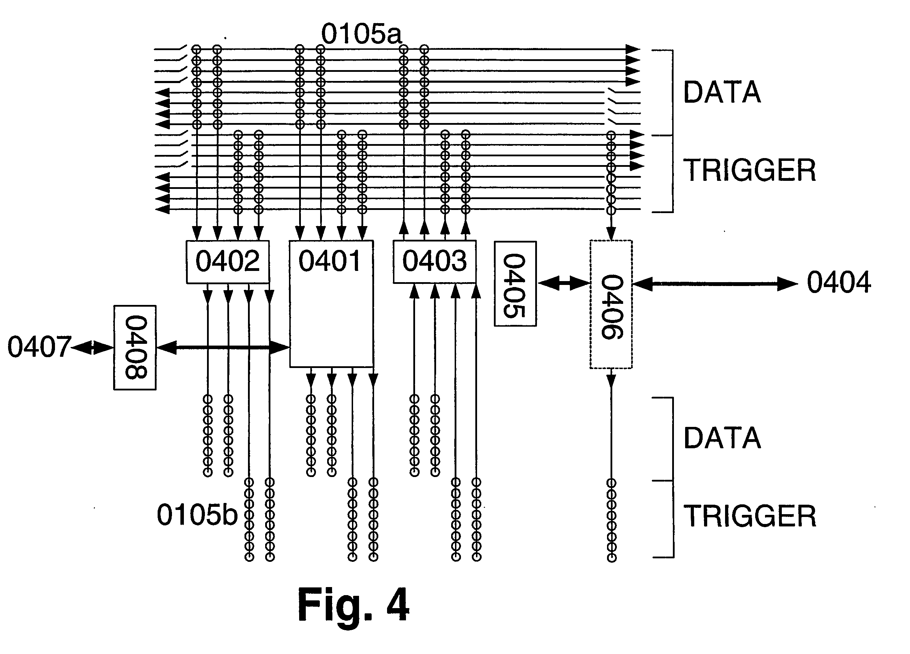

Figur 4 zeigt nun noch einmal detailliert den Grundaufbau einer PAE. Der Kern einer PAE, typischerweise bestehend aus einer oder mehreren ALUs und/oder einem Speicher und/oder FPGA-Elementen erhält Daten von dem Bussystem 0105a und überträgt die Ergebnisse der Datenverarbeitung an das Bussystem 0105b. Neben dem Kern sind die Forward-Register (FREG, 0402) und Backward-Register (BREG, 0403) angeordnet und übertragen Daten von 0105a nach 0105b (FREG) bzw. von 0105b nach 0105a (BREG).BREG und FREG können ebenfalls eine oder mehrere ALUs und/oder einem Speicher und/oder FPGA-Elementen enthalten. Bevorzugt sind diese jedoch in ihrem Funktionsumfang gegenüber dem Kern (0401) eingeschränkt.

Die Bussysteme 0105a und 0105b sind bevorzugt jeweils in ein Bussystem zur Übertragung von Daten (DATA) und ein Bussystem zur Übertragung von Trigger, also Statussignalen (TRIGGER) unterteilt.
Die Konfiguration der PAE erfolgt durch eine übergeordnete Konfigurationseinheit (z. B. eine CT), die über einen Konfigurationsbus (0404) Konfigurationsworte an die PAE überträgt. Diese werden in Konfigurationsregistern gespeichert (0405). Optional kann ein Konfigurationsstack (0406) nach PACT17 und wie nachfolgend beschrieben zwischen den Konfigurationsbus (0404) und die Konfigurationsregister (0405) zwischengeschaltet sein.
Der Konfigurationsstack kann Daten und/oder bevorzugt Trigger von den Bussystemen 0105(a/b) empfangen und an diese senden.

Die PAE kann optional einen Anschluss an ein dediziertes Bussystem (IO-Channel, 0407) aufweisen. Zur Steuerung des Bussystems ist dem Kern (0401) eine zusätzliche Bussteuereinheit (0408) zugeschaltet. Über den IO-Channel kan die PAE direkt mit einem globalen, ggf. auch externen Speicher und/oder Peripherie und/oder anderen PAEs Daten übertragen.

In einer bevorzugten Ausgestaltung besteht die Möglichkeit Konstanten für die Datenverarbeitung über 0404 zu setzen. In einer weiteren Ausgestaltung kann eine Konfigurationseinheit (z. B. CT) Daten aus den Arbeitsregistern auslesen.

Figur 4 kann auch eine entsprechende RAM-PAE darstellen. Über 0404 kann dann von einer CT die Vernetzung und Funktion des RAMs eingestellt werden. Die Funktion umfasst beispielsweise folgende Funktionen oder Kombinationen daraus:
1. Random Access
2. FIFO
3. Stack
4. Cache
5. Page Memory für MMUs

Desweiteren kann in einer bevorzugten Ausführung der Speicher mit Daten von der CT vorgeladen werden (z. B. Konstanten, Lookup-Tabellen, etc.). Ebenfalls kann die CT in einer erweiterten Ausführung Daten (z. B. zum Debuggen oder für Taskwechsel) aus dem Speicher über 0404 zurücklesen.
In einer bevorzugten Ausführung kann eine RAM-PAE mehrere Anschlüsse an das Bussystem 0105 aufweisen (dual-port oder multi-port), wodurch mehrere Datentransfers gleichzeitig durchgeführt werden können.
In einer weiteren Ausführung kann die RAM-PAE einen dedizierten Anschluss an einen externen Bus aufweisen.
RAM-PAEs können derart zusammengeschaltet werden, dass aus mehreren (n) RAM-PAEs ein n-fach größerer Speicher entsteht.

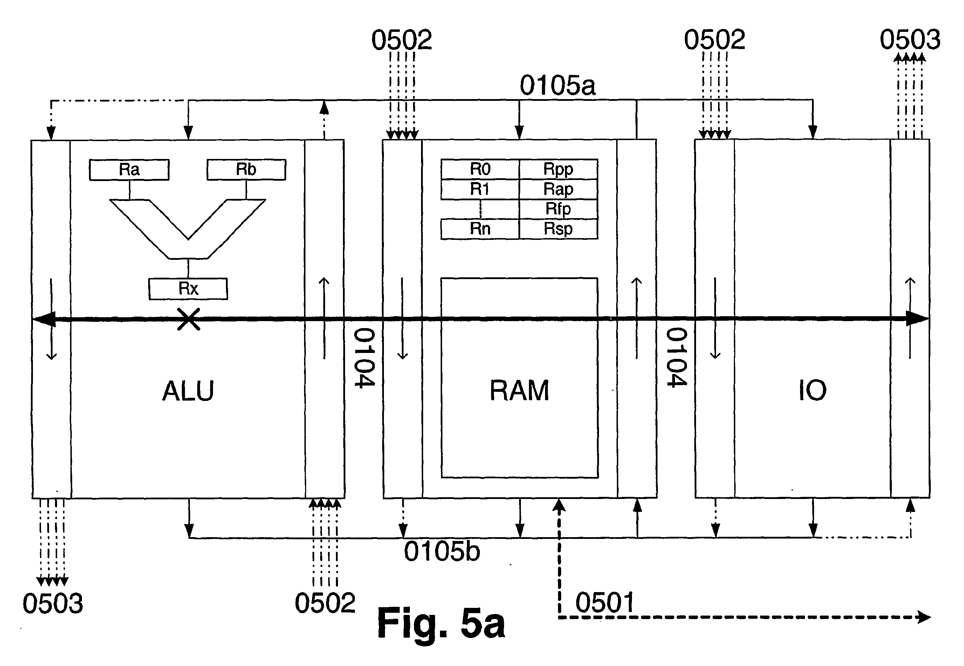

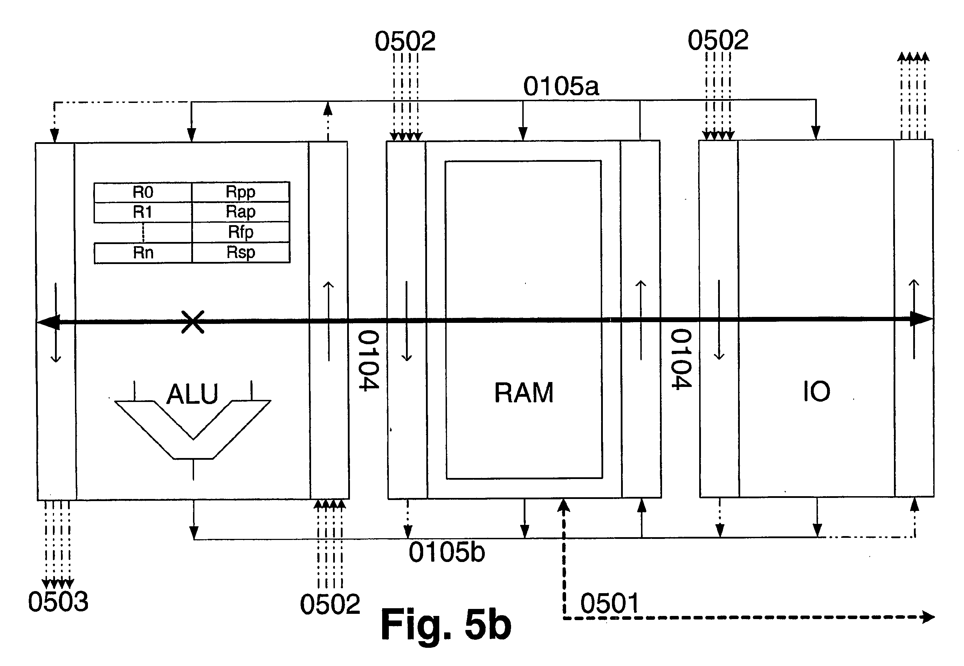

Figur 5 zeigt eine Ausgestaltungsvariante des Sequenzers nach Figur 3b. Die ALU-PAE weist einen minimalen Registersatz Ra, Rb, Rx auf, der in diesem Beispiel lediglich zur Pufferung der Operanden und Ergebnisse dient. Der eigentliche Registersatz liegt in der RAM-PAE (R0..Rn) . Ebenfalls innerhalb der RAM-PAE liegen die Register
- Rpp:: Programm Pointer
- Rap:: Adress Pointer für Datenzugriffe (z.B. Heap)
- Rsp:: Stack Pointer für Stackzugriffe
- Rfp:: Frame Pointer zur Sicherung des Stack Pointers bei Unterprogrammaufrufen
Der CMD-Bus wird von der ALU-PAE gesteuert und überträgt die Ablaufinformation des Sequenzers an sämtliche beteiligten PAEs, sowie FREG und BREG zur Steuerung der Datenübertragung auf den Bussystemen (0105a, 0105b).
Die RAM-PAE weist in diesem Ausgestaltungsbeispiel einen dedizierten IO-Cannel (0501) auf, über welchen sie ggf. auch selbstständig (z. B. über DMA-Kontroller) Daten von oder zu peripheren Einheiten (z.B. IO, Speicher) übertragen kann. Es soll nochmals darauf hingewiesen werden, dass auch die ALU-PAEs einen solchen dedizierten Anschluß aufweisen können oder in einer weiteren Ausgestaltungsvariante die ALU-PAE anstatt der RAM-PAE einen derartigen Anschluss besitzen könnte.
Optional sind eine oder mehrere Datenaustauschvorrichtungen mit den restlichen Zellen des PAs (z. B. Funktions- und/oder Speicherzellen) implementiert. Über Eingabe-Ports (0502) können Daten von dem PA gelesen werden und über Ausgabe-Ports (0503) können die Daten ausgetauscht werden. Die Port werden beispielsweise über die CMD-Steuerkommandos read_port und write_port angesteuert und schalten die Bussysteme entsprechend. Mit den Steuerkommandos wird ein Selektor übertragen, der anzeigt welcher Port durch das Steuerkommando angesprochen ist.
Die vorliegend offenbarte Lage der Register innerhalb der RAM-PAE ist ungewöhnlich, bietet aber zwei erhebliche Vorteile:
a) Speicherzellen können für die Register verwendet werden.
b) Die Pointer liegen direkt in der RAM-PAE, wodurch Datenzugriffe auf den
Speicher besonders schnell werden. Desweiteren ist für sämtliche SpeicherZugriffe nur ein Bus auf dem Bussystem 0105 notwendig, wobei der normalerweise zusätzlich erforderliche Adressbus entfällt, da die Adressen lokal in der RAM-PAE durch die Pointer gegeben sind.
Diese Anordnung wird daher als vom Anmelder bevorzugt typisch implementiert.

Für sämtliche Datentransfers ist die Lage der Register zu beachten. Um lediglich möglichst einfache Befehle im Sequenzer zu implementieren, sind daher besondere Befehle zur Registermanipulation vorgesehen:
moveta Rrr: Lädt das Register Rrr (rr ∈ {1..n, sp, pp,
   fp, ap}) nach Ra
movetb Rrr: Lädt das Register Rrr nach Rb
movefx Rrr: Schreibt das Register Rx nach Rrr

Um den Datenflußcharacter der ALU zu wahren, ist bevorzugt ein weiterer besonderer OpCode implementiert:
feed: Überträgt Daten von Ra/Rb nach Rx, ohne diese
   zu manipulieren.

Nachfolgende Beispiele verdeutlichen die Arbeitsweise des Sequenzers: Addiere Register R1 zu Register R2 und schreibe Ergebnis nach Register R2:
moveta R1; movetb R2; add; movefx R2;

Schiebe Register R4 nach Register R7:
moveta R4; feed; movefx R7;

Übertrage R5 auf Stack:
moveta R5; feed; push;

Anmerkung: push überträgt Daten des Registers Rx an die Speicherstelle auf die Rsp zeigt und dekrementiert (bzw. inkermentiert) Rsp.

Setze Adresspointer Rap mit der indirekten Adresse R4 addiert zu R7:
moveta R4; movetb R7; add; movefx Ra;

Lade Daten aus Speicherstelle Rap nach R1:
load; feed; movefx R1;

Anmerkung: load überträgt Daten von der Speicherstelle auf die Rap zeigt nach Ra.

Die Datenregister werden bevorzugt innerhalb des Speichers der RAM-PAE angeordnet, z. B. von Adresse 0x0 bis 0x7 (für n = 7). Register werden beispielsweise angesprochen, indem beim Auftreten des entsprechenden CMD Steuerkommandos (z. B. read_reg, write_reg) die Registernummer mitübertragen wird, diese als Adresse an den Speicher übertragen wird und die höherwertigen Adressbits mit 0 gefüllt werden. Die Startadresse für den Code wäre dann beispielsweise 0x8 (also 0x(n+1)), worauf dann der Programmpointer Rpp nach einem Reset zeigen würde.

Die Adresszeiger werden bevorzugt nicht im Speicher abgelegt, sondern in gesondert implementierten Registern untergebracht, um eine schnelle und einfache Aufschaltung auf die Adressleitungen des Speichers zu ermöglichen.

In Figur 5b ist eine Architekturvariante mit Registersatz innerhalb der ALU-PAE dargestellt. Die umständlichen Registertransferoperationen entfallen damit, wodurch diese Variante auch erheblich schneller in der Datenverarbeitung ist. Allerdings ist sind die Hardwarekosten höher, da der Registersatz zusätzlich implementiert werden muss und für sämtliche Speicherzugriffe die Adressen von der ALU-PAE an die RAM-PAE übertragen werden müssen.

### RAMoverPAE

Die nachfolgend beschriebene besondere Ausgestaltung einer ALU-PAE (im Folgenden mit ROP-PAE bezeichnet) eignet sich besonders für VPUs, deren Applikation irreguläre sequentielle Codes aufweisen, die auf kleine Datenmengen in einer weitgehend ungeordneten Reihenfolge zugreifen.

Zur Realisierung dieser Aufgabe wird in eine ALU-PAE Speicher integriert (Integrated RAM = IRAM), auf den die ALU direkten Schreib/Lese-Zugriff besitzt. Die ALU ist entsprechend um eine Adressverwaltungsschaltung erweitert. Insbesondere können daher PAEs nach dem vorstehend beschriebenen Aufbau (IPAEs) verwendet werden, wobei der separate RRAM ggf. entfällt und durch den integrierten IRAM ersetzt ist oder der RRAM zusätzlich zum internen IRAM quasi als Speichererweiterung vorgesehen ist.

In einer besonders bevorzugten Ausführung ist ein Sequenzer bzw. Microcontroller mit einem bevorzugt limitierten aber bevorzugt vollständigen Befehlssatz (vgl. ARC Microprocessor) in der ROP-PAE integriert, der die Verarbeitung sequentieller Codes ermöglicht. In einer weiteren Ausführungsvariante kann der Sequenzer in seiner Funktion und seinem Ablaufverhalten auch konfigurierbar ausgestaltet sein (wie beispielsweise nach dem Stand der Technik bekannt, z.B. durch EPS448 von Altera [ALTERA Data Book 1993]). Der Sequenzer/Microcontroller kann auf Zustände (z.B. Statussignale, Ereignisse) in der ROP-PAE und/oder auf Zustände (z. B. auch Trigger) anderer PAEs die mit der ROP-PAE verbunden sind (z.B. über ein Bussystem) reagieren.
Der Sequenzer/Microcontroller liest seine Programmbefehle aus dem IRAM.

Die Zugriffe auf das Bussystem des Arrays (PA) entsprechen den üblichen PAEs, ebenso die Generierung, der Empfang und die Weiterleitung von Statussignalen (Trigger nach PACT08). Mehrere Busanbindungen für Daten- und Triggereingänge und für Daten- und Triggerausgänge können vorgesehen sein.
Die ROP-PAE kann Operanden vom Bus lesen ggf. mehrzyklisch Verarbeiten und das Ergebnis wieder auf den Bus schreiben.
In die ROP-PAE ist in einer bevorzugten Ausgestaltung ein Registersatz integriert. Der Registersatz kann in einer besonderen Ausgestaltung ähnlich des Registersatzes von Transputern als Stack organisiert. Dadurch kann der Registersatz besonders klein und hardwaretechnisch effizient realisiert werden (typischerweise reichen 3 Register A, B und C aus). Weiterhin ist aus der Transputertechnologie bekannt, dass Compiler effizient mit einem derartigen hardwaretechnisch kostengünstigen Registersatz arbeiten können. Ebenfalls kann der Registersatz optional im RRAM liegen.

In einer bevorzugten Ausführung besitzt die ROP-PAE direkten Anschluss (EXTBUS) an ein externes RAM und/oder externe IO. Es können applikationsabhängig mehrere EXTBUS vorgesehen sein. In einer dabei besonders bevorzugten Ausgestaltung kann der EXTBUS über eine, ggf. dedizierte, Verbindung des PAE-Bussystems an eine Interface-Baugruppe (IOAG) wie beispielsweise aus DE 196 54 595.1-53 oder DE 102 06 653.1 bekannt realisiert sein. Die Ansteuerung von Speicher (RAM) und/oder Peripherie (IO) erfolgt dabei durch die Interface-Baugruppe.

In einer bevorzugten Ausführung kann die ROP-PAE und dabei bevorzugt das IRAM direkt selbständig Adressen für das externe RAM und/oder die externe IO und/oder andere interne Speicher (RRAM/IRAM) generieren und externe oder interne Datentransfers selbständig steuern. Diese Funktion kann durch eigenständige im RRAM implementierte Adressgeneratoren realisiert werden. Beispielsweise eignen sich DMA-Kontroller besonders für diese Aufgabe, indem sie blockweise Daten zwischen den Speichern kopieren. Der Adressraum der zu lesenden Daten und der Zieladressraum wird entsprechend gesetzt und der Kopiervorgang wird gestartet. Das Setzen kann durch die IPAE erfolgen.
In einer hardwaremäßig aufwendigeren Lösung kann die Funktion durch eine implementierte MemoryManagementUnit (MMU) realisiert sein. Die Funktionsweise ist durch den Stand der Technik definiert und bekannt. Zusammengefasst arbeitet eine MMU wie folgt:
Der von der MMU verwaltete RRAM Speicher ist in mehrere Seiten (Pages) aufgeteilt. Jede Page enthält Daten eines virtuellen Speicherraumes innerhalb eines externen Speichers. Beispielsweise können die hexadezimalen RRAM-Adressen 0x0a00..0x0aff Daten des externen Speichers an den Adressen 0xbd13200..0xbd132ff enthalten. Zur Verwaltung der Adressumsetzung wird eine Adressübersetzungseinheit verwendet, die gewöhnlicherweise durch Lookup-Tabellen realisiert ist. Aufgabe einer MMU ist es insbesondere einen großen Speicherraum auf einen sehr viel Kleineren (in diesem Fall der RRAM) zu übersetzen. Dies geschieht derart, dass Seiten je nach Bedarf von dem großen Speicherraum in den Kleinen kopiert werden. Sobald eine Seite nicht mehr benötigt wird kann diese gelöscht und/oder überschrieben werden. Wenn die Daten auf der Seite verändert wurden, wird die Seite bevorzugt vor dem Löschen/Überschreiben in den großen Speicherraum zurückgeschrieben.
Die Adressumsetzungseinheit arbeitet derart, dass ein höherwertiger Teil der physikalischen Adresse (also die Adresse der Seite) in dem Lookup-Speicher abgelegt wird und auf die entsprechenden Daten der Seite im RRAM zeigt, sobald die Seite innerhalb des kleinen Speichers (RRAM) verfügbar ist. Dadurch kann ein Zugriff auf die Seite erfolgen. Fehlt die Seite im RRAM ist auch keine Referenz eingetragen. In diesem Fall muss die Seite erst von dem großen (externen) Speicherraum in den RRAM kopiert werden. Hierzu kann eine andere bevorzugt aktuell nicht verwendete Seite gemäß dem vorstehenden Ablauf überschrieben werden.
Das Kopieren kann dabei automatisiert, also ohne wesentliche Beteiligung
durch den Sequenzer erfolgen, indem von der MMU ein DMA-Kontroller angesteuert wird. Diesem werden die entsprechenden Seitenadressen im RRAM und externen RAM, sowie die Seitengröße durch die MMU zur Verfügung gestellt (z. B. in Register eingetragen).

Die ROP-PAE besitzt einen Anschluss an eine Konfigurationseinheit die die ROP-PAE entsprechend des üblichen Verfahrens konfiguriert und rekonfiguriert. In einer bevorzugten Ausführung kann die CT auf den IRAM lesend und/oder schreibend zugreifen, um Daten und/oder Code für den Sequenzer im IRAM zu verwalten.

In einer besonders bevorzugten Ausgestaltung kann die ROP-PAE selbständig Code für den Sequenzer über das PA Bussystem und/oder den EXTBUS aus dem externen RAM laden.

In einer bevorzugten Ausführung ist der IRAM in mehrere Segmente unterteilt, die in unterschiedlichen Adressbereichen liegen. Die Segmente können beispielsweise für einige der folgenden Funktionen aufgeteilt sein: Sequenzerspeicher, Stack (z.B. für Registersatz), Datenspeicher, Heap, IO-Puffer, Puffer zu externem RAM bzw. Cache, Lookuptabellen, Konfigurationen für PAEs und/oder Busse, der Registersatz der ROP-PAE.
Je nach Funktion können dazu folgende Ansteuermechanismen vorgesehen sein:
Sequenzer-/Code-Speicher: Programmzeiger auf die entsprechenden Speicherstellen (Rpp).
Stack: Stackzeiger auf die oberste Speicherstelle des Stack (Rsp), gegebenenfalls auch ein FramePointer (Rfp), wie er nach dem Stand der Technik (z.B. Intel Pentium) bekannt ist.
Konfigurationen für PAEs und/oder Busse: Hierauf kann ein Zeiger innerhalb der CT und/oder - implementierungsabhängig ein Zeiger innerhalb der Konfigurationssteuerung der PAE zeigen.
Registersatz der IPAE: Sollte der Registersatz der PAE im Speicher untergebracht sein, wird dieser direkt durch die PAE mit bevorzugt hardwaretechnisch fest vorgegebenen adressiert.
Die restlichen Speicherbereiche, wie Datenspeicher, Puffer, Tabellen werden typischerweise durch den Compiler oder Programmierer aufgebaut. Die Adressierung dieser Bereich erfolgt durch das auszuführende Programm und/oder Betriebssystems und wird innerhalb der Programmes und/oder Betriebssystems, ggf. unter Zuhilfenahme der Registersatzes und der ALU des Sequenzers, berechnet.
In einer möglichen Variante ist der IRAM komplett oder teilweise, wie bei den IPAEs beschrieben, durch RAM-PAEs außerhalb der ROP-PAE realisiert. Für ggf. unterschiedliche Segmente können unterschiedliche RAM-PAEs verwendet werden.

In einer bevorzugten Ausgestaltung können einige oder alle Segmente als aktive Speicher ausgestaltet sein, also eine DMA und/oder MMU besitzen und somit selbständig Daten in oder aus den ihrem Speicher von oder nach anderen Speichern oder Peripheriegeräten kopieren. Insbesondere können sie die Funktionen der Speicher aus der DE 199 26 538.0 aufweisen, z. B. FIFO, Stack, Random Access, Cache, etc., wobei für jedes Segment einzeln die Funktion konfigurierbar und/oder durch den Sequenzer programmierbar ist.

In einer Ausführung kann der IRAM als Multi-Port Speicher ausgeführt sein. Dieser kann den ggf. auch gleichzeitigen Schreib- und/oder Lese-Zugriff durch mehrere Speicherzugriffseinheiten auf den Speicherinhalt ermöglichen. Speicherzugriffseinheiten können beispielsweise externe und/oder interne Peripherie, Prozessoren, andere PAEs sein.

In einer besonderen Ausführung kann die ROP-PAE als lokale und ggf. auch globale Konfigurationseinheit ähnlich einer CT für ROP-PAEs in der Umgebung arbeiten oder unter anderem diese Funktion mit erfüllen. Bevorzugt arbeitet die ROP-PAE nach dem aus der DE 196 54 846.2-53 bekannten Verfahren bei der Verwendung als lokal Konfigurationseinheit. Wird die ROP-PAE als globale Konfigurationseinheit verwendet, oder hat sie sehr viele lokale PAEs zu konfigurieren, wird bevorzugt das Verfahren nach der DE 196 54 593.5-53 verwendet, das eine FILMO-Funktionalität aufweist und daher sehr viele auch unabhängige Konfigurationen verwalten kann. Die ROP-PAE adressiert gesteuert durch den Sequenzer/Microcontroller Konfigurationen im IRAM und konfiguriert diese an PAEs und/oder sich selbst und/oder bestimmt den Ablauf des Sequenzers/Microcontrollers. Bevorzugt findet hierbei eine Synchronisation mit einer übergeordneten Konfigurationseinheit (z. B. CT oder andere PAEs) ähnlich der bekannten Inter-CT-Protokolle (DE 198 07 872.2, DE 100 28 397.7 , DE 199 26 538.0) statt. Die ROP-PAE kann Konfigurationen über eines der EXTRAM-Interfaces selbst laden und/oder Konfigurationen von einer übergeordneten Konfigurationseinheit über das CT Interface anfordern. Die Funktionsweise kann ähnlich der Rekonfigurationseinheit in der DE 196 54 846.2-53 sein.

Zusammengefasst ist der prinzipielle Arbeitsweise einer ROP-PAE ähnlich eines Microcontrollersystems, dessen Busanbindung und/oder dessen Datentransfers und/oder dessen Programmablauf einem VPU-System entspricht. Mit anderen Worten handelt es sich um eine Multiprozessoranordnung, deren Bussystem auf dem Prinzip der VPU-Architektur beruht. Die einzelnen Prozessoren werden von bevorzugt von einer übergeordneten Steuereinheit (CT) verwaltet. Die Datenübertragung ist selbstsynchronisierend über die RDY/ACK Protokolle der Bussysteme. Als ein besonders wesentlicher Aspekt wird der gemeinsame Prozessorstatus angesehen, der über das Triggerbussystem repräsentiert wird und den Status einer Menge von Prozessoren repräsentiert, der unter den Prozessoren zur Ablaufsteuerung ausgetauscht werden muss. Hierzu wird verwiesen auf DE 197 04 728.9, DE 101 39 170.6 und DE 101 29 237.6-53.

Ebenfalls seien erwähnt ROP-PAEs, die zusätzlich zu ihrem Anschluss an die internen Bussysteme des Arrays aus PAEs einen dedizierten Anschluss (IO-Channel) an ein überregionales Bussystem aufweisen, das insbesondere Daten über lange Strecken innerhalb des Arrays überträgt und/oder insbesondere einen direkten Anschluss an die Peripherie aufweist. Der Anschluss an die Peripherie kann dabei direkt erfolgen, indem z. B. das Bussystem bereits dem peripheren Protokoll entspricht oder über entsprechende Protokollwandler zur Umsetzung des Protokolls erfolgen. Das dedizierte Bussystem kann dabei bereits einem Industriestandard entsprechen, z. B. PCI, RapidIO, Firewire, USB, Ethernet, RAMBUS, DDR-RAM, etc. um somit einen einfachen und unaufwendigen Anschluss der peripheren Geräte zu ermöglichen. Gegebenenfalls können auch in zwischengeschalteten IOAGs (vgl. DE 196 54 595.1-53) Protokollkonvertierungen derart durchgeführt werden, dass ein internes vereinfachtes und ggf. proprietäres Busprotokoll auf ein oder mehrere komplexere externe Standardprotokolle übersetzt werden.

Es soll besonders darauf hingewiesen werden, dass unter Peripherie auch Speicher verstanden werden, wie bei den bereits aufgezählten Busprotokollen verdeutlicht wird.
Ebenfalls ist möglich, dass PAEs auch mehrere Anschlüsse an dedizierte Bussysteme aufweisen können.
Desweiteren sind anwendungsabhängig auch Architekturen sinnvoll, bei denen nur eine Teilmenge der PAEs Anschlüsse an ein dediziertes Bussystem aufweist, oder unterschiedliche PAEs mit einer unterschiedlichen Anzahl von Anschlüssen an ggf. auch unterschiedliche dedizierte Bussysteme aufweisen.

Die beschriebene Struktur kann durch erweiterte und verbesserte Halbleiterherstellungsverfahren und -strukturen besonders leistungsfähig implementiert werden, indem der Speicher auf dem physikalischen Chip räumlich über oder unter den logischen Funktionen (ALU, Steuerung, Busse, etc.) der PAE angeordnet wird.
Dazu wird über der nach dem Stand der Technik bekannten ersten Halbleiterstruktur (z. B. Silizium) und der damit aufgebauten Transistorstrukturen eine oder mehrere weitere Ebenen von Halbleiterstrukturen (Transistorstrukturen) aufgebracht, die für zusätzliche Funktionen genutzt werden können. Beispielsweise können in einer ersten Ebene die Logik und Gatter der PAE-Funktion und in einer weiteren zusätzlichen Ebene die Speicherfunktionen implementiert werden.
In einer bevorzugten Bauweise werden die einzelnen Halbleiterschichten durch eine Isolierschicht voneinander getrennt. Die Isolierschicht kann Durchkontaktierungen (Vias) aufweisen, um Signale zwischen den einzelnen Halbleiterschichten zu übertragen.
Die Verdrahtungsstruktur kann je nach Anwendung unterschiedlich implementiert sein. Beispielsweise können direkt über jeder Halbleiterschicht Verdrahtungsebenen und/oder eine globale Verdrahtungsebene, die allen Halbleiterschichten zugeordnet ist vorgesehen sein.

Um eine wirtschaftliche Ausbeute zu erlangen, muss sichergestellt sein, dass die Gesamtschaltung, also alle Halbleiterstrukturebenen zusammen, eine hinreichend hohe Ausbeute erreichen. Desweiteren ist zu beachten, dass der Stromverbrauch, also die Verlustleistung, aller Halbleiterstrukturebenen zusammen innerhalb eines akzeptablen Bereiches bleibt, der zu keiner Überhitzung und dem damit verbundenen Ausfall der Schaltung führt.
Es kann durch eine geeignete Zusammenstellung der Funktionseinheiten der einzelnen Halbleiterebenen den entsprechenden Anforderungen entsprochen werden. Beispielsweise ist für die vorgeschlagene Architektur eine Ebene von Logikhalbleiterstrukturen und eine weitere Ebene von Speicherhalbleiterstrukturen vorzusehen, die für diese Anforderungen geeignet sind. Während die irregularen und wenig redundanten Logikhalbleiterstrukturen eine vergleichsweise hohe Fehlerquote mit hoher Verlustleistung aufweisen, können Speicherhalbleiterstrukturen vergleichsweise redundant mit niederer Fehlerquote und durch geeignete Speicherverfahren (z. B. DRAM) auch mit geringer Verlustleistung implementiert werden. Es wird explizit darauf hingewiesen, dass es möglich ist, Felder vorzusehen, bei welchen nicht alle Speicherplätze und/oder alle Logikhalbleiterstrukturen voll funktional sind; es ist lediglich erforderlich, Mindestanforderungen sicherzustellen und/oder eine ordnungsgemäße Verwaltung. Redundanzen sind bevorzugt für beide Strukturen separat zu betrachten.

Die Aufbringung der mehrfach übereinander liegenden Halbleiterstrukturen kann nach unterschiedlichen Verfahren erfolgen. Neben dem bereits beschriebenen Verfahren des Aufbringens einer weiteren Halbleiterebene über einer Isolierschicht, was z. B. durch Aufdampfen und/oder Aufkristallisieren erfolgen kann, sind auch thermische oder mechanische Verbindungen möglich, indem z. B. die aufzubringende Siliziumstruktur aufgelötet oder aufgeklebt wird. Zum Auflöten eigenen sich beispielsweise auch Verfahren, die aus den Technologien zum Verbinden von Halbleiterchips mit Gehäusen bekannt sind. Dabei handelt es sich beispielsweise um Reflow-Lötung oder Thermokompression. Prinzipiell sind auch die einfache mechanische Verbindungsmethoden möglich, wobei sodann die Verdrahtung beispielsweise per Wirebond erfolgen kann. Voraussetzung hierfür ist, dass die Siliziumstrukturen unterschiedliche Größen aufweisen, sodass die Drähte von einer Siliziumstrukturoberfläche zur nächsten gedrahtet werden können und, dass die Anzahl der Verbindungen vergleichsweise gering ist, damit diese mittels Wirebond noch realisiert werden können.

Zur Optimierung der Ausbeute kann insbesondere das Redundanzverfahren nach DE 197 57 200.6-33 angewendet werden. Es soll erwähnt sein, dass das Verfahren nach DE 197 57 200.6-33 für alle PAEs vorgesehen werden kann, also z. B. für ALU-PAEs genauso wie für RAM-PAEs. Mit anderen Worten können für sämtliche PAEs das in DE 197 57 200.6-33 beschriebene Redundanzverfahren angewendet werden. Auch die dortigen Testverfahren sind implementierbar.
Für PAEs mit hauptsächlich feingranularen Strukturen, also z. B. Speicher (RAM-PAEs) oder FPGAs ist es von Vorteil, diese feingranularen Strukturen mit einer entsprechend feingranularen Redundanz zu versehen, d. h. nicht oder nicht nur die RAM-PAE oder eine eine FPGA-Struktur aufweisende PAE mit einer redundanten PAE zu versehen, sondern die feingranulare Struktur selbst mit Redundanz zu versehen. Das heißt, dass beispielsweise den Speicherzellen (bzw. FPGA-Zellen) redundante Speicherzellen (bzw. FPGA-Zellen) zugeordnet werden. Die Verbindungen (Leitungen, Busse, etc.) zwischen den jeweiligen Zellen sind dann entsprechend an die Erfordernisse einer redundanten Struktur angepasst. Der Aufbau redundanter Strukturen für feingranulare Zellen, wie z. B. Speicher oder FPGAs ist durch den Stand der Technik bereits bekannt. Für das Verständnis von Ausgestaltungsdetails wird auf diesen verwiesen.

Die Verlustleistung lässt sich nach den Verfahren von DE 196 51 075.9-53 und DE 101 35 210.7-53 erheblich minimieren, wodurch sehr hohe Integrationsdichten ermöglicht werden.

Es soll darauf hingewiesen werden, dass die Anzahl der übereinanderliegenden Halbleitersturkturen keineswegs auf zwei begrenzt ist. Mit fortschreitender technischer Entwicklung und Optimierung ist eine steigende, auch sehr große Zahl von übereinanderliegenden Ebenen realisierbar.

Die Ebenenaufteilung muß dabei, weder bei einer zweilagigen, noch bei einer mehrlagigen Struktur auf eine ALU-Speicher-aufteilung limitiert sein. Bereits bei zweilagigen Strukturen kann es sinnvoll sein den Speicher zusammen mit den ALUs in eine Lage zu legen und die andere Lage komplett für die Bussysteme oder die Bussysteme und IO-Ansteuerungen (IOAGs) zu verwenden. Die Bussysteme können dabei über die einfache Verdrahtung hinaus bevorzugt auch die Schaltelemente (Multiplexer, Transmission-Gates, etc.) und/oder Verstärkerelemente (Treiber, etc.) und/oder Synchronisationselemente (RDY/ACK-Steuerung), die jeweils Halbleiterstrukturen zu deren Realisierung benötigen enthalten.
Desweiteren kann es sinnvoll sein, eine Ebene für die Konfigurationsspeicher und/oder Konfigurationsregister und/oder CT und deren Speicher vorzusehen.

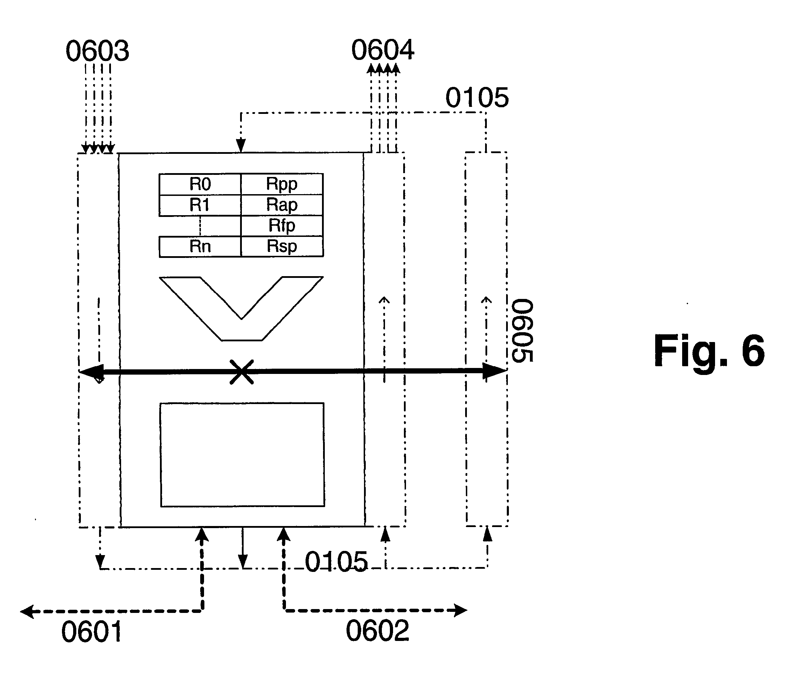

Figur 6 zeigt eine Implementierung einer ROP-PAE. Architektonisch wurde die RAM-PAE innerhalb der ALU-PAE implementiert. Der gesamte Registersatz (R0..Rn, Rpp, Rsp, Rfp, Rap) ist in der ROP-PAE untergebracht. Zugriffe auf die Register durch die ALU sind schnell und mit geringem Aufwand möglich. Adressen und Daten können direkt von der ALU an den Speicher übertragen werden, ohne ein Bussystem außerhalb der ROP-PAE wie z. B. 0105 zu benötigen. Bevorzugt weist eine ROP-PAE einen oder mehrere dedizierte IO-Channel zur Datenübertragung mit der Peripherie auf (beispielsweise 0601, 0602). Datenverbindungen zu den restlichen PAEs können wie bereits bekannt durch FREG und/oder BREG realisiert werden. Hier angedeutet durch den Leseport 0603 und Schreibport 0604.
Bevorzugt sind ROP-PAEs bereits intern als Sequenzer ausgebildet und weisen damit bereits eine interne Rückkopplung des ALU-Ausgangs auf die Register auf. Optional kann dies auch durch die Verwendung eines ROP-PAE externen Busses (z.B. 0105) und einer Rückkopplung durch ein BREG, wie bereits bekannt erfolgen (0605).

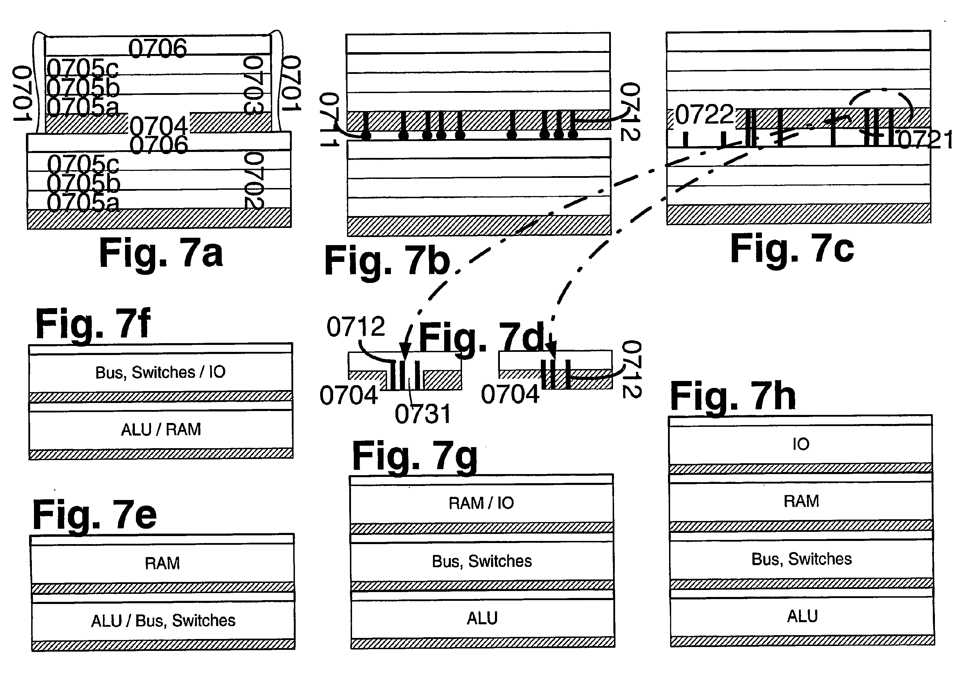

Figur 7 zeigt verschiedene Aufbauvarianten von Halbleiterstapeln: Figur 7a zeigt einen einfachen Aufbau mittels Wirebond Verbindungen zur Datenübertragung (0701), bei welchen zwei Dice (0702, 0703), also zwei Chips, aufeinander montiert sind. Ein Chip besteht stark vereinfacht aus einer Halbleiterebene zur Realisierung von Transistoren (z. B. Silizium, 0704), mehreren Metalllagen zur Realisierung von Verbindungsleitungen (z. B. Aluminium und/oder Kupfer; dargestellt sind 3 Lagen 0705a,b,c), die jeweils durch eine Isolierschicht untereinander und gegenüber 0704 elektrisch getrennt sind, und eine obere, besonders widerstandsfähigen Isolierschicht 0706. In die Isolierschichten sind Durchgangsleitungen aus Metall zur elektrischen Verbindung der einzelnen Ebenen, sogenannte Vias, eingefügt.

In Figur 7b sind die beiden Dices mittels einer Art Flip-Chip-Technologie miteinander verbunden, wobei die Übertragung von Signalen durch sogenannte Bumps nach dem Stand der Technik erfolgt. Zusätzlich zu den durch die Flip-Chip-Technologie gegebenen Möglichkeiten des Anschluss von Bumps (0711) auf der jeweils obersten Metalllage soll hier die besondere erfindungsgemäße Ausgestaltung gezeigt werden, die Bumps unterhalb der Halbleiterschicht (z.B. Silizium) zu kontaktieren. Dazu werden elektrische Verbindungen (z.B. Aluminium oder Kupfer), also Vias (0712), durch die Siliziumschicht nach unten geführt. Die Durchführung erfolgt bevorzugt durch Ätzen von entsprechenden Löchern in die Halbleiterebene. Zwischen den Verbindungen und der Halbleiterschicht wird eine Isolierung eingefügt.
Die Durchführung kann wie bei Figur 7d angedeutet entweder direkt durch die Halbleiterschicht erfolgen oder es werden, wie bevorzugt, zunächst Wannen (0731) in die Halbleiterschicht geätzt, die mit einer Isolierung gefüllt werden und in welche dann die Vias eingebracht werden.

Figur 7c zeigt die besonders bevorzugte Variante zur Realisierung von Halbleiterstapeln. Oberhalb der obersten Isolierschicht (0721) einer ersten Halbleiterstruktur, die in diesem Fall dünner ausfallen kann, wird eine weitere Halbleiterebene (0722) aufgebracht. Dazu wird die Isolierschicht (0722) zunächst durch Ätzen und/oder Schleifen möglichst eben gemacht. Das Aufbringen der Halbleiterschicht kann durch Aufdampfen, Aufziehen von Kristallen oder bevorzugt durch Aufkleben oder klebeähnlichen Verbindungen aufgebracht. Wesentlich, v.a. bei der Verwendung von Verklebungen ist, dass durch die aufgebrachte Halbleiterstruktur und das Verbindungsmaterial (z.B. Klebematerial) durchgeätzt werden kann. Die Durchätzung ist erforderlich, um Kontakte, wie in Fig. 7b beschrieben zu den Vias in der darunterliegenden Isolierschicht zu führen.
Die Durchführung der Kontakte erfolgt gemäß Figur 7d z. B. durch das Einätzen schmaler Kanäle, in die ein Isoliermaterial eingebracht wird. Danach wird in einem weiteren Schritt in das Isoliermaterial ein schmaleres Via eingefügt, indem z. B. zuvor in dem Isoliermaterial ein Loch entsprechenden Durchmessers z. B. durch Ätzen erzeugt wurde.
Das bevorzugte Verfahren sieht das Ätzen größerer Wannen (0731) vor, welche mit Isoliermaterial gefüllt werden. In die Wannen werden dann ggf. mehrere Vias (0712) wie beschrieben eingefügt.

Die Figuren 7e,f,g,h zeigen verschiedene bevorzugte funktionale Aufteilungen solcher Halbleiterstapel. Die Halbleiterebene ist jeweils schraffiert dargestellt und die Isolierschicht durch dicke Umrandung. Dazwischen liegen die Metalllage. Wie in Fig. 7g,h angedeutet ist die Konstruktion nicht auf 2 Stapel beschränkt, ebenso sind größere Stapel, z.B. mit 3,4, oder mehr Ebenen möglich.

Die mehrfache beschriebene Auftrennung zwischen Speicher und ALUs ist in Fig. 7e dargestellt.
Fig. 7f zeigt die Trennung der Bussysteme mit den notwendigen Schalteinheiten und der IO-Struktur von den ALUs und Speichern, die sich in diesem Beispiel in derselben Ebene befinden.
In Fig. 7g liegen auf der untersten Ebene die ALUs. Auf oberster Ebene liegen die Speicher und ggf. die Treiber der IO. Somit sind die Strukturen mit hoher Verlustleistung an den äußeren Rändern der Stapel untergebracht. Besonders hierfür wird Schutz beansprucht, da dadurch eine besonders optimale Wärmeabfuhr möglich ist. Die Bussysteme und deren Schalteinheiten sind in der mittleren Ebene untergebracht.
In dem Beispiel Fig. 7h sind in den mittleren Ebenen verlustleistungsarme Busse und Speicher untergebracht. ALUs und die besonders energieaufwendigen IO sind zur optimalen Wärmeabfuhr in den Rändern untergebracht.

### IOx-PAEs

Aus DE 199 26 538.0 sind Speicher (IORAM-PAEs) mit einem dedizierten Anschluss an externe Einheiten wie z.B. Peripherie und/oder Speicher bekannt. Weiterhin sind aus DE 196 54 595.1-53 und DE 102 06 653.1 dedizierte Einheiten (z. B. Interface-Baugruppen (IBG)) zum Anschluss von externen Einheiten wie z. B. Peripherie und/oder Speicher bekannt.
Beide Verfahren weisen das Problem auf, dass ein zusätzlicher Aufwand zur Datenkommunikation zwischen PAEs, insbesondere datenverarbeitender und/oder datenberechnender PAEs und externen Einheiten betrieben werden muss, indem die Daten explizit zwischen den PAEs und den IBGs und/oder IORAM-PAEs übertragen werden müssen.

Es wird nunmehr hierzu vorgeschlagen und wie bereits vorstehend mehrfach erwähnt für beliebige PAEs, insbesondere jedoch für datenverarbeitende und/oder datenberechnende PAEs (z. B. ALU-PAEs nach DE 196 51 075.9-53, IPAEs, ROP-PAEs) und datenspeichernde PAEs (RAM-PAEs nach DE 100 50 442.6) einen oder mehrere dedizierten Anschlüsse (IO-Channel) an externe Einheiten wie z. B. Peripherie und/oder Speicher vorzusehen. Dadurch ist eine direkte Kommunikationsmöglichkeit der PAEs, die nachfolgend IOx-PAEs genannt werden, und externen Einheiten gegeben. Der Vorteil dieser Architektur liegt darin, dass die Verbindung des Arrays aus PAEs (PA) mit der Peripherie (externem Speicher und/oder IO-Einheiten) erheblich effizienter aufgebaut werden kann. Die bestehenden konfigurierbaren Bussysteme der PAEs untereinander (BUS) müssen nicht mit den IO-Datentransfers belastet werden. Desweiteren kann bei einer entsprechenden Ausgestaltung des IO-Channel die Adressierung der Daten für oder einzelne PAEs sehr viel einfacher durchgeführt werden, als dies mittels des BUS möglich wäre.
Dies kann bevorzugt dadurch realisiert sein, dass jede an einen IO-Channel angeschlossene Einheit eine eigene eindeutige Adresse besitzt. Mittels dieser Adresse kann jede Einheit explizit und einfach angesprochen werden, indem die Adresse über den IO-Channel übertragen wird und jede Einheit diese Adresse mit ihrer eigenen vergleicht. Wenn die Adressen übereinstimmen, ist die Einheit adressiert und die Daten sind für diese Einheit bestimmt.
Bevorzugt kann jede Einheit nicht nur die Zieladresse, also die Adresse der Einheit für die die Daten bestimmt sind, sondern auch ihre eigene Adresse übertragen, um eine Identifikation des Senders zu ermöglichen.

Besonders effizient kann das Vorsehen von IO-Channels für nur eine Teilmenge aller PAEs sein. Beispielsweise bietet es sich an, nur Streifen von PAEs mit IO-Channel-Erweiterung innerhalb einer Anordnung von PAEs (PAE-Array, PA) vorzusehen. Dadurch wird eine verbesserte Flächen- und Kosteneffizienz gegenüber der Implementierung der IO-Channel-Erweiterung in alle PAEs erreicht.

PAEs, die besonders hohe Kommunikationsanforderungen aufweisen, können applikationsabhängig auch an mehrere IO-Channel angeschlossen sein.

Die dedizieren IO-Channels können dabei auf unterschiedlichen Bussystemen aufgebaut sein, z. B. insbesondere nach DE 197 04 742.4 oder als paralleles Standardbussystem wie Rapid-IO, PCI, AMBA oder serielles Standardbussystem wie USB, Firewire, Ethernet.

Besonders leistungsfähig kann die Implementierung von IO-Channels in PAEs dann sein, wenn diese nicht direkt an die externen Einheiten geführt sind, sondern zunächst an eine IO-Verwaltungseinheit (IOAG), die ähnlich dem Protokollkonverter nach DE 102 06 653.1 oder der IOAG nach DE 196 54 595.1-53 aufgebaut sein kann. Der Vorzug liegt darin, dass ein einfaches internes Busprotokoll zur Steuerung der IO-Channels verwendet werden kann. Ebenso wird nur eine geringe "Intelligenz" in jeder einen IO-Channel aufweisenden PAE benötigt, wodurch die PAEs jeweils flächenmäßig klein und unaufwendig zu programmieren sind.
Die eigentliche Verwaltung und Ansteuerung der externen Einheiten wird in den IOAGs durchgeführt, die durchaus größer und aufwendiger ausgestaltet sein können.

Die IOAGs können zur Erfüllung ihrer Aufgabe selbst eigene Sequenzer und/oder Mikrokontroller und ggf. auch eigenen Speicher aufweisen. Insbesondere kann die IOAG auch Speichermanagementeinheiten und Adressübersetzungseinheiten aufweisen. Je nach Applikation können Interruptkontroller wie z. B. nach dem Stand der Technik bekannte (i8259) in der IOAG implementiert sein, die Interrupts ggf. auf Triggersignale nach DE 197 04 728.9 übersetzen.

### SIMD PAEs

Bei der Verwendung von rekonfigurierbaren Technologien zur Verarbeitung von Algorithmen entsteht ein wesentliches Paradoxon: (1) es sind, um eine möglichst hohe Rechenleistung zu erhalten, komplexe ALUs erforderlich, wobei der Aufwand für die Rekonfiguration minimal sein sollte; (2) es sollten die ALUs möglichst einfach und feingranular sein, um eine effiziente Datenverarbeitung auf Bitebene zu ermöglichen; (3) es sollte die Rekonfiguration und Datenverwaltung derart intelligent und schnell erfolgen, dass sie effizient und einfach zu programmieren ist.

Bisherige Technologien verwenden entweder a) sehr kleine ALUs mit wenig Rekonfigurationsunterstützung (FPGAs) und sind auf Bitebene effizient oder b) große ALUs (Cameleon) mit wenig Rekonfigurationsunterstützung, oder c) eine Mischung aus großen ALUs und kleinen ALUs mit Rekonfigurationsunterstützung und Datenverwaltung (VPUs).
Da die VPU-Technologie die leistungsfähigste Technik darstellt, soll auf ihr aufbauend ein optimiertes Verfahren geschaffen werden. Es soll ausdrücklich darauf hingewiesen werden, daß dieses Verfahren ebenfalls für die anderen Architekturen eingesetzt werden kann.

Der Flächenaufwand zur effizienten Steuerung von Rekonfigurationen ist mit einer Menge von ca. 10.000 bis 40.000 Gattern pro PAE vergleichsweise hoch. Unterhalb dieser Gattermenge lassen sich in der Regel nur einfache Ablaufsteuerungen realsieren, die die Programmierbarkeit von VPUs erheblich einschränken und eine Verwendung als General Purpose Prozessor erschweren. Sofern auf eine besonders schnelle Rekonfiguration abgezielt wird, müssen zusätzliche Speicher vorgesehen werden, wodurch die erforderliche Gattermenge nochmals erheblich ansteigt.

Um ein ordentliches Verhältnis zwischen Rekonfigurationsaufwand und Rechenleistung zu erhalten, ist somit der Einsatz von großen ALUs (viel Funktionalität und/oder große Bitbreite) zwingend erforderlich. Werden die ALUs jedoch zu groß, sinkt die nutzbare parallele Rechenleistung pro Chip. Bei zu kleinen ALUs (z. B. 4-bit) ist der Aufwand zur Konfiguration aufwendiger Funktionen (z.B. 32-bit Multiplikation) zu hoch. Insbesondere der Verdrahtungsaufwand wächst in kommerziell nicht mehr sinnvolle Bereiche.

Es ist wünschenswert, das Verhältnis von Rekonfigurationsaufwand und Rechenleistung zu verbessern.

### SIMD Rechenwerke

Um ein ideales Verhältnis zwischen der Verarbeitung von kleinen Bitbreiten, Verdrahtungsaufwand und der Konfiguration aufwendiger Funktionen zu erhalten, wird nun der Einsatz von SIMD-Rechenwerken innerhalb von ALU-PAEs (also insbesondere der in dieser Erfindung offenbarten PAEs, ebenso wie in PAEs nach DE 196 51 075.9-53 und DE 199 26 538.0) vorgeschlagen. Dabei werden Rechenwerke der Breite m derart zerteilt, dass n einzelne Blöcke der Breite b = m/n entstehen. Durch Konfiguration wird je Rechenwerk vorgegeben, ob ein Rechenwerk unzerteilt arbeiten soll, oder ob das Rechenwerk in einen oder mehrere Blöcke, jeweils gleicher oder unterschiedlicher Breite zerlegt sein soll. Mit anderen Worten kann ein Rechenwerk auch derart zerlegt sein, dass innerhalb eines Rechenwerkes unterschiedliche Wortbreiten zugleich konfiguriert sind (z.B. Breite 32-bit, zerlegt in 1x16-, 1x8- und 2x4-bit). Die Daten werden derart zwischen den PAEs übertragen, dass die zerlegten Datenworte (SIMD-WORD) zu Datenworten der Bitbreite m zusammengefasst werden und als Paket über das Netzwerk übertragen werden.

Das Netzwerk überträgt immer ein komplettes Paket, d.h. alle Datenworte innerhalb eines Paketes, und werden nach dem bekannte Handshake-Verfahren übertragen. Einzelne Datenworte innerhalb des Paketes können dabei auch unbenutzt sein, d.h. keine Information enthalten. Dies kann durch zusätzliche Statusleitungen und/oder Handshakesignalen wie z. B. dem RDY/ACK Protokoll realisiert sein.

### SIMD Bussysteme

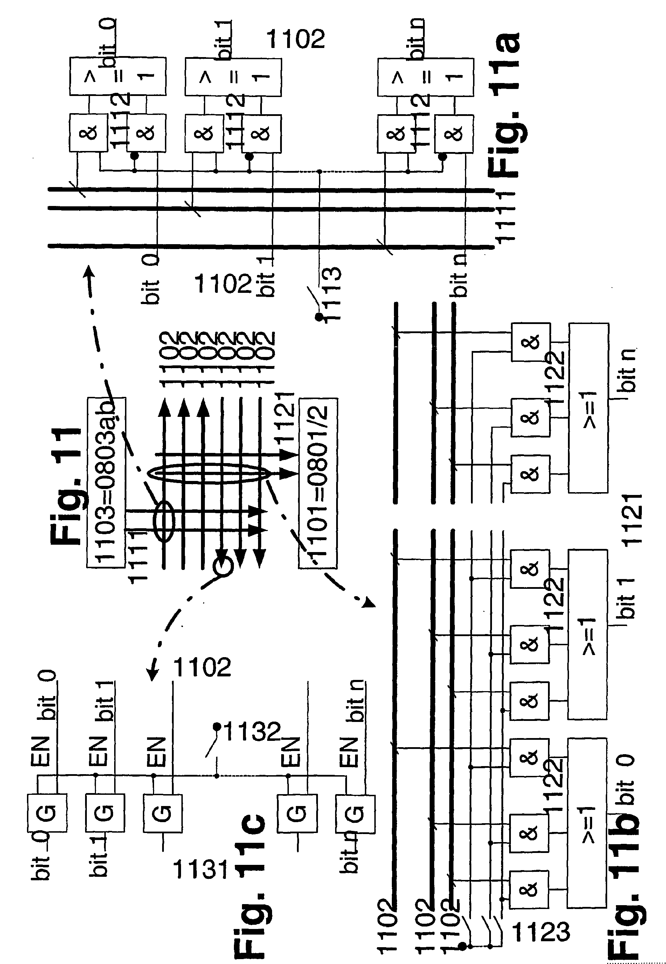

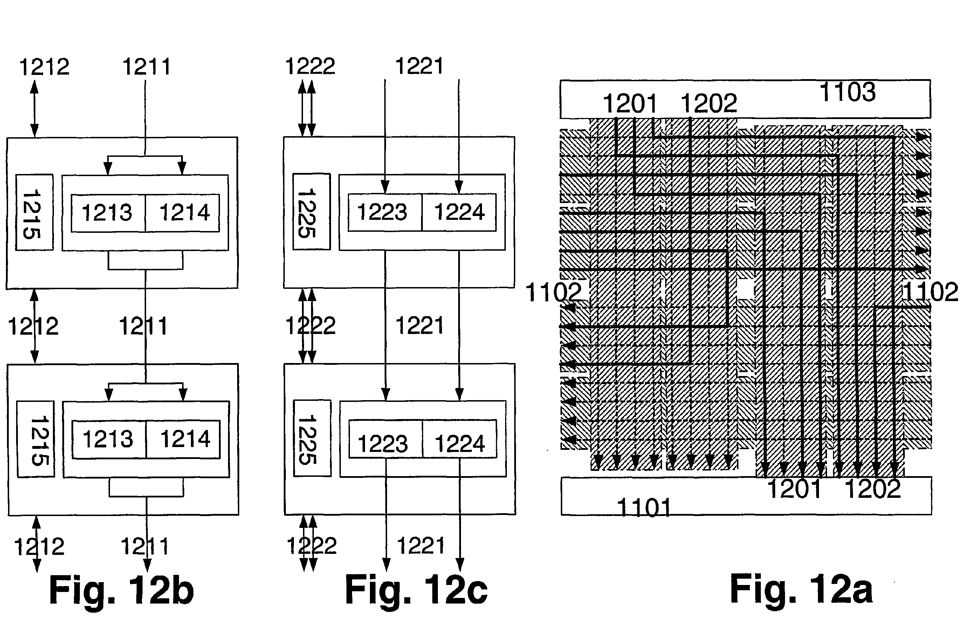

Für einen effizienten Einsatz der von SIMD-Rechenwerken ist eine flexible und effiziente Umsortierung der SIMD-WORD untereinander innerhalb eines Busses oder zwischen unterschiedlichen Bussen erforderlich.
Die Busschalter nach Figur 11 können derart modifiziert werden, dass eine flexible Vernetzung der einzelnen SIMD-WORD möglich ist. Dazu werden die Busse über beispielsweise Multiplexer, Busschalter, Transmissiongates, Pass-Transistoren (nachfolgend unter dem Begriff Multiplexer zusammengefasst) entsprechend den Rechenwerken teilbar ausgelegt, derart dass durch Konfiguration die Teilung bestimmt werden kann. Mit anderen Worten wird beispielsweise nicht ein Multiplexer der Breite m pro Bus verwendet, sondern n einzelne Multiplexer der Breite b = m/n. Es ist nunmehr möglich, die Datenbusse für b bit Breite zu konfigurieren. Durch die Matrixstruktur der Busse (Figur 11) ist die Umsortierung der Daten ebenfalls möglich, wie in Figur 12a dargestellt.

Die Handshakes der Busse werden logisch derart verknüpft, dass ein gemeinsamer Handshake für den neu geordneten Bus aus den Handshakes der ursprünglichen Busse generiert wird. Beispielsweise kann ein RDY für einen neu sortierten Bus aus einer logischen UND-Verknüpfung aller RDYs der Daten für diesen Bus liefernden Busse generiert werden. Ebenso kann beispielsweise das ACK eines Daten liefernden Busses aus einer UND-Verknüpfung der ACKs aller Busse generiert werden, die die Daten weiterverarbeiten. Prinzipiell sind bei der Implementierung geeignete Verknüpfungen dergestalt zu wählen, dass diese den jeweils verwendeten Busprotokollen entsprechen.

In einer ersten Ausführungsvariante finden die Verknüpfungen der Handshakes innerhalb eines jeden Busknotens statt. Dadurch wird es möglich, einem Bussystem der Breite m, bestehend aus n Teilbussen der Breite b, bevorzugt nur ein Handshake-Protokoll zuzuordnen.

In einer weiteren besonders bevorzugten Ausgestaltung werden sämtliche Bussysteme in der Breite b ausgestaltet, die die kleinste realisierbare Ein-/Ausgabe Datenbreite b eines SIMD-Word entspricht. Entsprechend der Breite der PAE Datenpfade (m) besteht nunmehr ein Ein-/Ausgangsbus aus m/b = n Teilbussen der Breite b. Beispielsweise besitzt eine PAE mit 3 32bit Eingangsbussen und 2 32 bit Ausgangsbusse bei einer kleinsten SIMD-Wortbreite von 8 tatsächlich 3x4 8bit Eingangsbusse und 2x4 8bit Ausgangsbusse.
Jeder der Teilbusse weist bevorzugt sämtliche verwendeten Handshake- und Steuersignale auf, beispielsweise RDY/ACK und der Reconfig-Trigger nach DE 197 04 728.9 und ein globales Reset Signal, etc.
Der Ausgang einer PAE versendet bevorzugt dieselben Steuersignalen für sämtliche n Teil-Busse. Eingehende Quittierungssignale aller Teilbusse werden bevorzugt miteinander logisch verknüpft, z. B. durch eine UND-Funktion. Die Bussysteme können jeden Teilbus frei verschalten und unabhängig routen. Die Bussysteme und insbesondere die Busknoten verarbeiten und/oder verknüpfen die Handshake-Signale der einzelnen Busse unabhängig ihres Routings, ihrer Anordnung und Sortierung nicht.
Bei in einer PAE eingehenden Daten werden die Steuersignale sämtlicher n Teilbusse derart miteinander verknüpft, dass ein allgemeingültiges Steuersignal quasi als Bussteuersignal für den Datenpfad generiert wird. Beispielsweise können in einer "dependend" Betriebsart RdyHold-Stufen für jeden einzelnen Datenpfad eingesetzt werden und erst, wenn sämtliche RdyHold-Stufen anstehende Daten signalisieren, werden diese von der PAE übernommen. In einer "independend" Betriebsart werden die Daten jedes Teilbusses einzeln in Eingangsregister der PAE geschrieben und quittiert, wodurch der Teilbus sofort für eine nächste Datenübertragung frei ist. Das Vorhandensein aller erforderlichen Daten von allen Teilbussen in den Eingangsregistern wird innerhalb der PAE durch geeignete logische Verknüpfung der für jeden Teilbus im Eingangsregister gespeicherten RDY-Signale detektiert, woraufhin die PAE mit der Datenverarbeitung beginnt.

Der wesentliche daraus resultierende Vorteil dieses Verfahrens ist, dass die SIMD-Eigenschaft von PAEs keinerlei besonderen Einfluss auf das verwendete Bussystem aufweist. Es werden lediglich mehr Busse (n) einer geringeren Breite (b) benötigt. Die Verschaltung selbst bleibt unberührt. Die PAEs verknüpfen und verwalten die Steuerleitungen lokal. Dadurch entfällt der zusätzliche Hardwareaufwand in den Bussystemen zur Verwaltung und/oder Verknüpfung der Steuerleitungen.

Figur 11 zeigt einen möglichen und besonders bevorzugten Aufbau einer Busstruktur für VPU-Architekturen. Die Ausgabeschaltung einer Funktionszelle z. B. (PAE , FREG/BREG) (1103, entspricht 0803a,b) ist über einen vertikalen Bus mit dem horizontalen Bussystem (1102, entspricht 0105) verbunden. Entsprechend greifen die Eingabeschaltungen der Funktionszellen (1101, entspricht 0801, 0802) über einen vertikalen Bus Informationen von dem horizontalen Bussystem ab. In der Figur wird nunmehr verdeutlicht, wie ein derartiger Abgriff, bzw. eine derartige Aufschaltung erfolgen kann.
Wie in Fig. 11a dargestellt erfolgt das Aufschalten eines Ausgabebusses (1111) von 1103 auf 1102 durch ein "Auftrennen" eines Busses des horizontalen Bussystems 1102 und das Einfügen von horizontalen Schaltern (1112), die durch Switches, Transmission-Gates, Multiplexer oder ähnlichen geeigneten Bauelementen realisiert sein können. Abhängig von dem Wert eines Dekoders und/oder Konfigurationsbits (angedeutet durch das Schaltersymbol 1113), das entsprechend der bekannten Konfigurationsverfahren bevorzugt in einem Konfigurationsregister der PAE angeordnet ist und konfiguriert wird, verbindet der Schalter entweder die beiden Hälften des horizontalen Busses 1102 miteinander oder schaltet den Bus 1111 auf die eine Hälfte von 1102 auf, die andere Hälfte von 1102 ist dann unterbrochen und wird nicht weitergeleitet. Die Schaltung wird bevorzugt für jeden Bus des horizontalen Bussystems verwendet. Figur 11b zeigt die entsprechende Schaltung zum Abgriff von Daten von 1102 und zur Weiterleitung derer an 1101. Über vertikale Schalter (1122), die durch Switches, Transmission-Gates, Multiplexer oder ähnlichen geeigneten Bauelementen realisiert sein können, werden Daten bitweise von den Bussen des horizontalen Bussystems (1102) abgegriffen und auf den vertikalen Eingangsbus (1121) zur Eingabeschaltung 1101 übertragen. Die Ansteuerung der vertikalen Schalter, d.h. ihre Schaltfunktion, erfolgt durch Dekoder und/oder Konfigurationsbits (angedeutet durch die Schaltersymbole 1123), die entsprechend der bekannten Konfigurationsverfahren bevorzugt in Konfigurationsregistern der PAE angeordnet sind und konfiguriert werden.
Fig. 11b und bei entsprechender Modifikation auch Fig. 11a lassen n:1 Daten-übergänge zu, d.h. mehrere Busse können zu einem Bus zusammengefasst werden, d.h. die Daten mehrer Busse werden auf einem Bus zusammengeführt.
Fig. 11c zeigt die Busauftrennfunktion der horizontalen VPU-Bussysteme (1102). Jeder horizontale Bus einzeln und je für sich kann an der Ausgabeseite der PAE-Kante aufgetrennt werden. Eine Auftrennung kann durch Multiplexer oder Schalter erfolgen, wie in Figur 11c angedeutet werden soll. Je nach Konfigurationsbit 1132, das bevorzugt für jeden Bus des Bussystems je einzeln zur Verfügung steht, wird die Datenübertragung auf das danebenliegende Bussystem (1131) freigeschaltet oder unterbunden. Typischerweise wird diese Funktion in den Schaltern nach Figur 11a realisiert, indem die Information des Konfigurationsbits 1132 an die Schalter (1112) des danebenliegenden Bussystems (1131) übertragen wird und entsprechend die Schalter zur Weiterleitung ermächtigt (enabled) oder die Schalter sperrt (disabled).
Figur 12a zeigt ein SIMD-Bussystem entsprechend Figur 11. Dargestellt ist ein vereinfachtes horizontales Bussystem 1102, eine PAE Ausgabeschaltung 1103 und eine PAE Eingabeschaltung 1101. Jede Eingabeschaltung weist beispielhaft 2 Eingabebusse der Breite 32 bit auf (1201, 1202), jede Ausgabeschaltung 2 entsprechende Ausgabebusse (1203, 1204). Jeder der Busse (1201, 1202, 1203, 1204) ist in 4 Teilbusse zu je 8-bit aufgeteilt, die wie dargestellt jeweils unterschiedlich und unabhängig geroutet werden können, einige der Teilbusse werden nicht verwendet (gepunktete Linie). Die flexible Verschaltung wird dadurch erreicht, dass die Schalter nach den Figuren 11a-c für jeden Bus derart getrennt aufgebaut sind, dass je ein Teilbus von einem Schalter mit eigener Konfiguration verwaltet wird. Dadurch ist das Bussystem feingranular verschaltbar.

Figur 12b zeigt eine SIMD-Datenverarbeitung, bei welcher sämtliche Busse (1211) dasselbe Handshake (1212) aufweisen. Die Busse werden innerhalb einer PAE in die Teilbusse getrennt und in den SIMD-ALUs (1213, 1214) getrennt verarbeitet. Die gemeinsamen Handshakes steuern die Ablaufsteuerung (1215) der PAEs an, bzw. werden von dieser generiert.

Figur 12c zeigt eine SIMD-Datenverarbeitung, bei welcher sämtliche Busse vollkommen getrennt sind (1221) getrennte Handshakes (1222) aufweisen. Die Busse in den SIMD-ALUs (1223, 1224) getrennt verarbeitet. Die getrennten Handshakes steuern die Ablaufsteuerung (1225) der PAEs an, bzw. werden von dieser generiert.

### Einsatz von FPGAs als ALU-Core

In PACT13 ist bereits eine Architektur beschrieben, in welcher anstatt einer ALU eine FPGA oder FPGA-ähnliche Struktur in eine PAE integriert wird. Diese Struktur wird innerhalb einer PAE gemäß den FPGA Konfigurationsmethoden nach dem Stand der Technik konfiguriert, d. h. die erweiterten Konfigurationsverfahren nach PACT02, 04, 05, 10, 13, 17 finden auf die FPGA-Struktur keine Anwendung. Dadurch sind Aufwand und Kosten für die Konfigurationssteuerung der verhältnismäßig kleinen FPGA-Zellen gering. Die PAE allerdings, die die FPGA-Zellen enthält, verhält sich gemäß des VPU-Konfigurationsverfahrens nach den o. g. Schriften. Dadurch ist die FPGA-Struktur in der PAE-Struktur gekapselt und verhält sich wie ein PAE-Objekt mit vielen Konfigurationsregistern. Dadurch lassen sich auch beliebige Operationen auf ein Array aus FPGAs abbilden. Gemäß DE 101 35 210.7-53 ist eine Mischung aus ALU-PAEs und FPGA-PAEs innerhalb einer VPU möglich und durchaus sinnvoll.

Es ist anhand des Anwendungsgebietes zu entscheiden, ob ein mehrfacher Satz an Konfigurationsregistern für die FPGA-Zellen sinnvoll ist, da deren Anzahl sehr hoch ist. Gegebenenfalls werden Konfigurationsregister zum schnellen Umkonfigurieren einer FPGA-PAE gemäß DE 196 51 075.9-53 , DE 199 26 538.0 und insbesondere DE 100 28 397.7 Fig. 18 und 19 als Register-File oder FIFO-Struktur innerhalb der PAE realisiert und von dort aus in die FPGA-Zellen geladen.

Es hat sich mittlerweile als besonders vorteilhaft herausgestellt, wenn innerhalb einer ALU-PAE eine FPGA Struktur der ALU zugeordnet wird, indem die FPGA-Struktur vor und/oder nach und/oder parallel zur ALU angeordnet wird. Bevorzugt ist eine Ausführung in welcher die FPGA-Struktur der ALU nachgeschaltet wird.
Der Vorteil liegt darin, dass nur relativ kleine FPGA-Strukturen verwendet werden müssen, da sämtliche arithmetischen Operationen weiterhin in der ALU ablaufen. Dadurch wird eine besonders hohe Kosten/Performance Effizienz erreicht. Um kleine Wortbreiten zu unterstützen (4-bit, 8-bit, etc.), bietet es sich besonders an, die vorab beschriebenen SIMD-ALUs einzusetzen.
Durch die Nachschaltung von FPGA-Strukturen hinter einer ALU lassen sich insbesondere Correlatoren und PNG-Generatoren besonders effizient aufbauen.

Der Einsatz von VPU Architekturen bietet sich mittlerweile insbesondere für den Ersatz von ASICs bei mittleren und niederen Stückzahlen an. Dieses Einsatzgebiet der VPU Bausteine weist die Besonderheit auf, dass die Applikationsfelder sehr klar definiert sind und häufig nur einige wenige Applikationen auf den Bausteinen ausgeführt werden. Besonders diese Einsatzgebiete benötigen häufig feingranulare FPGA-Strukturen zur bitweisen Verarbeitung von Daten.
Durch die Limitierung auf wenige Anwendungen sind hier die möglichen Konfigurationen der FPGAs ebenfalls sehr begrenzt und vorhersagbar.
Es wurde erkannt, dass es beispielsweise insbesondere für diese Einsatzgebiete lohnend ist, die Rekonfiguration der FPGA-Strukturen von der schnellen Rekonfiguration der grobgranularen Strukturen abzusetzen. Mit anderen Worten werden für die FPGAs langsamere (z. B. herkömmliche serielle) Rekonfigurationsverfahren verwendet, die äußerst kosten- und flächeneffizient realisierbar sind.
Dazu kann (1) ein vollkommen separates Konfigurationssystem bestehend aus Bussystem und Konfigurationskontrollern aufgebaut werden, wie dies von FPGAs nach dem Stand der Technik bekannt ist. (2) können die Konfigurationsressourcen der VPU Technologie benutzt werden, ohne dass jedoch Ressource für besondere beschleunigende Maßnahmen zur Verfügung gestellt werden. Beispielsweise kann der Zugriff auf den FILMO nach DE 196 54 593.5-53 , DE 198 07 872.2 für FPGA-Strukturen ausgeschlossen sein, ebenso wie das Vorhandensein von Konfigurationsregisterstacks nach DE 100 28 397.7 oder wie nachfolgend beschrieben. Ebenfalls kann die Unterstützung der schnellen Wave-Rekonfiguration nach DE 199 26 538.0 , DE 100 28 397.7 entfallen. Es ist etwa möglich, einem FPGA-Array eine PAE zur Umkonfigurierung zuzuordnen. Hier muss lediglich die PAE dazu konfiguriert werden, die FPGA-Struktur zu laden, was wie vorstehend beschreiben, durch PAE-gesteuerten, eigenständigen Zugriff auf Daten von außen geschehen kann.
Insbesondere bietet es sich aus Kostengründen an anstatt der mehrfach rekonfigurierbaren Architekturen ressourcensparende "einmal konfigurierbare" Architekturen einzusetzen. Die VPU-Bausteine werden dann einmal vor ihrer Auslieferung an den Kunden oder beim Kunden bzw. durch den Kunden personalisiert, d. h. die FPGA-Strukturen werden auf ihre durchzuführende Funktion konfiguriert. Die Funktion der FPGA-Strukturen ist sodann im weiteren unabänderlich, während sämtliche verbleibenden Funktionen, wie die der ALUs und deren Vernetzung, weiterhin vollständig laufzeitrekonfigurierbar entsprechend der VPU-Technologie ist
Als "einmal konfigurierbare" Technologien bieten sich besonders die bekannten ROM, EPROM, EEPROM, FLASH basierenden Verfahren an. Es soll insbesondere erwähnt sein, dass sich die bekannten Fuse und Antifuse-Verfahren (z.B. Atmel, Actel, Quicklogic) besonders zur Realisierung derartiger "einmal programmierbarer" FPGA-Strukturen eignen.
Auf den prinzipiellen Aufbau derartiger Strukturen soll hier nicht weiter eingegangen werden, da dieser durch den einschlägigen Stand der Technik, insbesondere den Patenten der o. g. Firmen, hinreichend bekannt ist.

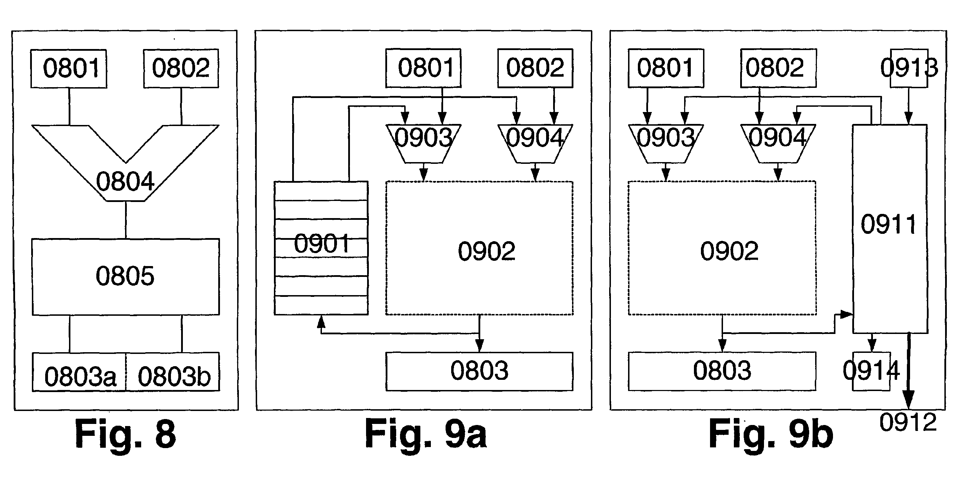

Figur 8 zeigt beispielhaft eine PAE. Dargestellt ist der Datenpfad der PAE. Die Verbindung zu dem Bussystem 0105 wird durch die bevorzugt Register enthaltende Eingabebaugruppe 0801 und 0802 und die ebenfalls bevorzugt Register enthaltende Ausgabebaugruppe 0803 realisiert. Der ALU (0804) nachgeschaltet ist eine Funktionseinheit aus feingranularen FPGA-Zellen (0805), die über einen Busstruktur miteinander verbunden sind. Der Ausgang von 0804 wird auf diese Busstruktur aufgeschaltet, die Busstruktur wiederum ist mit 0803 verschaltet. Optional und bevorzugt kann mittels eines Multiplexers ein Bypass des Ausgangs von 0804 direkt auf die Ausgabebaugruppe 0803 an 0805 vorbei geschaltet werden.
In die FPGA-Zellen können mehrere Stufen Logik konfiguriert werden, insbesondere sämtliche oder einige der folgenden Funktionen: Multiplexer, AND, OR, XOR, NOT Funktionen, Halb- addierer, Vergleicher, Schieberegister, Register, Boolsche Lookup-Tabellen.
Die FPGA-Zellen (0805) können durch den Konfigurationsbus (0404) der PAE konfiguriert werden. Bevorzugt werden besondere konfigurationsbeschleunigende Baugruppen, wie z. B. Konfigurationsstacks (0406) nicht zur Konfiguration von FPGA-Zellen benutzt. Diese Baugruppen werden ggf. für derartige Konfigurationsdaten passiv geschaltet oder die Konfigurationsdaten werden an ihnen vorbeigeleitet.
In einer besonderen Ausgestaltung ist eine permanente einmalige Konfiguration der FPGA-Zellen unter Verwendung von ROM-Elementen wie z. B. EPROM, EEPROM, Flash-ROM oder Fuse-/Antifuse-Technologien vorgesehen.

Figur 9 zeigt mögliche erfindungsgemäße Ausgestaltungen von PAEs. Es soll ausdrücklich darauf hingewiesen werden, dass die Ausgestaltung in Figur 9a und die in Figur 9b auch gleichzeitig zusammen in einer PAE implementiert sein können.

Figur 9a zeigt den Anschluss eines Registerfiles (0901) (z.B. R0..Rn an einen Kern (0902), der beispielsweise aus einer ALU wie 0804 oder einer ALU (0804) und FPGA-Zellen (0805) bestehen kann.
Die Ergebnisdaten des Kerns werden zu den Registern 0901 geführt und dort je nach Operation eingespeichert. Die Register 0901 werden über Muliplexer (0903, 0904) je nach durchzuführenden Operation auf die Eingänge der ALU geführt.

Figur 9b zeigt eine ähnliche Struktur, bei welcher eine zusätzliche Aufschalteinheit (0911) für einen dedizierten globalen Bus (0912) (z.B. IO-Channel) implementiert ist. Die Ergebnisdaten des Kerns werden zu der Aufschalteeinheit 0911 geführt und dort je nach Operation auf den globalen dedizierten Bus (0912) übertragen. Für die PAE bestimmte Daten von 0912 werden über Muliplexer (0903, 0904) je nach durchzuführenden Operation auf die Eingänge der ALU geführt.
Optional kann die Aufschalteeinheit 0911 über die Busaufschalteeinheiten 0913 und 0914 Daten direkt von dem Bussystem 0105 lesen oder auf dieses übertragen.

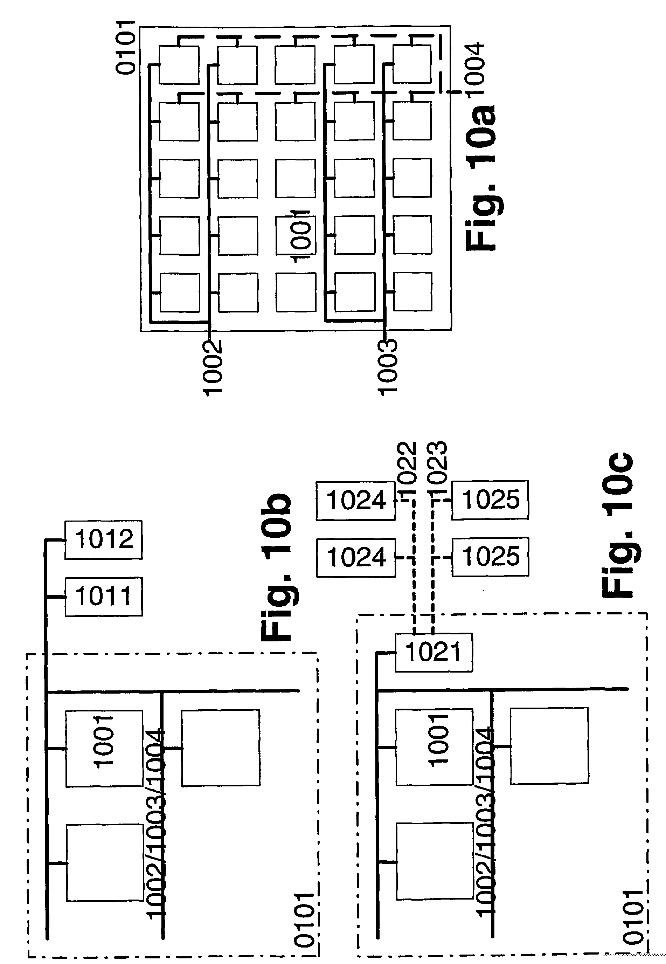

Figur 10a zeigt die Verwendung von dedizierten globalen Bussystemen innerhalb eines Arrays aus PAEs (1001). Insoweit entspricht die Darstellung des PAs aus Figur 1 (0101). Jeweils eine Menge von PAEs (1001) ist an die globalen dedizierten Bussysteme 1002, 1003, 1004 angeschlossen und kann Daten auf diese Senden oder von diesen Empfangen. Die Datenübertragung kann sowohl zwischen den PAEs, als auch zwischen PAEs und IO stattfinden. Es ist dargestellt, dass PAEs auch an mehrere globalen dedizierten Bussysteme gleichzeitig angeschlossen sein können, während andere PAEs möglicherweise keinen Anschluss aufweisen.
Figur 10b zeigt beispielsweise den Anschluss eines globalen dedizierten Busses (beispielsweise 1002 oder 1003 oder 1004), der innerhalb des Arrays aus
PAEs (0101) mit einigen PAEs (1001) verbunden ist, an außerhalb des 0101 liegende, ggf. auch bausteinexterne Baugruppen. Die Baugruppen können beispielsweise Peripherie (1011) und/oder Speicher (1012) sein. Zum Anschluss der außerhalb liegenden Baugruppen (1011, 1012) kann ggf. eine Anpassung der Signale (z. B. Spannungen: CMOS, TTL, LVDS, etc.) stattfinden.

Figur 10c zeigt ein Beispiel für den Anschluß eines globalen dedizierten Busses (beispielsweise 1002 oder 1003 oder 1004), der innerhalb des Arrays aus PAEs (0101) mit einigen PAEs (1001) verbunden ist, an eine Interface-Baugruppe (1021). Die Interface-Baugruppe übersetzt die Protokolle und/oder Signale des internen dedizierten Busses auf einen oder mehrere außerhalb liegenden Busse. In dem aufgezeigten Beispiel sind 2 außerhalb liegende Busse (1022, 1023) implementiert. Die Bussysteme sind bevorzugt unterschiedlicher Ausgestaltung, beispielsweise kann 1022 ein Speicherbussystem für Speicher (1024) wie SDR-RAMs, DDR-RAMs, RAMBUS o.ä. sein, während 1023 ein Peripheriebussystem für Peripherie- und/oder IO-Geräte (1025) darstellt, wie z. B. PCI oder ein serielles Protokoll wie USB, FireWire, Ethernet.

### Konfiguration komplexer Rechenwerke

Komplexe Rechenwerke (z. B. Floating-Point Rechenwerke) können durch die geeignete Verschaltung und Gruppierung von konfigurierbaren Zellen (PAEs) möglicherweise auch unterschiedlicher Bauart (RAM-PAEs, ALU-PAEs, Bussen) realisiert werden.
Beispielsweise kann ein Floating-Point Rechenwerk durch eine geeignete Verschaltung von mehreren ALU-PAEs, die die arithmetischen Operationen über Exponent und Mantisse durchführen erreicht werden. Bevorzugt werden den ALU-PAEs die in der VPU des Anmelders (XPP-Technologie) integrierten Forward- und Backward-Register (FREG/BREG) zugeordnet, um die notwendigen Normierungen durch Schiebeoperationen der in den FREG/BREG angeordneten Barrel-Shifter durchzuführen. Damit lassen sich Floating-Point Rechenwerke bei Bedarf auf Basis der Integer-ALUs mit hoher Flächeneffizienz aufbauen.
Ein Vorteil des Verfahrens liegt darin, dass keine Silizium-Fläche für fest integrierte Floating-Point Rechenwerke verwendet werden muss. Da Floating-Point-Operationen relativ zu den Integer-Operationen nur selten gebraucht wird, steigt damit das Kosten/Nutzen-Verhältnis erheblich an.
Compiler, die Hochsprachenprogramme auf eine VPU übersetzen, können durch Makroexpansion und/oder mittels Laufzeit-Bibliotheken entsprechende vorgefertigte komplexe Strukturen in den Maschinencode (z. B. NML) übernehmen.
Für Maschinencode-Programme (z. B. NML) bieten sich besonders Library-Calls auf Bibliotheken an, die die entsprechenden komplexen Funktionen vorgefertigt enthalten.

### Statemachines über RAM-PAEs

Mit einem Array aus PAEs verbundene RAM-PAEs können zum Aufbau von Sequenzern eingesetzt werden. Das Grundprinzip beruht darauf, dass Ausgangsdaten eines Speichers auf dessen Adresseingang zurückgekoppelt wird. Die Rückkopplung erfolgt bevorzugt über ein taktgesteuertes Registers. Dadurch entsteht ein Sequenzer, dessen jeweils nachfolgender Zyklus durch den jeweils aktuellen Zyklus vorgegeben ist.
Teile der Ausgangsdaten (CONTROL-Signale) können nunmehr an andere Baugruppen und/oder Funktionszellen (PAEs) und/oder auch an externe Geräte übertragen werden, um dort bestimmte Vorgänge auszulösen. Besonders bevorzugt sind zwei Übertragungsarten, die zumeist gemeinsam angewendet werden:
a) die Übertragung über einen Datenbus, bevorzugt inbesondere als SIMD-Bus gemäß der vorstehenden Erläuterung ausgestaltet, wodurch eine teilweise Übertragung der Ausgangsdaten besonders effizient realisierbar ist.
b) die Übertragung über einen Triggerbus, dessen bevorzugte Ausgestaltung und Arbeitsweise in PACT08 beschrieben ist. Über Triggerbusse können Zustände und Bedingungen zur Ablaufsteuerung von Baugruppen und/oder Funktionszellen (PAEs) und/oder auch externen Geräten besonders effizient übertragen werden.

Der Aufbau der Eingangsadressen, bzw. Ausgangsdaten ist wie folgt(Darstellung: höherwertige Bits ... niederwertig Bits):
Adresse:

| |
|---|
| Adresse des aktuellen Zyklus |

Daten:

| | |
|---|---|
| Adresse des nächsten Zyklus | CONTROL-Signale |

Es bleibt zu erwähnen, dass die Eingangsdaten typischerweise nicht verwendet werden, d.h. auf den Speicher wird nur lesend, nicht schreibend zugegriffen. Der Inhalt des Speichers (z.B. RAM-PAE) wird durch eine Konfigurationseinheit vorkonfiguriert. Deshalb kann der Speicher insbesondere auch als nichtflüchtiger einmal programmierbarer Speicher mit ROM, EPROM, EEPROM, Flash Zellen oder basierend auf Fuse oder Antifuse Technologien aufgebaut sein. Der Speicher wird dann, wie vorab bereits beschrieben, vor der Auslieferung an den Kunden oder beim Kunden personalisiert, d.h. programmiert.

Ein Speicherzugriff durch andere PAEs ist grundsätzlich möglich, um den Sequenzer z.B. im Betrieb zu modifizieren, soll aber aufgrund des begrenzten Einsatzbereichs hier nicht weiter detailliert ausgeführt werden.

Der beschriebene Sequenzer kann durch folgende Erweiterungen in seiner Abfolge von Zyklen auf Ereignisse reagieren und insbesondere bedingte Sprünge durchführen:
Ein Teil, bevorzugt der niederwertige, der Eingangsadressen zu dem Speicher wird als Eingang für weitere Zustandssignale verwendet. Diese Zustandssignale können durch die vorstehenden Übertragungsarten übertragen werden und somit Daten oder Trigger sein. Bei der Selektion des nachfolgenden Zyklus wird nunmehr eine mögliche Menge von Zyklen durch die Datenrückkopplung auf die bevorzugt hohen Adressbits bestimmt und der bestimmte Zyklus wird dann aus der möglichen Menge durch die Zustandssignale auf den niederen Adressbits selektiert.

Daraus resultiert folgender Aufbau der Eingangsadressen, bzw. Ausgangsdaten wie folgt (Darstellung: höherwertige Bits ... niederwertig Bits):
Adresse:

| | |
|---|---|
| Adresse des aktuel-len Zyklus | Zustandssignale |

Daten:

| | |
|---|---|
| Adresse des nächsten Zyklus | CONTROL-Signale |

Somit ist ein vollwertiger Sequenzer definiert, der den Grundprinzipien der Mealy-Moore Sequenzern entspricht.

Die Zustandssignale und/oder Control-Signale können nunmehr ggf. zu Bündeln zusammengefasst derart gruppiert werden, dass je eine Gruppe bestimmten Sendern/Empfängern zur Verfügung steht, z.B. eine Gruppe für 0101-interne PAEs und eine Gruppe für externe Baugruppen und eine Gruppe zur Konfigurationseinheit.

Mit anderen Worten werden sämtliche Sprünge durch die Angabe der "Adresse des nächsten Zyklus" realisiert. Bedingungen werden durch die Zustandssignale realisiert.

Das dabei auftretende Problem ist, wie sog. don't cares, also bestimmte Zustandssignale, deren Wert zu einem Zyklus bedeutungslos ist, behandelt werden. Die bevorzugte Variante liegt darin, für sämtliche möglichen Werte dieselben Daten festzulegen.

### Beispiel:

Innerhalb einer folgendermaßen aufgebauten Adresse

| | |
|---|---|
| Adresse des aktuel- len Zyklus | Zustandssignale |

soll die "Adresse des aktuellen Zyklus" (Cycle) beispielhaft gleich 0x60, entsprechend CYCLE60 sein. Es sind 4 Zustandssignale (ZS0..3) vorgesehen, von denen innerhalb des beispielhafte Zyklus' 2 (ZS3 und ZS1) je nach Wert zu anderen Sprungzielen führen, also beispielhaft nach CYCLE10, CYCLE7, CYCLE89, CYCLE56.

Die Tabelle sieht nunmehr wie folgt aus:

| Adresse | | | | | Daten |
|---|---|---|---|---|---|
| Cycle | ZS3 | ZS2 | ZS1 | ZS0 | |
| CYCLE60 | 0 | ? | 0 | ? | CYCLE10 |
| CYCLE60 | 0 | ? | 1 | ? | CYCLE7 |
| CYCLE60 | 1 | ? | 0 | ? | CYCLE89 |
| CYCLE60 | 1 | ? | 1 | ? | CYCLE56 |

Die don't cares (ZS2, ZS0) werden nunmehr so belegt, dass der Wert ihres Signals keinen Einfluss auf die Zuordnung der Adresse zu den Daten hat:

| Adresse | | | | | Daten |
|---|---|---|---|---|---|
| Cycle | ZS3 | ZS2 | ZS1 | ZS0 | |
| CYCLE60 | 0 | 0 | 0 | 0 | CYCLE10 |
| CYCLE60 | 0 | 0 | 0 | 1 | CYCLE10 |
| CYCLE60 | 0 | 0 | 1 | 0 | CYCLE7 |
| CYCLE60 | 0 | 0 | 1 | 1 | CYCLE7 |
| CYCLE60 | 1 | 0 | 0 | 0 | CYCLE89 |
| CYCLE60 | 1 | 0 | 0 | 1 | CYCLE89 |
| CYCLE60 | 1 | 0 | 1 | 0 | CYCLE56 |
| CYCLE60 | 1 | 0 | 1 | 1 | CYCLE56 |
| CYCLE60 | 0 | 1 | 0 | 0 | CYCLE10 |
| CYCLE60 | 0 | 1 | 0 | 1 | CYCLE10 |
| CYCLE60 | 0 | 1 | 1 | 0 | CYCLE7 |
| CYCLE60 | 0 | 1 | 1 | 1 | CYCLE7 |
| CYCLE60 | 1 | 1 | 0 | 0 | CYCLE89 |
| CYCLE60 | 1 | 1 | 0 | 1 | CYCLE89 |
| CYCLE60 | 1 | 1 | 1 | 0 | CYCLE56 |
| CYCLE60 | 1 | 1 | 1 | 1 | CYCLE56 |

Jeder Zielzyklus ist nunmehr 4-fach gespeichert, entsprechend allen binären Kombinationsmöglichkeiten der don't care.

Eine weitere optionale, aber sinnvolle und daher bevorzugte Ausgestaltungsmöglichkeit des Sequenzers sieht einen zusätzlichen Teilbereich der Ausgangsdaten für eine Selektor- und/oder Vergleichsmaske für die Zustandssignale vor. Bei der Verwendung als Selektor können z.B. durch die Ansteuerung von Multiplexern durch die Selektormaske eine Teilmenge von Zustandssignalen aus mehreren möglichen ausgewählt werden. Die zusätzliche optionale Vergleichsmaske kann als Vergleichsoperator für einen Vergleicher dienen, der entsprechend ein Statusbit (gleich/nicht gleich) aus einer Menge von Statusbits generiert. Ebenfalls kann die Vergleichsmaske zur Deselektion von don't care Signalen dienen, z.B. über eine normale Maskenoperation durch Verundung nach dem Stand der Technik (siehe PACT10).

Der Aufbau der Ausgabedaten ist dann wie folgt:
Daten:

| | | |
|---|---|---|
| Adresse des nächsten Zyklus | CONTROL-Signale | Selektor/Vergleichsmaske |

Ein bevorzugter Sequenzer kann beispielsweise wie folgt aufgebaut sein: Der Adressbus einer RAM-PAE, die als Sequenzerspeicher verwendet wird, wird in mehrere Teiladressen beliebiger und insbesondere möglicherweise auch unterschiedlicher Breite aufgeteilt, beispielsweise Bit 0..3 für eine erste Teiladresse (NEXT_CYCLE), Bit 4..7 für eine zweite Teiladresse (SEQ_IN) und Bit 8..12 für eine dritte Teiladresse (CTRL_IN).
Der Datenausgang einer RAM-PAE wird in mehrere Teildaten beliebiger und insbesondere möglicherweise auch unterschiedlicher Breite aufgeteilt, beispielsweise Bit 0..3 für die ersten Teildaten (CYLCE), Bit 4..7 für die zweiten Teildaten (SEQ_OUT) und Bit 8..12 für die dritten Teildaten (CTRL_OUT).

Zur Aufteilung der Adressen und/oder Daten kann insbesondere das beschriebene SIMD PAE- und Bus-Konzept verwendet werden. Weiterhin kann die Auftrennung innerhalb der RAM-PAE erfolgen.

Der RAM-PAE können datenverarbeitende PAEs zugeordnet werden, wie z. B. ALU-PAEs.

Die Festlegung des nächsten Zyklusses innerhalb eines Sequenzerdurchlaufs erfolgt durch die Rückkopplung von NEXT_CYCLE auf CYCLE.

In einer erweiterten Ausführungsvariante können zusätzliche datenverarbeitende PAEs zur Berechnung von CYCLE in Abhängigkeit von NEXT_CYCLE innerhalb der Rückkopplung vorgesehen sein. Diese PAEs können auf beliebige, insbesondere auch zusätzliche Signale, Daten oder Zustände anderer PAEs und/oder externer/ peripherer Baugruppen reagieren. Desweiteren können diese PAEs zusätzliche Signale oder Daten erzeugen.

Zur Realisierung eines erweiterten Sequenzers können weitere PAEs angekoppelt sein, die in einer möglichen Ausgestaltung auch in ihrer Funktion und/oder Vernetzung vom Sequenzer beeinflußt werden können. Dazu kann der Sequenzer Daten in die Konfigurationsregister der entsprechenden PAEs übertragen. Ein Zugriff auf die Konfigurationsregister kann beispielsweise durch die in DE 197 04 728.9 beschriebene Architektur erfolgen (vgl. DE 197 04 728.9, Fig. 4). Die angekoppelten PAEs verarbeiten vorwiegend Daten beliebiger Art und besitzen Anschluß an weitere PAEs, insbesondere datenverarbeitende (ALU-PAEs) und/oder Speicher-PAEs (RAM-PAEs) und/oder periphere Anschlüsse (IO-PAEs). Diese PAEs können durch die durch SEQ_OUT dargestellten Control-Signale angesteuert werden und können bedarfsweise durch die an SEQ_IN geleiteten Zustandssignale Ablaufspeicher des Sequenzers ansteuern.

Weitere möglicherweise auch unabhängige PAEs oder Einheiten, insbesondere auch externe/periphere Einheiten und/oder übergeordnete CTs können durch den Sequenzerspeicher entsprechend SEQ_IN/OUT angesteuert werden (CTRL_OUT) oder diesen ansteuern (CTRL_IN).

Zur korrekten taktgesteuerten Ablaufsteuerung des Sequenzers sind in Rückkopplungspfade bevorzugt taktsynchronisierte Register eingebaut.

Die RAM-PAE kann durch eine übergeordnete Konfigurationseinheit konfiguriert werden, insbesondere können die Sequenzerfunktionen durch den Inhalt der RAM-PAE konfiguriert und festgelegt werden.

Es wurde als für sich vorteilhaft erkannt, dass mit einem Speicher ein einfacher Sequenzer ohne großen zusätzlichen Hardwareaufwand realisiert wird. Dies ist besonders leicht dadurch möglich, dass zunächst der Inhalt einer Speicherzelle dahingehend ausgewertet wird, an welcher Stelle als nächstes ein Lesezugriff erfolgen soll. Wenn dort wieder angegeben ist, wo als nächstes ein Zugriff erfolgt, ist ein automatenartiges Durchlaufen realisierbar. Zugleich wird aber gemäß der hier als vorteilhaft erkannten Ausgestaltung nicht einfach eine weitere Adresse für den nächsten Zugriff ermittelt, sondern parallel dazu angegeben, was dabei zu tun ist; mit anderen Worten werden an der Speicheradresse auch Daten oder Befehle mitabgespeichert. Dies kann dadurch geschehen, dass ein Teil der an einer Stelle gespeicherten Information die Adresse für den nächsten Zugriff angibt und ein weitere Teil einen Befehl oder Daten darstellt. Dies ist ohne weiteres möglich, wenn die Breite der gespeicherten Daten aufgeteilt wird in einen Adressanteil und einen Daten/Befehlsanteil. Weiter ist es sogar möglich, nur einen Teil der im Speicher adressierbaren Speicherplätze zu kodieren, etwa bei 12 bit Breite nur 8 bit zu verwenden. Dann können weitere Bits hinzugefügt werden, hier vier, etwa durch Auswertung von Flags, Triggern, Zuständen, Überläufen etc. Dies hat den Vorteil, dass an die Speicherstellen, die dann exakt angesprochen werden durch Vorgabe der hier 8bitigen ausgelesenen Adresse und der hier 4bit auswertegenerierten Information, unterschiedliche Anweisungen gesetzt werden können. Es sei darauf hingewiesen, dass entweder alle Trigger und die erforderliche Reaktion hierauf von vorneherein festlegbar sind oder dass alternativ auch zumindest Teile der Reaktionen auf einzelne oder alle Trigger während der Ausführung einer Konfiguration variiert und/oder festgelegt werden können. Hierzu kann eine Rückkopplung auf eine Triggermaskierung usw. vorgesehen sein.

Dies erlaubt es, abhängig von den ausgewerteten Informationen bedingte Sprünge etc. zu generieren. Sind dabei von einer Reihe per se auswertbarer Informationen nur wenige interessant, werden also aktuell im obigen Beispiel etwa nur 2 statt vier Bits benötigt, so kann die jeweils in einer entsprechenden Speicherstelle angegebene Information an jenen Speicherstellen auch vorhanden sein, die sich nur um nicht interessierende Bits in ihrer Adresse unterscheiden.

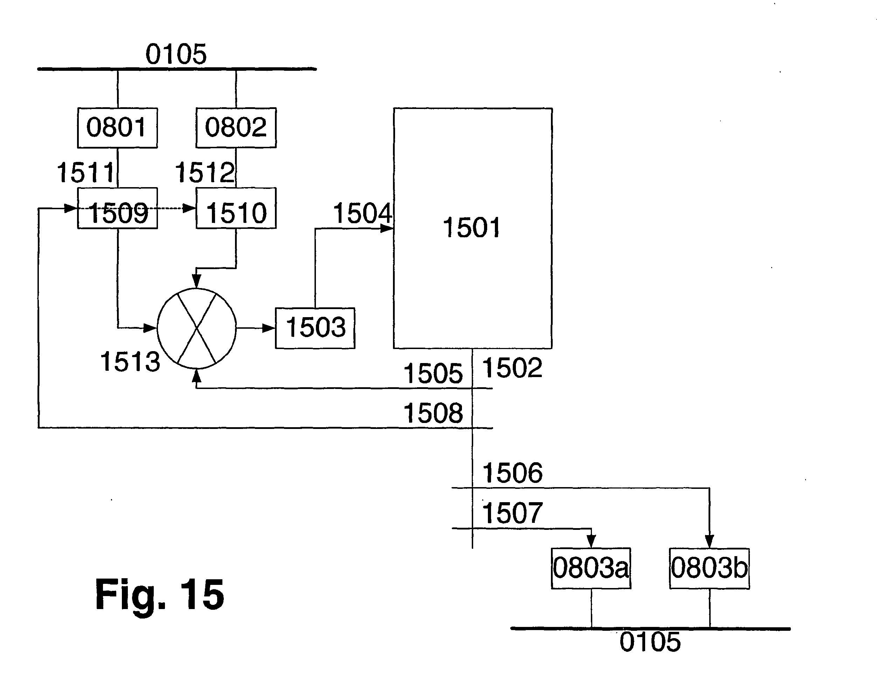

Figur 15 zeigt ein Ausgestaltungsbeispiel eines erfindungsgemäßen Sequenzers basierend auf einer RAM-PAE. Ein Teil (1505) des Datenausgangs (1502) eines Speichers (1501) ist über ein taktgesteuertes Register (1503) auf den Adresseingang (1504) des Speichers zurückgekoppelt. Der Adresseingang (1504) entspricht somit CYCLE und 1505 einem Teil, bevorzugt dem Höherwertigen, von NEXT_CYCLE.

Optional kann ein Teil (1508) des Datenausgangs (1502) an eine Selektor-Maskeneinheit (1509, 1510) geführt werden, in welcher die vom Bussystem 0105 als Daten und/oder Trigger eingehenden SEQ_IN (1511) bzw. CTRL_IN (1512) Daten verarbeitet werden.

CTRL_IN und SEQ_IN und/oder deren in der Selektor-Maskeneinheit verarbeitete Werte werden zu 1505 dazugemischt (1513), bevorzugt derart, dass 1505 den höherwertigen Adressteil und CTRL_IN/SEQ_IN den niederwertigen bilden.

Der verbleibende Teil des Datenausgangs (1502) kann in einen SEQ_OUT- (1506) und CTRL_OUT (1507) Teil aufgetrennt werden und über die Ausgabebaugruppen 0803a,b als Daten und/oder Trigger auf das Bussystem 0105 geführt.

Verschiedene Konfigurationsregistermodelle zur Festlegung der Konfiguration von jeweils lokal zugeordneten PAEs sind bekannt. In PACT02 ist ein sequentiell abarbeitbares Modell beschrieben, in PACT04 ist ein FIFO-Modell beschrieben, das ebenfalls sequentiell abgearbeitet und überlappend konfiguriert werden kann, in PACT08 ist ein selektives Modell beschrieben, bei welchem abhängig von der Datenverarbeitung bestimmte Konfigurationsregister und damit die in ihnen gespeicherte Funktion und/oder Vernetzung ausgewählt werden. In DE 100 28 397.7 ist weiterhin ein FIFO-Modell beschrieben, das sich besonders für die Vorabkonfiguration und überlappende Konfiguration eignet.

Als besonders leistungsfähig und Kosten/Performance effizient wurde eine Mischung aus diesen Modellen erkannt.

Das FIFO-Modell nach DE 100 28 397.7 eignet sich besonders, um eine beliebige Anzahl von Konfigurationsregistern von PAEs vorzuladen, da die Funktion des verwendeten FIFOs eine variable Konfigurationslänge effizient ermöglicht. Hierzu wird jeder PAE ein lokaler FIFO-Speicher zugeordnet, der die Konfigurationen seiner zugeordneten PAE verwaltet und puffert.

Durch eine Erweiterung, wie z. B. die nachfolgend beschriebene, des FIFO-Modelles kann der Anfang und das Ende einer bestimmten Konfiguration und der dazugehörenden einzelnen Konfigurationseinträge festgestellt werden. Nunmehr können mehrere Konfigurationen zugleich in dem FIFO-Modell abgelegt werden.

Als besonders geeignet zur Kennzeichnung des Anfangs oder Endes von Konfigurationen haben sich die zwei nachfolgend beschriebenen Verfahren herausgestellt:
a) Kennzeichnung durch zusätzliche Bits (CycleBits) in jeder Speicherzelle:
Jedem Konfigurationseintrag werden zusätzliche Bits zugeordnet, die den Beginn und/oder das Ende einer Konfiguration kennzeichnen. Beispielsweise kann ein Eintrag im FIFO wie folgt aussehen:

| Bit 0..15 | Bit 16 | Bit 17 |
|---|---|---|
| Konfigurationswort | 0=don't | 0=don't |
| | care | care |
| | 1=Beginn | 1=Ende |

Da bevorzugt nach dem nachfolgend beschriebenen Verfahren direkt auf den Beginn von Konfigurationen gezeigt werden kann, wird bevorzugt auf die Anzeige des Beginns verzichtet:

| Bit 0..15 | Bit 16 |
|---|---|
| Konfigurationswort | 0=don't |
| | care |
| | 1=Ende |

b) Besonders effizient kann die Kennzeichnung durch besondere Konfigurationsworte sein, die als Befehle dekodiert werden:
Bestimmte Bitkombinationen innerhalb des Konfigurationswortes werden als Befehle dekodiert und erkannt:
Beispielsweise könnten die folgenden Befehle implementiert sein:
BEGIN : Beginn einer Konfiguration
END : Ende einer Konfiguration

Dieses Verfahren ist erheblich flexibler und leistungsfähiger als die Kennzeichnung durch CycleBits. Zur einfachen Unterscheidung von Befehlen und Konfigurationen kann ähnlich den CycleBits ein Bit vorgesehen sein, das durch seinen Wert die Semantik der Konfigurationswortes bestimmt, beispielsweise wie folgt:

| Bit 0..15 | Bit 16 |
|---|---|
| Daten | 0=Interpretation der Daten als Konfigurationswort |
| | 1=Interpretation der Daten als Be-fehl |

Eine Konfiguration wird je Aufruf von ihrem Anfang bis zu ihrem Ende in die Konfigurationsregister einer PAE übertragen.

Durch eine optionale zusätzliche Übersetzungs- und Zuweisungsvorrichtung können Zustände (z.B. Zustände der eigenen ALU und/oder ein oder mehrere Trigger (vgl. DE 197 04 728.9) beispielsweise anderer PAEs) auf bestimmte Konfigurationen innerhalb des FIFO-Modells übersetzt werden. Beispielsweise kann ein eintreffender Rekonfigurationstrigger auf eine bestimmte Konfiguration innerhalb des FIFO-Modells zeigen, die durch das Auftreten des Rekonfigurationstrigger dann konfiguriert wird.

Als Übersetzungs- und Zuweisungsvorrichtung können beispielsweise algebraische Berechnungen und/oder logische Verknüpfungen und/oder bevorzugt Übersetzungsspeicher (Lookup-Tabellen) zum Einsatz kommen.

Wenn verschiedene Konfigurationen in einer oder für eine oder eine Reihe von PAEs abgelegt werden, so bietet es sich an, die Adressen, an denen die jeweilige Information abgelegt ist, auf einfache Weise dadurch zu verwalten, dass die Längen der jeweiligen abgespeicherten Konfigurationen aufaddiert werden. Dies ist dann wichtig, wenn die Konfigurationen unterschiedliche Längen haben, etwa weil bei bestimmten Konfigurationen Busse und/oder Register, wie Vorwärts- und Rückwärtsregister konfiguriert werden müssen und bei andere nur neue Funktionen der ALU einer PAE einzustellen sind, oder weil gleichzeitig Konfigurationsinformation für zellexterne Einheiten mitverwaltet wird.

Es ist damit also möglich, einen Quasi-Fifocharakter zu implementieren. Dann sollten Mittel zum Aufaddieren, insbesondere sukzessivem Aufaddieren von Konfigurationslängen, sowie dafür, bei Überflüssigwerden bestimmter Konfigurationen, etwa aufgrund von Abarbeitung etc., die betreffenden Bereiche freizugeben. Das Aufaddieren ist etwa problemfrei mit Addiererketten möglich.

Diese Anordnung kann verwendet werden, um in einer Zelle Konfigurationen zu verwalten bzw. wiederum einen Sequenzer zu implementieren. Wiederum kann so auf die Konfigurationen reagiert werden, dass sich Sprünge etc realisieren lassen. Es sei darauf hingewiesen, dass oben bereits erwähnt wurde, dass zur Realisierung von Sequenzern zwischen ALU-PAEs und/oder anderen datenverarbeitenden Zellen mit jeweils gegebenenfalls erweiterter Funktionalität und Speicherzellen Steuer(Command-)Leitungen vorgesehen werden können. Es sei erwähnt, dass derartige Leitungen mit zugeordneten Steuerungen auch innerhalb einer einzelnen und für sich autark sequenzerfähigen PAE vorgesehen sein können.

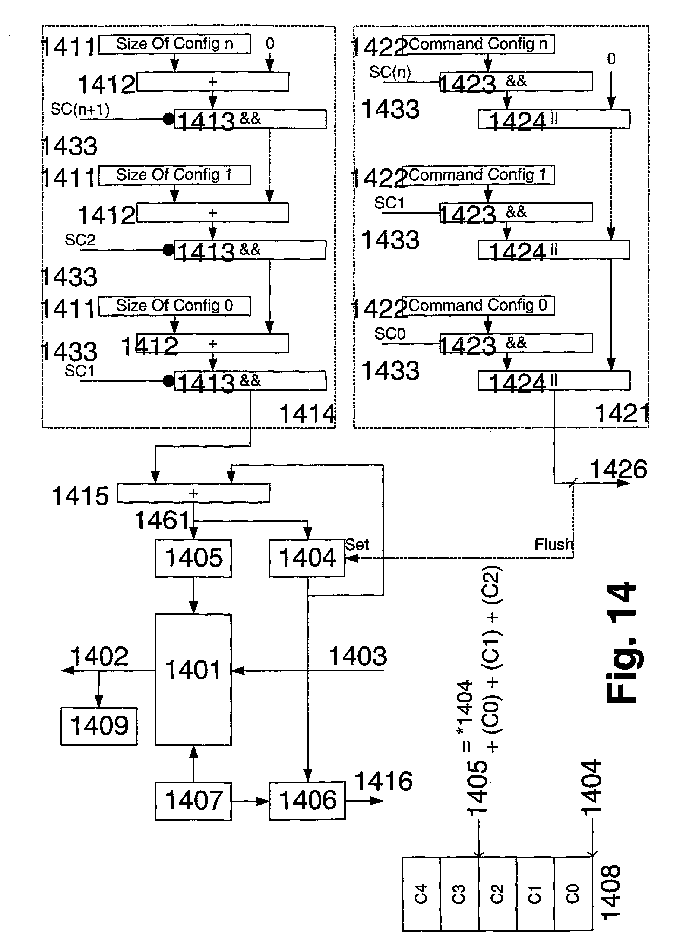

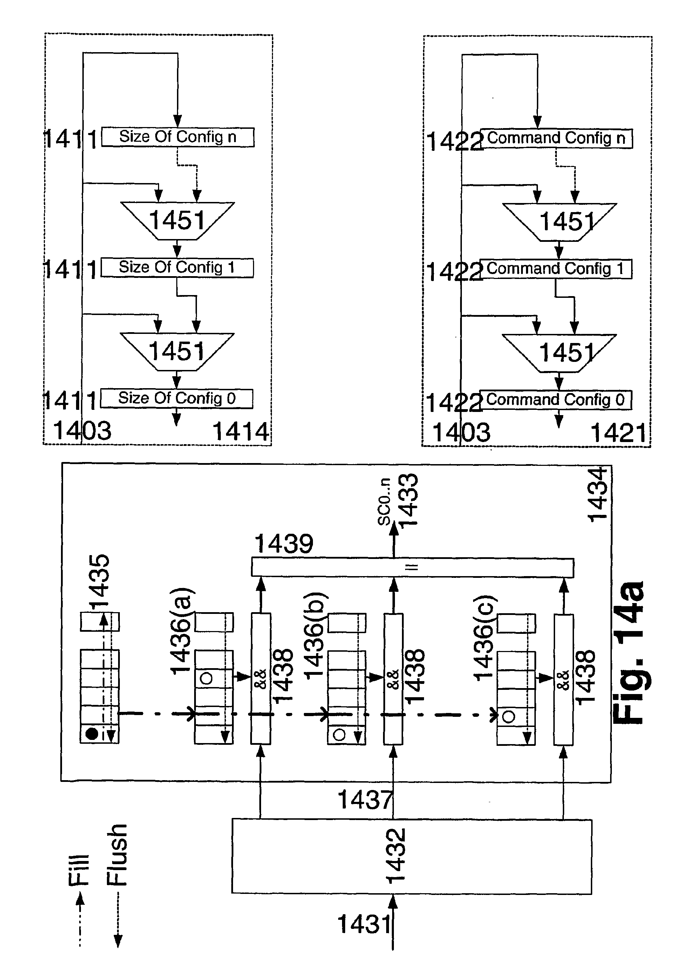

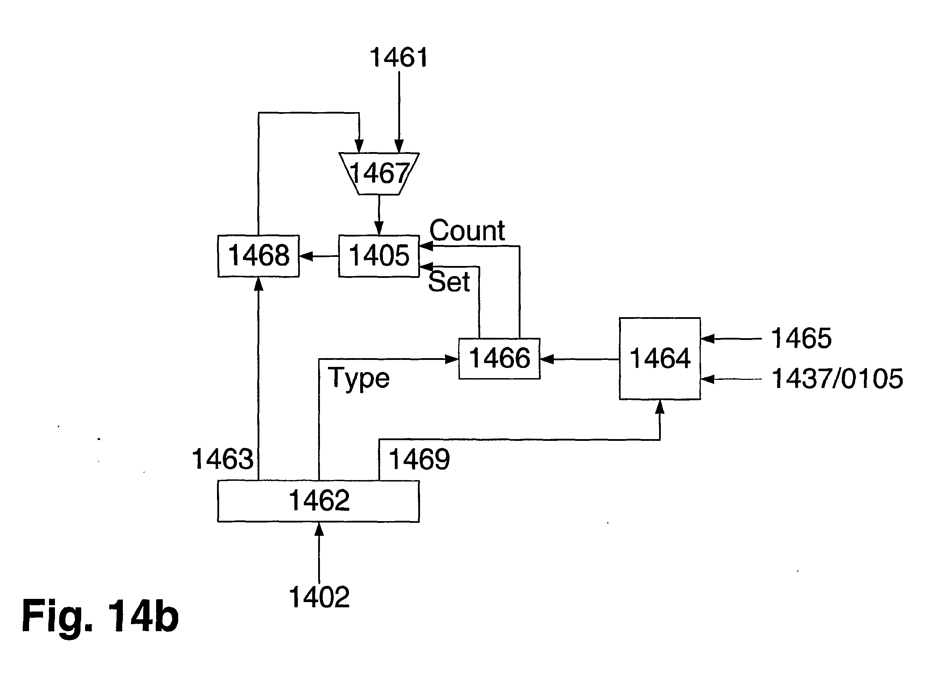

Eine besonders bevorzugte Variante ist in Figur 14 dargestellt und arbeitet wie folgt:
Eine Kette von Addierern wird derart miteinander verbunden, dass das Ergebnis (SUMME) eines vorherigen Addierers (p) an einen nachfolgenden Addierer (p+1) als Operand weitergeleitet wird. Die Weiterleitung kann derart unterbrochen werden, dass anstatt des Ergebnisses eine 0 (Null) weitergeleitet wird.
Als zweiter Operand ist jedem Addierer jeweils ein eigenes Registers zugeordnet, dessen Wert jeweils zur SUMME der vorherigen Stufen addiert wird.
Jede der Stufen repräsentiert eine Konfiguration im Konfigurations-FIFO; in dem Register der jeweiligen Stufe ist die relative Startposition einer Konfiguration gespeichert. Die absolute Startposition lässt sich nun berechnen, indem sämtliche relative Startpositionen der sich unterhalb im FIFO befindenden Konfigurationen aufaddiert werden. Dies geschieht durch die Addiererketten, wie auch aus der Fig. Ersichtlich ist.

Mit anderen Worten ist die relative Position als unterste Konfiguration im FIFO diejenige, deren Eintrag am Nächsten zum Ergebnisausgang der Addiererkette gespeichert ist. Sodann folgen alle weiteren relativen Positionen gemäß ihrer Anordnung im FIFO.

Die Kette wird an der Stelle durch einschleusen einer Null anstelle der SUMME unterbrochen, bei welcher die relative Position der selektierten Konfiguration erreicht ist.

Das Ergebnis ist nunmehr der Offset zwischen dem Lesepointer des FIFOs, der auf die unterste Konfiguration zeigt, und der Startposition der selektierten Konfiguration.

Somit ist die Sprungadresse zur selektierten Konfiguration einfach durch Addition von Zeiger und Offset berechenbar.

Die Auswahl der selektierten Konfiguration kann durch unterschiedliche Verfahren in der Übersetzungs- und Zuweisungseinrichtung erfolgen.
(a) Die eingehenden Trigger können priorisiert und dekodiert werden.
(b) Die eingehenden Trigger werden über eine Lookup-Tabelle übersetzt und danach möglicherweise priorisiert und dekodiert.
(c) Es der Menge aller Trigger werden einige ausgewählt, z.B. über Multiplexer, die sodann entsprechend (a,b) weiterverarbeitet werden.

Es soll besonders darauf hingewiesen werden, dass ein Trigger auch ein Vektor (TRIG-V) sein kann, wie in PACT08 beschrieben. Der Vektor selbst kann zur weiteren Dekodierung verwendet werden, d.h. der Vektor selektiert die Konfiguration. Dies ist insbesondere dann wichtig, wenn eine Wave-Rekonfiguration nach PACT08, PACT13, PACT17 durchgeführt werden soll, bei welcher bevorzugt ein mit den Daten übertragener Trigger-Vektor die nächste Konfiguration selektiert.

Nach oder während der Konfiguration können Konfigurationen aus dem FIFO entfernt werden. Bevorzugt wird dabei die Referenzierung innerhalb der Übersetzungs- und Zuweisungsvorrichtung entsprechend angepasst.

Weiterhin kann das FIFO-Modell um das Sequenzer-Verfahren nach DE 196 54 846.2-53 (bzw, wie bei den anderen Schutzrechten, ohne separat erwähnt zu sein, deren parallele) oder bevorzugt das vorstehend beschriebene erweitert werden. Dazu werden beispielsweise Sprünge (GOTO), sowie zustandsabhängige und bedingte Sprünge (WAIT-GOTO, IF-GOTO) eingeführt. Sprünge können durch besondere CycleBits repräsentiert werden, oder bevorzugt als Befehle implementiert sein.

Weiterhin kann ein Synchronisationsanzeigeverfahren verwendet werden, das anzeigt, wann eine bestimmte Konfiguration bzw. ein bestimmter Zyklus des Sequenzers beendet ist. Mit anderen Worten kann jeder Zyklus aus mehreren Konfigurationseinträgen bestehen. Zur Kennzeichnung kann beispielsweise nach DE 196 54 846.2-53 ein run/stop-Flag verwendet werden, wobei 'run' zusammengehörende Konfigurationseinträge eines Zyklus kennzeichnet und 'stop' den ersten Eintrag eines nachfolgenden Zyklus; alternativ ist ist die Verwendung der vorstehend beschriebenen CycleBits möglich, die zwar eine etwas andere Semantik aufweisen, sich aber ansonst gleich verhalten.

Alternativ oder zusätzlich zu diesen Verfahren können auch die ebenfalls aus den früheren Anmeldungen des Anmelders bekannten Befehle WAIT und BEGIN oder bevorzugt die vorstehend beschriebenen Befehle BEGIN und END verwendet werden.
Durch 'stop' oder WAIT oder END wird das Ende eines Zyklus gekennzeichnet, d. h. eine Konfiguration ist komplett, kann ausgeführt und abgearbeitet werden. Nach Beendigung der Datenverarbeitung dieser Konfiguration wird der nächste Zyklus ausgeführt.

Die Beendigung kann entsprechend sequentieller Prozessoren durch einen Takt (Instruktionssequenzing) definiert sein, und/oder entsprechend des Datenverarbeitungsprinzips der PACT-Prozessoren (P 44 16 881.0-53 , DE 196 54 846.2-53 , Konfigurationssequenzing) durch ein Statussignal (z. B. einen Trigger) definiert sein.

Mit anderen Worten wird z.B. kann durch das Eintreffen eines Triggers 'stop' übersprungen werden und die nachfolgenden Konfigurationen konfiguriert werden. Alternativ oder zusätzlich kann der Befehl WAIT eingesetzt werden, der auf das Eintreffen eines Triggers.

Optional kann ein FIFO nicht nur die lokal zugeordnete PAE ansteuern, sondern auch weitere, insbesondere umliegende oder zur selben Konfiguration gehörende PAEs.

Optional kann der FIFO auch als eine dedizierte Einheit nach DE 196 54 846.2-53 ausgestaltet sein.

Ausführungsbeispiele:
A) Ein eintreffender Trigger wird über eine Übersetzungs- und Zuweisungsvorrichtung auf eine im FIFO liegende Konfiguration (K1) übersetzt. Die Konfiguration (K1) wird daraufhin in die PAE konfiguriert. Als Ende-Kennung kann beispielsweise ein WAIT-Befehl, ein END-Befehl oder das run/stop-Flag dienen. Ein nachfolgend eintreffender Trigger wird über eine Übersetzungs- und Zuweisungsvorrichtung auf eine andere im FIFO liegende Konfiguration (K2) übersetzt. Diese Konfiguration (K2) wird daraufhin in die PAE konfiguriert. K1 und/oder K2 können nach erfolgter Konfiguration in die PAE aus dem FIFO gelöscht werden.
B) Ein eintreffender Trigger wird über eine Übersetzungs- und Zuweisungsvorrichtung auf eine im FIFO liegende Konfiguration (K3) übersetzt, die aus mehreren Zyklen (Cy1, Cy2, Cy3a, Cy3b, Cy4) besteht. Der erste Zyklus (Cy1) wird daraufhin in die PAE konfiguriert und ausgeführt. Als Ende-Kennung kann beispielsweise ein WAIT-Befehl oder das run/stop-Flag dienen.
   Ein nachfolgend eintreffender Trigger, der das Ausführungsende des Zyklus anzeigt, bewirkt die Konfiguration und das Ausführen von Cy2. Cy2 endet mit zwei WAIT-GOTO-Befehlen (WAIT-GOTO (Trg1, Cy3a) ; WAIT-GOTO (Trg2, Cy3b)) (vgl. PACT04), dies bewirkt, dass auf zwei unterschiedliche Trigger, die das Ausführungsende des Zyklus anzeigen, Trg1 und Trg2 reagiert wird. Trifft Trg1 ein, wird im nächsten Zyklus Cy3a konfiguriert und ausgeführt bzw. bei Trg2 entsprechend Cy3b.

Cy3a und Cy3b enden mit einem WAIT-GOTO (Trg, Cy4). Bei eintreffen eines Trigger, der das Ausführungsende des Zyklus anzeigt, wird nach Cy4 gesprungen und die Konfiguration entsprechend konfiguriert und ausgeführt.

Cy4 endet mit einem WAIT-GOTO (Trg, Cy1), wodurch bei eintreffen des Trigger, der das Ausführungsende des Zyklus anzeigt, der erneute sequentielle Durchlauf einer Schleife beginnen kann. Insoweit kann durch den Sprung auf Cy1 ein Ringspeicher nach DE 196 54 846.2-53 zum Ausführen von Schleifen gebildet werden, wobei solch ein Ringspeicher vorteilhaft, aber nicht zwingend ist. Durch Eintreffen eines Triggers (Trg-x) kann die Schleife terminiert werden. Existiert ein Eintrag für Trg-x in der Übersetzungs- und Zuweisungsvorrichtung kann die Schleife jederzeit abgebrochen und die durch Trg-x in der Übersetzungs- und Zuweisungsvorrichtung referenzierte Konfiguration (KX) ausgeführt werden.
Existiert kein Eintrag, kann durch das explizite Verwenden von WAIT-GOTO (Trg-x, KX) Befehlen, z.B. zusammen mit WAIT-GOTO (Trg, Cy1) in Cy4 die Schleife zu bestimmte vorgegebenen Ausführungszeitpunkten terminiert werden.

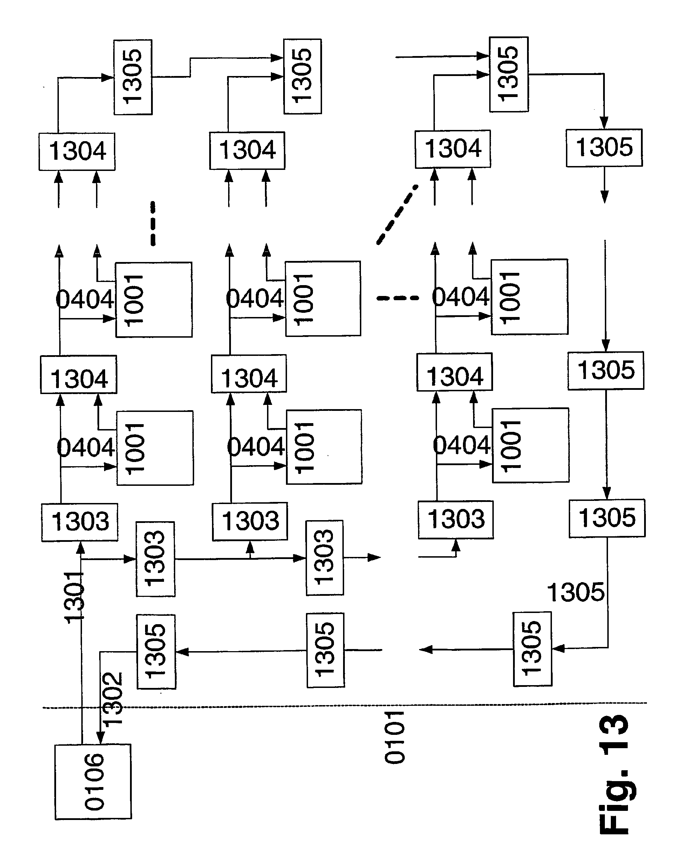

Figur 13 zeigt beispielhaft einen Aufbau eines Konfigurationsbusses zur Konfiguration von PAEs (1001) durch eine Konfigurationseinheit (0106). Die Konfigurationseinheit sendet Konfigurationsdaten über ein Bussystem 1301 und ggf. über mehrere Registerstufen (1303, 1304) zur Verbesserung des Frequenzverhaltens und über den Konfigurationsdatenbus (0404) an die PAEs 1001. Jede PAE dekodiert die angelegten Adressen und reagiert, sofern sie selektiert wurde, auf die Datenübertragung des Busses. PAEs können ihrerseits Daten über 0404 über die Register-Multiplexer-Stufen 1304 auf das Bussystem aufschalten und die Konfigurationseinheit oder optional andere PAEs senden. Dies geschieht jeweils durch Übertragung der Adresse der Empfangseinheit.
Die Rückübertragung der Daten an die Konfigurationseinheit erfolgt bevorzugt ebenfalls durch Registerstufen hindurch (1305), bis zum Dateneingangsbus der Konfigurationseinheit (1302).
Die Funktionsweise des Konfigurationsbusses ist ebenfalls in DE 101 42 904.5 und DE 100 28 397.7 beschrieben.

Figur 14 zeigt den Aufbau eines FIFO-Modells zur Steuerung der Rekonfiguration; hierbei wird darauf hingewiesen, dass sich insbesondere durch die Befähigung zur Durchführung von Sprüngen das hier präsentierte FIFO-Modell von reinen FIFOs aus dem Stand der Technik unterscheiden kann. Es wurde dennoch die per se im Stand der Technik belegte Bezeichnung verwendet, weil diese vom typischen, sprungfreien Betrieb ein besonders anschauliches Bild assoziieren lässt. Diese Einheit ist optional zu allen, insbesondere den in dieser Anmeldungen beschriebenen, rekonfigurierbaren Zellen (PAEs) und in Figur 4 als Einheit 0406 dargestellt.
Ein Speicher 1401 enthält die Konfigurationsdaten für die zugeordnete PAE. 1402 ist der Konfigurationsdatenausgang zu den Konfigurationsregistern der PAE (0405). Über 1403, d.h. den Bus 0404, schreibt die Konfigurationseinheit Konfigurationen in den Speicher, die jeweilige Adresse wird durch den Schreibzeiger (1407) generiert, der pro Schreibvorgang um den Wert 1 verändert wird, je nach Arbeitsweise des FIFOs inkrementell oder dekrementell. Ein Startadress-Pointer (1404) zeigt auf den ersten Konfigurationsdateneintrag im Speicher, während ein weiterer Pointer (1405) auf den zu lesenden, bzw. an die PAE zu übertragenden, Konfigurationsdateneintrag zeigt. 1405 wird mit jeder Datenübertragung aus dem Speicher an die PAE um den Wert 1 verändert, je nach Arbeitsweise des FIFOs inkrementell oder dekrementell. Die Datenübertragung findet so lange statt, bis das Ende der Konfiguration von einer Konfigurationsendeerkennungseinheit (1409) erkannt wird, beispielsweise anhand eines CycleBits oder Befehls (WAIT, END).
Der realisierte FIFO entspricht nicht den normalen FIFOs nach dem Stand der Technik, die nur den Pointer 1405 aufweisen. Die Modifikation ermöglicht das Lesen beliebiger Konfigurationsdaten aus dem Speicher, während durch den Pointer 1404 verhindert wird, dass evtl. noch benötigte Konfigurationsdaten überschrieben werden. Dies geschieht durch das Erzeugen eines Full-Flags durch den Vergleich (1406) des Startadress-Pointers 1404 mit dem Schreibzeiger (1407). Wenn der Speicher voll ist, werden Schreibversuche der Konfigurationseinheit zurückgewiesen, dies kann bevorzugt durch das aus PACT10 bekannte ACK/REJ-Protokoll erfolgen. Der Vergleicher 1406 gibt dazu an seinem Ausgang 1416 ein entsprechendes Reject-Signal an die Konfigurationseinheit aus bzw. gibt kein Ack aus.

Ein beispielhafter Speicherinhalt von 1401 ist mit 1408 gezeigt. Der Speicher enthält 5 Konfigurationen (C0..C4). 1404 zeigt als Startpointer auf die erste Konfiguration C0. In diesem Beispiel zeigt 1405 auf den Beginn von Konfiguration C3. Die Zeigerposition berechnet sich aus dem Wert von 1404 plus der Länge der Konfiguration C0 plus der Länge der Konfiguration C1 plus der Länge der Konfiguration C2.

Eingehende Trigger (1431) werden über eine in Figur 14a dargestellte Übersetzungs- und Zuweisungseinrichtung (1432) auf Selekt-Signale (SC0..n, 1433) übersetzt, die die Adressierung der Konfigurationsdaten im Speicher steuern. Diese Übersetzungs- und Zuweisungseinrichtung kann fest vorgegeben ihre Zuweisung vornehmen, ist aber bevorzugt während der Abarbeitung einer Konfiguration veränderlich, wozu geeignete Rückkopplungen, Signalleitungen etc. vorzusehen sind. Besonders wenn die Übersetzungs- und Zuweisungseinrichtung veränderlich ist, wird es bevorzugt, auch und/oder zusätzlich die der Zuordnung dienende Einheit 1434 während der Datenverarbeitung veränderlich zu gestalten. Auch hierzu sind entsprechende Schaltungsanordnungen vorzusehen, wobei die Veränderung der Zuordnung insbesondere programmgesteuert ablaufen kann. Eine entsprechende, insbesondere programmgesteuerte Veränderung ist auch für die Einheit 1414, d.h. das Adressberechnungsadditionskettenmittel möglich. Die diese Aktualisierung und/oder neue Verhaltensweisen auslösenden Befehle werden bevorzugt in der Speichereinheit 1401 hierfür abgelegt.

Je ein Register (1411), ein Addierer (1412) und ein Nullgenerator (1413), hier beispielhaft realisiert durch eine bitweise Und-Funktion, bilden ein Glied einer Kette (1414) zur Adressberechnung. Je ein Glied verwaltet den Offset einer Konfiguration. Die Aneinanderreihung der Glieder entspricht der Aneinanderreihung der Konfigurationen im Speicher 1401. Mit anderen Worten wird entsprechend des Beispiels 1408 das erste Glied die Länge der Konfiguration C0 aufweisen, also den Offset der auf 1404 addiert werden muss, um auf die Konfiguration C1 zu zeigen. Das zweite Glied weist die Länge der Konfiguration C1 auf, also den Offset der auf den Offset von C0 und auf 1404 addiert werden muss, um auf die Konfiguration C2 zu zeigen. Das dritte Glied weist die Länge der Konfiguration C2 auf, also den Offset der auf den Offset von C0 und auf den Offset von C1 und auf 1404 addiert werden muss, um auf die Konfiguration C3 zu zeigen. Und so weiter.
Es wird anhand der Ausführung ersichtlich, dass eine Kette von Additionen entsteht, deren Gliederanzahl der Position der Konfiguration im Speicher entspricht. Dies wird durch die Kette 1414 wie folgt realisiert:
Über den Addierer wir jeweils der im Register gespeicherte Wert, also die Länge der jeweiligen Konfiguration, zu dem Ergebnis des vorherigen Gliedes dazuaddiert. Der Wert am Eingang der bitweisen Und-Funktion wird mit allen Ergebnisbits des Addierers verundet. Ist der Eingang also gleich 0, liefert die Und-Funktion eine Binäre 0 am Ausgang, um die Addiererkette bei der auszuwählenden Konfiguration abzubrechen, ansonsten den Wert des Addierersausgangs.

Mit anderen Worten ist in die Register (1411) die Größe der Konfigurationen in ihrer Reihenfolge im Speicher (1401) eingetragen. Die Selektsignale sind derart auf die Null-Generatoren geführt, dass die Konfigurations-Größen bis zur Startadresse der durch die Trigger (1431) referenzierten Konfiguration aufaddiert werden.

Somit addiert die Kette alle Längen von Konfigurationen, die vor der zu ladenden Konfiguration im Speicher 1401 liegen. Damit bildet sich ein Offset, der durch Addition (1415) mit der Startadresse (1404) auf die zu ladende Konfiguration zeigt.

Die beschriebene Schaltung ist besonders leistungsfähig, da sie die Berechnung des Offsets und den Sprung innerhalb eines Taktes ermöglicht.

In einer zweiten optionalen Kette (1421) können in Registern (1422) Befehle an die Konfigurationseinheit und/oder die PAE und/oder den Konfigurationsstack gespeichert werden. Eine Nullfunktion (1423), hier ebenfalls beispielhaft entsprechend der Nullfunktion 1413 realisiert, liefert eine Binäre 0 in an ihrem Ausgang, sofern das Selekt-Signal nicht aktiv ist, d.h. die Konfiguration nicht ausgewählt wurde, ansonsten den Registerinhalt (1422), also den Befehl. Über eine Oder-Kette (1424) werden alle Null-Funktionsausgänge miteinander verodert, sodass der Befehl im Register 1422 der aktuell selektierten Konfiguration am Ausgang (1425) der Kette anliegt.

Der Befehl kann nunmehr zum Löschen von Einträgen im Speicher (1401) dienen, d.h einer der möglichen Befehle kann sein, dass bestimmte gespeicherte Konfigurationen gelöscht werden sollen bzw. zum Überschreiben freigegeben. Dies kann z.B. durch den Befehl FLUSH erfolgen, der den Startzeiger (1404) mit dem Lesezeiger 1405 lädt und somit alle vor dieser Adresse liegenden Daten zum Überschreiben freigibt. Dies ist insofern bevorzugt, als die so zu überschreibenden Konfigurationen im fifoartigen Speicher i.d.R. älter sind und daher typisch überschrieben werden können, während die jüngeren Konfigurationen, die oftmals noch benötigt werden, weiter oben im quasi fifoartigen Speicher liegen werden. Ein weiterer bevorzugt implementierter Befehl ist, dass neue Konfigurationen geladen werden sollen; dies ist dann wichtig, wenn das Erfordernis, eine bestimmte neue Konfiguration zu benötigen, mit einer zumindest nicht geringen Wahrscheinlichkeit vorhergesagt werden kann. Dieser Befehl kann an eine zentrale Konfigurationsverwaltungseinheit oder dergl. abgegeben werden; die Direktladung ist gleichfalls möglich, etwa bei Zuordnung von I/O-Möglichkeiten. Auch ist es bevorzugt, wenn sowohl der Konfigurationsanforderungsbefehl als auch der Flush- bzw. Altkonfigurationspreisgabebefehl simultan ausführbar und/oder speicherbar sind. Es sei erwähnt, dass derartige Befehle wie Flush, Laden oder Flush/Laden auch in anderen Speicherbereichen bzw. -einheiten wie etwa 1401 ablegbar sind und dafür nicht zwingend eine dedizierte Einheit wie 1421 vorzusehen ist. Diese Verwendung einer per se bereits vorhandenen Einheit kann hardwaremäßig bevorzugt sein.

Weiterhin kann der Befehl über das Bussystem nach Figur 13 an die Konfigurationseinheit gesendet werden (1426). Beispielsweise kann der Befehl dort den Start einer bestimmten Konfiguration auslösen und/oder das Vorladen einer Konfiguration bewirken.

FLUSH, also das Löschen von Konfigurationen ist einer der wesentlichen bevorzugten Befehle der Einheit. Einerseits ist der Befehl sehr vorteilhaft für die Ausführung, andererseits weist er das Problem auf, dass sich bei dessen Ausführung sämtliche Adressen und Referenzen verändern.
Der FIFO wird "geflushed", indem der StartPointer (1404) auf eine neue Startadresse gesetzt wird. Diese wird wie in Fig. 14 dargestellt bevorzugt auf den Beginn einer gespeicherten Konfiguration gesetzt, wobei der Beginn durch die vorab beschriebene Berechnung mittels des Offsets bestimmt wird. Alternativ oder zusätzlich kann der Zeiger auch auf einen bestimmten anderen Wert z.B. eine an den FLUSH-Befehle gekoppelte Konstante gesetzt werden.
Weiterhin müssen die beiden Ketten 1414 und 1421 "geflushed" werden, damit die Adressberechnung der geänderten Positionen der Konfigurationen im Speicher 1401 entspricht. Dies geschieht jeweils durch (in Figur 14 nicht eingezeichnete) Multiplexer (1451), durch die die Registerdaten derart vorwärts-übertragen werden, dass die nunmehr leeren ("geflushten") Glieder der Kette mit den Daten der nachfolgenden Glieder überschrieben werden, und zwar derart, dass a) die Reihenfolge der Daten in der Kette unverändert bleibt und b) das erste Glied der Kette mit neuen Daten belegt ist und c) alle weiteren Daten in ihrer Reihenfolge linear und ohne Lücke in die Glieder nachfolgend dem Ersten geschrieben sind, vgl. hierzu Fig. 14a Es sei darauf hingewiesen, dass über die Multiplexer 1451 auch Daten betreffend die Konfigurationsgröße von außen an die entsprechenden Stellen (Size of Config 1..n) geschrieben werden können. Es ist dabei abzuschätzen, aber aus Gründen der Zeichnungs-übersichtlichkeit nicht dargestellt, dass jede Stelle einzeln ansprechbar bzw. adressierbar ist. Verwiesen wird insoweit auf die in 1434 dargestellte Einheit 1435, die diese Stelle jeweils bestimmt.
Durch die Verschiebung innerhalb der Ketten sind nunmehr die Selekt-Signale (SC0..n an die neue Lage der Daten in den Ketten anzupassen, damit wieder eine korrekte Zuordnung der Selekt-Signale zu der Offsetberechnung entsteht. Grundsätzlich stehen dazu mehrere Methoden zur Verfügung. Beispielsweise können
a) Signale nach 1432 in 1434 binär kodiert (entsprechend der Funktion eines 74LS148) werden, ein Offset, der der durch Flush entstandenen Verschiebung entspricht, wird subtrahiert und der entstandene Wert wird wieder dekodiert (entsprechend der Funktion eines 74LS139) um die Selekt-Signale 1433 zu generieren;
b) Signale nach 1432 in 1434 mittels einer Lookup-Tabelle auf die Selekt-Signale 1433 übersetzt werden. Dazu ist die Lookup-Tabelle der durch Flush veränderten Positionslage in den Ketten anzupassen.

Ein besonders bevorzugtes Verfahren für die Übersetzung der Signale soll detailliert beschrieben werden und entspricht der in 1434 eingezeichneten Vorrichtung:

Ein erstes Schieberegister (1435) enthält als einen Ein-Bit-Wert die Position des aktuell ersten freien, also unbenutzten, Gliedes in den Ketten 1414, 1421. Dies geschieht folgendermaßen: Nach einem Reset wird das niederwertigste Bit im Schieberegister auf 1 gesetzt (dargestellt durch einen gefüllten Kreis). Das niederwertigste Bit (Bit 0) wird auf das unterste Glied in den Ketten referenziert. Mit jedem Schreibzugriff auf die Ketten, also mit jedem neuen speichern (FILL) einer Konfiguration nach 1401 schiebt das Schieberegister das gesetzte Bit (PBIT) um eine Position in Richtung des höchstwertigen Bits und referenziert damit auf das jeweils nachfolgende Glied in den Ketten. Das höchstwertige Bit referenziert somit auf das höchste Glied in den Ketten, also ist das Schieberegister so breit wie Glieder in den Ketten vorhanden sind. Mit jedem FLUSH schiebt das Schieberegister das Bit (PBIT) um genau so viele Positionen wie Glieder in den Ketten gelöscht wurden in Richtung des niederwertigen Bits.

Die Übersetzungs- und Zuweisungseinrichtung (1432) übersetzt bei der PAE vom Bussystem (0105a, Fig. 4) eingehende Trigger derart, dass je Trigger ein genau ein Signal des ausgehenden Busses (1437) gesetzt ist. Jedem Signal ist ein Schieberegister (1436) derselben Größe wie 1435 zugeordnet. Es sind also eine Vielzahl von Schiebergistern 1436 (vorliegend dargestellt 1436a...1436c) vorhanden, wobei deren Anzahl der Anzahl der maximal zulässigen unterschiedlichen Triggersignale entspricht und deren Länge d.h. Bitbreite der Anzahl der maximal zulässigen Konfigurationen entspricht, also der Anzahl der Kettenglieder entspricht. Beim neuen Speichern einer Konfiguration (FILL) wird der Inhalt von 1435 vor dem Verschieben von PBIT in das Scheiberegister (1436) geschrieben, auf das der, der Konfiguration zugeordnete, Trigger zeigt; dargestellt durch einen Kreis.
Bei einem Auftreten des Triggers auf dem Bus liefert das entsprechende übersetzte Signal (1437) einen 1-Wert, während alle anderen Signale einen 0-Wert liefern. Die Signale 1437 werden jeweils an Nullgeneratoren (1438), aufgebaut aus einer bitweisen Und-Funktion geführt. Alle Nullgeneratoren deren Eingangssignal von 1437 einen 0-Wert aufweist, liefern einen Nullvektor am Ausgang. Der Nullgenerator, dessen Eingangssignal von 1437 einen 1-Wert aufweist, überträgt den Inhalt des Schieberegisters 1436. Die Ausgänge aller Nullgeneratoren werden miteinander verodert (1439), sodass die Selekt-Signale SC0..n (1433) entstehen.

Durch diese Funktion zeigt nunmehr ein eingehender Trigger über die Nullfunktionen auf ein Schieberegister 1436, dessen gesetztes Bit wiederum auf ein Glied in der Ketten (1414, 1421) zeigt.

Bei einem Flush schieben die Schieberegister 1436 gleich dem Schieberegister 1435 den gespeicherten Wert um genau so viele Positionen, wie Glieder in den Ketten gelöscht wurden, in Richtung des niederwertigen Bits. Ist nach dieser Operation der Inhalt eines Schieberegisters gleich Null, da das PBIT über das niederwertigste Bit hinausgeschoben wurde, bedeutet dies, dass die vormals referenzierte Konfiguration gelöscht wurde.

Liefert 1434 für einen eingetroffenen Trigger 1431 den Wert Null am Ausgang 1433, ist eine Konfigurationsaufforderung an die Konfigurationseinheit zu senden, um die fehlende Konfiguration zu laden oder ggf. auch ein Fehlerstatus an die Konfigurationseinheit zu melden.

Die Übersetzung der eingehenden Trigger 1431 nach 1437 in 1432 kann nach mehreren Prinzipien erfolgen, die einzeln oder gemeinsam angewendet werden können, beispielsweise:
1. Dekoder entsprechend der Funktion eines 74LS148
2. Round-Robin Arbiter (vgl. PACT10)
3. Lookup-Tabelle (vgl. PACT10)
Prinzipiell kann die Übersetzung dem in PACT10 beschriebenen Verfahren entsprechen (Round-Robin-Arbiter, LUT1).
Fehlt eine Übersetzungsvorschrift, beispielsweise bei der Anwendung von Lookup-Tabellen, ist eine Konfigurationsaufforderung an die Konfigurationseinheit zu senden, um die fehlende Konfiguration zu laden oder ggf. auch ein Fehlerstatus an die Konfigurationseinheit zu melden.

Eine weitere wesentliche Funktion des Konfigurationsstacks nach Figur 14 ist das Sequenzen über Konfigurationen, was bedingte und unbedingte Sprünge innerhalb des Speichers 1401 bedeutet. Daher ist auch diese Funktion detailliert in Figur 14b beschrieben.

Ein Befehlsdekoder (1462) erkennt bedingte und unbedingte Sprungbefehle in Konfigurationsworten (1402) beim Lesen aus dem Speicher 1401. Einem Sprungbefehl ist als Konstante die relative Sprungadresse zur aktuellen Position zugeordnet, die vom Befehlsdekoder dekodiert und ausgegeben wird (1463). Je nach Sprungrichtung ist der Wert positiv oder negativ.
Weiterhin ist als Konstante ein Vergleichswert (1469) mit den eintreffenden Triggern oder den Statusflags der PAE, beispielsweise die ALU-Flags zero, carry, negative, overflow, etc. oder die Speicher-Flags full, empty, etc., angegeben, in Abhängigkeit dessen bedingte Sprünge durchgeführt werden. Diese wird an eine Vergleichseinheit 1464 übermittelt, die den Wert mit den Flags (1465) und/oder Triggern, die von dem Augang Übersetzungs- und Zuweisungseinrichtung (1437) und/oder direkt von dem Bussystem 0105 stammen, verglichen.

Eine Steuereinheit (1466) generiert in Abhängigkeit des Befehles (bedingter oder unbedingter Sprung = "Type") und des Vergleichsergebnisses die Ansteuerung für den Lesezeiger (1405) wie folgt:
**Unbedingter Sprung:** Generiere "Set", um neue Adresse nach 1405 zu laden;
**Bedingter Sprung, Vergleich erfüllt:** Generiere "Set", um neue Adresse nach 1405 zu laden;
**Bedingter Sprung, Vergleich nicht erfüllt:** Generiere "Count", um Adresse des nachfolgenden Befehles in 1405 zu berechnen.

Das Setzen einer neuen Adresse geschieht durch Aufaddieren (1468) der relativen Sprungadresse (1463) zum aktuellen Wert von 1405. Über einen Multiplexer (1467), der zwischen der aufaddierten neuen Adresse und der von 1415 generierten Startadresse von Konfigurationen (1461) auswählt, wird die neue Adress bei Anliegen von "Set" in den Lesepointer 1405 geschrieben.

Die Arbeitsweise des Konfigurationstacks macht die Verwendung von Konfigurationseinheiten (CT) wie aus PACT10 und PACT17 bekannt weitgehend oboslet, vielmehr ist eine verteilte, parallele CT durch die Konfigurationsstacks entstanden.

Zwei Aufgaben der CT können dabei jedoch bei einer solchen Einheit verbleiben:
1. Das Laden der Konfigurationen aus einem Speicher, der chipintern oder -extern implementiert sein kann, als flüchtiger oder nicht flüchtiger (ROM, EPROM, EEPROM, Flash-ROM, etc) Speicher ausgestaltet sein kann und/oder ein Massenspeicher sein kann. Dies kann nunmehr durch einen einfachen Mikrokontroller erfolgen, der Daten an die PAEs sendet und auf die zurückgemeldete Quittierung reagiert. Beispielsweise kann bevorzugt die Einheit aus PACT05 als Mikrokontroller bzw. der in PACT05 beschriebene Algorithmus eingesetzt werden. Das Laden muss nicht mehr zwingend aktiv geschehen, sondern es ist ausreichend, wenn eine Einheit vorhanden ist, die auf das Konfigurationsanforderungskommando das Hereinholen der neuen Konfigurationsdaten in die jeweilige PAE bzw. deren zugeordneten Konfigurationsspeicher veranlasst. Dies kann, etwa bei den vorstehend diskutierten I/O-PAEs auch jene PAE selbst sein, die derzeit neue Konfigurationsdaten benötigt.
2. Die verbleibende Resteinheit kann verwendet werden, um sicherzustellen, dass Rekonfigurationstrigger (WCT) in einer bestimmten Reihenfolge sortiert durch das Array laufen und/oder vorgeladene Konfigurationen in der erforderlichen Reihenfolge abgearbeitet werden und/oder noch nicht geladene, aber benötigte Konfigurationen wie erforderlich angefordert und/oder geladen werden. Diese Rekonfigurationstriggerpriorisierung kann dazu verwendet werden, zu Priorisieren, auf welchen Rekonfigurationsanforderungstrigger zuerst reagiert werden soll. Dies stellt die konfliktfreie Abarbeitung unterschiedlicher, möglicher Konfigurationen sicher, indem lediglich festgelegt wird, welcher Trigger zunächst durch das Array läuft. Wenn ein solcher Trigger eine bestimmte PAE betrifft, die auf diesen Trigger reagieren soll, wird sie sich dies merken, um dann als nächstes auf diesen Trigger reagieren zu können, sobald sie rekonfiguierbar ist. Es sei erwähnt, dass bevorzugt die einzelne Zelle oder ein Zellgebilde oder dergl. nicht nur jene Trigger vormerkt, die unmittelbar nachfolgend abzuarbeitende Konfigurationen betreffen, sondern dass auch alle weiteren oder wenigstens mehrere, von dieser Zelle künftig abzuarbeitenden Konfigurationen in ihrer Reihenfolge abgelegt werden können und/oder sollen, so dass jede Zelle oder Zellgruppe die Information aus den Triggervektoren erhält und behält, die sie zukünftig und/oder aktuell betrifft. Damit wird die Filmo-Funktion der früheren CT überflüssig und durch den Zeitverlauf der Triggervektoren im wesentlichen ersetzt.
3. Sofern nur ein Rekonfigurationstrigger verwendet wird, sind keine besonderen Maßnahmen erforderlich. Wenn mehrere Rekonfigurationstrigger (WCT) auftreten können, müssen diese ohne zeitliche Überlagerung, also nacheinander in fester Reihenfolge und kreuzungsfrei durch das Array laufen, um Deadlocks zu verhindern.

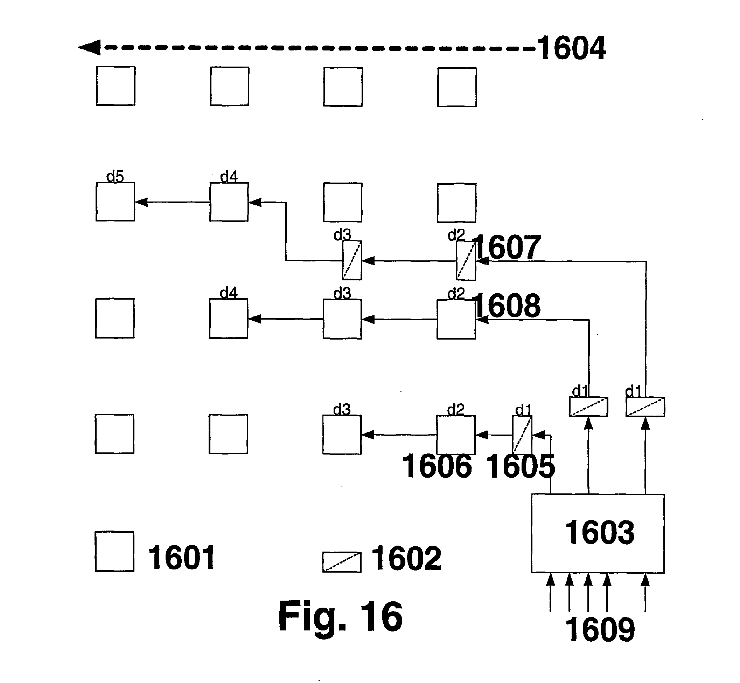

Die kann durch das in Figur 16 dargestellte Verfahren sichergestellt werden, bei welchen durch Routing-Maßnahmen für eine korrekte zeitliche Weiterleitung von WCT zu sorgen. Von einer zentralen Instanz (1603) werden mehrere WCT für verschiedene PAEs (1601) generiert, die jedoch zeitlich aufeinander abgestimmt sein sollen. Die unterschiedlichen Entfernungen der 1601 in der Matrix führen zu unterschiedlichen Laufzeiten, bzw. Latenzzeiten. Dies wird in dem vorliegenden Beispiel durch das geeignete Einsetzen von Pipelinestufen (1602) durch den, dem Compiler zugeordneten Router, erreicht (vgl. PACT13). Die sich dadurch ergebenden Latenzen sind mit d1-d5 angegeben. Es ist ersichtlich, dass in Richtung des WCT-Flusses (1604) in jeder Stufe (Spalte) dieselben Latenzen auftreten. Beispielsweise wäre 1605 nicht notwendig, da die Entfernung von 1606 von 1603 sehr gering ist. Da aber für 1607 und 1608 je ein 1602 aufgrund der durch die längere Distanz entstehenden Laufzeit eingefügt werden muss, wird 1605 zum Abgleich der Laufzeit notwendig.
Die zentrale Instanz 1603 nimmt von den PAEs eingehende Rekonfigurationstrigger (1609) auf und priorisiert diese, um sie dann jeweils einzeln und nacheinander als WCT an das Array aus PAEs zu senden. Mit anderen Worten sendet eine PAE, die einen Rekonfigurationstrigger generiert, diesen nicht direkt an andere PAEs weiter, sondern ausschließlich an die zentrale Instanz 1603.

Die zentrale Instanz speichert eingehende Trigger und priorisiert diese. Dazu kann bevorzugt das aus PACT10 bekannt Verfahren des SCRR-ARB verwendet werden, wie es in Figur 8 PACT10 ausführlich beschrieben ist.

## Patentansprüche

1. Datenverarbeitungsanordnung mit
einem Feld aus datenverarbeitenden Zellen zur Verarbeitung von Daten mit Daten einer ersten Bitbreite,
einem Bussystem (1111) mit zu Zellen hin und von diesen weg führenden Bussen und
einer Busverwaltung,
wobei
die Zellen
zur Laufzeit
in Funktion und Vernetzung
rekonfigurierbar sind,
**dadurch gekennzeichnet, dass**
die Zellen dazu ausgebildet sind, wahlweise
Daten mit der ersten Bitbreite zu verarbeiten
oder
Daten mit einer zweiten Bitbreite,
die geringer ist als die erste,
zu verarbeiten, wobei dann
bei der Verarbeitung von Daten geringerer Bitbreite
mehrere Daten mit geringerer Bitbreite simultan in der Zelle verarbeitbar sind,
wobei
die zu Zellen hin und von diesen weg führenden
Busse (1111) teilbar (1102) sind,
um mehrere Datenströme mit geringerer Bitbreite als der in einer der Zellen maximal bearbeitbaren weiterleiten und/oder empfangen zu können und
wobei
die Busverwaltung zur unabhängigen Weiterleitung der Datenströme ausgebildet ist.

2. Datenverarbeitungsanordnung nach dem vorhergehenden Anspruch, **dadurch gekennzeichnet, dass** die Busverwaltung lokal in den Zellen erfolgt.

3. Datenverarbeitungsanordnung nach einem der vorhergehenden Ansprüche,
**dadurch gekennzeichnet, dass**
zumindest einer der datenverarbeitenden Zellen ein Speicher zur Sequenzerrealisierung zugeordnet ist und die Adressbusse als Teiladressbusse aufteilbar sind.

## Claims

1. Data-processing arrangement having
an array of data-processing cells for processing data containing data with a first bit width,
a bus system (1111) having buses which lead to and from cells, and
bus management,
the cells being able to be reconfigured
at the runtime
in terms of function and networking, **characterized in that**
the cells are designed either
to process data with the first bit width,
or
to process data with a second bit width
which is smaller than the first bit width,
in which case,
when processing data with a smaller bit width,
a plurality of data items with a smaller bit width can be simultaneously processed in the cell,
the buses (1111) which lead to and from cells being able to be divided (1102) in order to be able to forward and/or receive a plurality of data streams with a smaller bit width than the maximum bit width which can be processed in one of the cells, and
the bus management being designed to independently forward the data streams.

2. Data-processing arrangement according to the preceding claim, **characterized in that** the bus management is carried out locally in the cells.

3. Data-processing arrangement according to one of the preceding claims,
**characterized in that**
at least one of the data-processing cells is assigned a memory for the implementation of a sequencer and the address buses can be divided in the form of partial address buses.

## Revendications

1. Dispositif de traitement de données comportant
un champ composé de cellules traitant les données à des fins de traitement de données avec des données d'une première largeur de bit,
un système de bus (1111) avec des bus menant aux cellules et repartant de celles-ci et
une administration de bus,
dans lequel
les cellules peuvent être reconfigurées au fil du temps en ce qui concerne leur fonction et leur interconnexion en réseau,
**caractérisé en ce que**
les cellules sont réalisées de manière à traiter au choix des données avec la première largeur de bit ou des données avec une deuxième largeur de bit, qui est inférieure à la première, dans lequel ensuite, lors du traitement de données d'une largeur de bit inférieure, plusieurs données avec une largeur de bit inférieure peuvent être traitées simultanément dans la cellule,
dans lequel les bus (1111) menant aux cellules et repartant de celles-ci peuvent être divisés (1102), afin de pouvoir transmettre et/ou recevoir plusieurs trains de données pouvant être traités avec une largeur de bit inférieure à celle maximale dans une des cellules et dans lequel l'administration de bus est réalisée à des fins de transmission indépendante des trains de données.

2. Dispositif de traitement de données selon la revendication précédente, **caractérisé en ce que** l'administration de bus est effectuée localement dans les cellules.

3. Dispositif de traitement de données selon une des revendications précédentes, **caractérisé en ce qu'**au moins une des cellules traitant les données est coordonnée à une mémoire pour une réalisation de séquenceur et les bus d'adresse peuvent être fragmentés comme des bus d'adresse partiels.
